# EUROPEAN PATENT APPLICATION

(11) **EP 4 737 087 A1**
(43) Date of publication of application: **06.05.2026**
(21) Application number: 25212540.6
(22) Date of filing: 31.10.2025
(51) Int. Cl.: B29B 11/16, B29C 65/02, B29C 70/22, B29C 70/24, B29C 70/48, D03D 11/02, D03D 25/00, F01D 5/14, F01D 5/28, F01D 9/04

(54) **METHOD OF MANUFACTURING A COMPOSITE COMPONENT FOR A GAS TURBINE ENGINE**

(30) Priority: 01.11.2024 US 202463715148 P
(71) Applicant: General Electric Company, Cincinnati, Ohio 45215 (US)
(72) Inventor: KRAY, Nicholas, West Chester, 45069 (US); XIE, Ming, Evendale, 45215 (US); ARMSTRONG, Douglas Lorrimer, Evendale, 45215 (US); WU, Wei, Evendale, 45241 (US)
(74) Representative: Openshaw & Co.

(57) **Abstract**

A method of manufacturing a composite component (161') having an outer shell (165), an inner hub (167), and a plurality of struts (158) connecting the outer shell (165) and the inner hub (167). An outer shell frame preform (302, 308) is woven to include a plurality of outer shell strut preform portions (318), each including an outer shell strut leading edge preform portion (410) and an outer shell strut trailing edge preform portion (412). An inner hub frame preform (304, 312) is woven to include a plurality of inner hub strut preform portions (336), each including an inner hub strut leading edge preform portion (478) and an inner hub strut trailing edge preform portion (480). In forming a strut preform (306), the outer shell leading edge preform portion (410) and the inner hub leading edge preform portion (478) are connected together, and the outer shell trailing edge preform portion (412) and the inner hub trailing edge preform portion (480) are connected together.

## Description

### CROSS REFERENCE TO RELATED APPLICATIONS

The present application claims the benefit of U.S. Provisional Patent Application No. 63/715,148, filed on November 1, 2024, which is hereby incorporated by reference herein in its entirety.

### TECHNICAL FIELD

The present disclosure relates to composite components and methods of forming the composite components, particularly, aircraft composite components for aircraft engines.

### BACKGROUND

Turbine engines used in aircraft generally include a fan and a turbo-engine section arranged in flow communication with one another. A combustor is arranged in the turbo-engine to generate combustion gases for driving a turbine in the turbo-engine of the turbine engine, and the turbine may be used to drive the fan. A portion of air flowing into the fan flows through the turbo-engine as core air, and another portion of the air flowing into the fan bypasses the core section and flows through the turbine engine as bypass air. The turbo-engine section may include one or more compressors to compress the core air before the core air flows into the combustor. Composite materials may be used to manufacture various components of the turbine engine, particularly, when the turbine engine is a turbine engine for an aircraft.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic, cross-sectional view of a turbine engine of for an aircraft, according to an aspect of the present disclosure.
FIG. 2A is a schematic view of a three-dimensional fiber weave pattern, according to an aspect of the present disclosure.
FIG. 2B is a schematic, cross-sectional view of the fiber weave pattern shown in FIG. 2A taken along line 2B-2B in FIG. 2A, according to an aspect of the present disclosure.
FIG. 2C is a schematic, cross-sectional view of a fiber weave pattern similar to the fiber weave pattern shown in FIG. 2A, but with a different interlocking fiber pattern, according to an aspect of the present disclosure.
FIG. 2D is a schematic, cross-sectional view of a fiber weave pattern similar to the fiber weave pattern shown in FIG. 2A, but with another interlocking fiber pattern, according to an aspect of the present disclosure.
FIG. 3 is a flow chart of a general process of manufacturing a composite component that may be used in the turbine engine of FIG. 1, according to an aspect of the present disclosure.
FIG. 4 is a schematic, forward aft-looking view of a vane structure, taken at plane 4-4 of FIG. 1, according to an aspect of the present disclosure.
FIG. 5 is a schematic, elevational aft-looking perspective view of the vane structure of FIG. 4, according to an aspect of the present disclosure.
FIG. 6 is a cross-sectional view, taken at plane 6-6 of FIG. 4, through the vane structure of FIG. 4, according to an aspect of the present disclosure.
FIG. 7 is a schematic, aft-looking layout of a preform assembly used in manufacturing a composite component, according to an aspect of the present disclosure.
FIG. 8 is a schematic, aft looking view of an outer shell frame preform that may be implemented in the preform assembly 300 of FIG. 7, according to an aspect of the present disclosure.
FIG. 9 is a schematic, aft looking view of an inner hub frame preform that may be implemented in the preform assembly 300 of FIG. 7, according to an aspect of the present disclosure.
FIG. 10 is an enlarged view of a first outer shell frame preform connecting end, according to an aspect of the present disclosure.
FIG. 11 is an enlarged view of a second outer shell frame preform connecting end, according to an aspect of the present disclosure.
FIG. 12 is an enlarged detail view of an outer shell connection, taken at detail view 356 of FIG. 7, according to an aspect of the present disclosure.
FIG. 13 is an enlarged view of a first inner hub frame preform connecting end, according to an aspect of the present disclosure.
FIG. 14 is an enlarged view of a second inner hub frame preform connecting end, according to an aspect of the present disclosure.
FIG. 15 is an enlarged detail view of an inner hub connection, taken at detail view 364 of FIG. 7, according to an aspect of the present disclosure.
FIG. 16 depicts an alternate outer shell frame connection to that shown in FIG. 12, according to an aspect of the present disclosure.
FIG. 17 is an enlarged, detail view of a connection of an outer shell strut preform portion with the outer shell frame portion, taken at detail view 392 of FIG. 8, according to an aspect of the present disclosure.
FIG. 18 is a bottom view of the connection of FIG. 17, taken at view 18-18 of FIG. 17, according to an aspect of the present disclosure.
FIG. 19 is a cross-sectional view of the connection of FIG. 17, taken at plane 19-19 of FIG. 18, according to an aspect of the present disclosure.
FIG. 20 is a cross-sectional view of a connection of an outer shell strut trailing edge lug preform portion and the outer shell frame portion, taken at plane 20-20 of FIG. 18, according to an aspect of the present disclosure.
FIG. 21 is a cross-sectional view of a connection of an outer shell strut pi-leg preform portion and the outer shell frame portion, taken at plane 21-21 of FIG. 18, according to an aspect of the present disclosure.
FIG. 22 is an enlarged, detail view of a connection of the inner hub strut preform portion with the inner hub frame portion, taken at detail view 448 of FIG. 9, according to an aspect of the present disclosure.
FIG. 23 is a top view of the connection of FIG. 22, taken at view 23-23 of FIG. 22, according to an aspect of the present disclosure.
FIG. 24 is a cross-sectional view of the connection of FIG. 22, taken at plane 24-24 of FIG. 23, according to an aspect of the present disclosure.
FIG. 25 is a cross-sectional view of a connection of the inner hub strut trailing edge lug preform portion and the inner hub frame portion, taken at plane 25-25 of FIG. 23, according to an aspect of the present disclosure.
FIG. 26 is a cross-sectional view of a connection of the inner hub strut pi-leg preform portion and the inner hub frame portion, taken at plane 26-26 of FIG. 23, according to an aspect of the present disclosure.
FIG. 27 is a schematic, aft-looking layout of the outer shell hoop preform and the inner hub hoop preform before extension of the outer shell strut preform portions and before extension of the inner hub strut preform portions, according to an aspect of the present disclosure.
FIG. 28 is a schematic, aft-looking layout the outer shell hoop preform after extension of the outer shell strut preform portions to extend inward from the outer shell hoop preform, according to an aspect of the present disclosure.
FIG. 29 is an enlarged, detail view of a portion of the outer shell strut preform portion, taken at detail view 490 of FIG. 28, according to an aspect of the present disclosure.
FIG. 30 is an outward-looking view of the outer shell strut preform portion of FIG. 29, taken at view 30-30 of FIG. 29, according to an aspect of the present disclosure.
FIG. 31 is a cross-sectional view of the outer shell strut preform portion of FIG 30, taken at plane 31-31 of FIG. 30, according to an aspect of the present disclosure.
FIG. 32 is a schematic, aft-looking layout the inner hub hoop preform after extension of the inner hub strut preform portions to extend outward from the inner hub hoop preform, according to an aspect of the present disclosure.
FIG. 33 is an enlarged, detail view of a portion of the inner hub strut preform portion, taken at detail view 526 of FIG. 32, according to an aspect of the present disclosure.
FIG. 34 is an inward-looking view of the inner hub strut preform portion of FIG. 33, taken at view 34-34 of FIG. 33, according to an aspect of the present disclosure.
FIG. 35 is a cross-sectional view of the outer shell strut preform portion of FIG 34, taken at plane 35-35 of FIG. 34, according to an aspect of the present disclosure.
FIG. 36 is an enlarged, detail view of a first preliminary strut preform, taken at detail view 570 of FIG. 7, according to an aspect of the present disclosure.
FIG. 37 is a side view of the first preliminary strut preform, taken at view 37-37 of FIG. 36, according to an aspect of the present disclosure.
FIG. 38 is a cross-sectional view through the first preliminary strut preform, taken at plane 38-38 of FIG. 37, according to an aspect of the present disclosure.
FIG. 39 is an enlarged, detail view of a first leading edge connection of the first bifurcated outer shell strut leading edge preform portion and the first bifurcated inner hub leading edge preform portion, taken at detail view 544 of FIG. 36, according to an aspect of the present disclosure.
FIG. 40 depicts an alternate first leading edge connection to that shown in FIG. 39, according to an aspect of the present disclosure.
FIG. 41 is a detail view of a second preliminary strut preform of the first preliminary strut preform shown in FIG. 36, according to an aspect of the present disclosure.
FIG. 42 is a side view of the second preliminary strut preform taken at view 42-42 of FIG. 41, according to an aspect of the present disclosure.
FIG. 43 is a cross-sectional view through the second preliminary strut preform, taken at plane 43-43 of FIG. 42, according to an aspect of the present disclosure.
FIG. 44 is a cross-sectional view of the strut preform, according to an aspect of the present disclosure.
FIG. 45 is an enlarged view of a portion of the preform assembly of FIG. 7, taken at detail view 570 of FIG. 7, according to an aspect of the present disclosure.
FIG. 46 is an enlarged view of a portion of the preform assembly of FIG. 45, taken at detail view 580 of FIG. 45, according to an aspect of the present disclosure.
FIG. 47 is a schematic view of a mold tooling structure that may be utilized in manufacturing the guide vane structure of FIG. 4, according to an aspect of the present disclosure.
FIG. 48 is a corresponding view to that of FIG. 29, depicting an alternate portion of the outer shell strut preform portion, according to an aspect of the present disclosure.
FIG. 49 is a corresponding view to that of FIG. 30, depicting the alternate portion of the outer shell strut preform portion, according to an aspect of the present disclosure.
FIG. 50 is a corresponding view to that of FIG. 33, depicting an alternate portion of the inner hub strut preform portion, according to an aspect of the present disclosure.
FIG. 51 is a corresponding view to that of FIG. 34, depicting the alternate portion of the inner hub strut preform portion, according to an aspect of the present disclosure.
FIG. 52 is a corresponding view to that of FIG. 44 of an alternate strut preform to that shown in FIG. 44, according to an aspect of the present disclosure.
FIG. 53A and FIG. 53B, together, depict a flowchart of process steps for a method of manufacturing a composite component, according to an aspect of the present disclosure.
FIG. 54 is a view corresponding to FIG. 17 of a connection of an alternate outer shell strut preform portion with the outer shell frame portion, according to an aspect of the present disclosure.
FIG. 55 is an outward looking view, similar to FIG. 18, of the alternate outer shell strut preform, taken at view 55-55 of FIG. 54, according to an aspect of the present disclosure.
FIG. 56 is a forward-looking view of the alternate outer shell strut preform portion, taken at view 56-56 of FIG. 55, according to an aspect of the present disclosure.
FIG. 57 is a view corresponding to FIG. 22 of a connection of an alternate inner hub strut preform portion with the inner hub frame portion, according to an aspect of the present disclosure.
FIG. 58 is an inward looking view, similar to FIG. 23, of the alternate inner hub strut preform portion, taken at view 58-58 of FIG. 57, according to an aspect of the present disclosure.
FIG. 59 is a forward-looking view of the alternate inner hub strut preform portion, taken at view 59-59 of FIG. 58, according to an aspect of the present disclosure.
FIG. 60 is an aft-looking view similar to the detail view 570 of FIG. 36, depicting a connection to form the strut preform for the alternate arrangement of FIG. 54 to FIG. 59, according to an aspect of the present disclosure.
FIG. 61 is a cross-sectional view of the connection of FIG. 60, taken at plane 61-61 of FIG. 60, according to an aspect of the present disclosure.
FIG. 62 is an aft-looking view of a trailing edge connection to form the strut preform for the alternate arrangement of FIG. 54 to FIG. 59, according to an aspect of the present disclosure.
FIG. 63 is a cross-sectional view of the strut preform taken at plane 63-63 of FIG. 61, according to an aspect of the present disclosure.
FIG. 64 is a cross-sectional view of a completed alternate strut preform to that shown in FIG. 44, according to an aspect of the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially" is not to be limited to the precise value specified. In at least some instances, the approximating language may correspond to the precision of an instrument for measuring the value, or the precision of the methods or the machines for constructing or manufacturing the components and/or systems. For example, the approximating language may refer to being within a one, two, four, ten, fifteen, or twenty percent margin in either individual values, range(s) of values, and/or endpoints defining range(s) of values.

The terms "vane" and "strut" may be used interchangeably herein, and generally refer to a structural component implemented to provide structural support between two circular (or cylindrical or conical) elements of a gas turbine engine, and/or to redirect a flow of air passing through two circular (or cylindrical or conical) elements.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC). The composite may be formed of a matrix material and a reinforcing element, such as a fiber (referred to herein as a reinforcing fiber).

As used herein "reinforcing fibers" may include, for example glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle.

"Preform" as used herein is a piece of three-dimensional woven fabric formed by a plurality of reinforcing fibers including warp fiber tows and weft fiber tows.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. Adhesives can include resin and phenolics, wherein the adhesive can require curing at elevated temperatures or other hardening techniques.

As used herein, PMC refers to a class of materials. The PMC material may be a prepreg. A prepreg is a reinforcement material (e.g., a reinforcing fiber) pre-impregnated with a polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers.

Resins for matrix materials of PMCs can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include, polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg with thermoplastic polymers, another non-limiting example utilizes a woven fabric. Woven fabrics can include, but are not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO2), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide, SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods including but not limited to melt infiltration, chemical vapor infiltration, polymer impregnation pyrolysis (PIP), or any combination thereof.

The term "metallic" as used herein is indicative of a material that includes metal such as, but not limited to, titanium, iron, aluminum, stainless steel, and nickel alloys. A metallic material or an alloy can be a combination of at least two or more elements or materials, where at least one is a metal.

Traditional two-dimensional (2D) layup designs typically used for forming composite gas turbine engine components are challenging to manufacture and may have limited interlaminar strength. Specifically, composite components for gas turbine engines are generally constructed with hand laid plies or by combining multiple woven or prefabricated preforms into one molded part. Hand layup or assembly of preforms increases the labor and costs required to build the component. Assembly of preforms also comes with assembly and positioning challenges. Moreover, a composite component formed from 2D plies or multiple preforms will be more likely to have limited interlaminar loading capability.

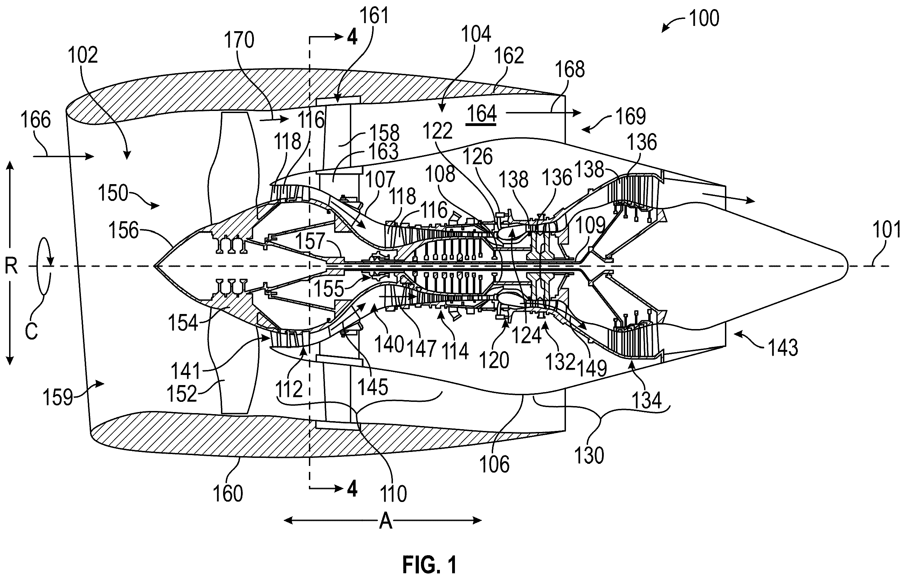

The composite materials discussed herein may be particularly suitable for use in turbine engines for an aircraft. FIG. 1 is a schematic, cross-sectional view a turbine engine 100 that may be used on an aircraft (not shown). The turbine engine 100 has an axial direction A (extending parallel to a longitudinal centerline axis 101, shown for reference in FIG. 1), a radial direction R, and a circumferential direction. C. The circumferential direction C extends in a direction rotating about the longitudinal centerline axis 101 (e.g., rotating about the axial direction A). In the embodiment depicted in FIG. 1, the turbine engine 100 is a high bypass turbofan engine, including a fan section 102 and a turbo-engine 104 disposed downstream from the fan section 102. While FIG. 1 depicts a high bypass turbofan engine, the present disclosure is not limited to being implemented in a high bypass turbofan engine and may be implemented in other types of engines instead, including turbojet engines, turboprop engines, or turbo machinery in general.

The turbo-engine 104 depicted in FIG. 1 includes a generally tubular outer casing 106 that defines a core inlet 141, which is an annular inlet about the longitudinal centerline axis 101. The outer casing 106 encases the turbo-engine 104, and the turbo-engine 104 includes, in a serial flow relationship, a compressor section 110, including a booster or a low-pressure (LP) compressor 112 and a high-pressure (HP) compressor 114, a combustion section 120, a turbine section 130, including a high-pressure (HP) turbine 132 and a low-pressure (LP) turbine 134, and a core air exhaust nozzle 143. The compressor section 110, the combustion section 120, the turbine section 130, and the core air exhaust nozzle 143 together define, at least in part, a core air flow path 140 extending from the core inlet 141 to the core air exhaust nozzle 143, and through which a core air 145 flows.

Each of the LP compressor 112 and the HP compressor 114 may include a plurality of compressor stages. In each stage, a plurality of compressor blades 116 rotate relative to a corresponding plurality of static compressor vanes 118 to compress or to pressurize the core air 145 passing through the stage. In a single compressor stage, a plurality of the compressor blades 116 can be provided in a ring, extending radially outwardly (in the radial direction R) relative to the longitudinal centerline axis 101 from a compressor rotor (shown generally) that includes a disk. The corresponding static compressor vanes 118 are positioned upstream of and adjacent to the rotating compressor blades 116. The compressor vanes 118, for a stage of the compressor, can be mounted to a core casing 107 in a circumferential arrangement. The core casing 107 may define, at least in part, the core air flow path 140. Each compressor stage may be used to sequentially compress the core air 145 flowing through the core air flow path 140, generating compressed air 147. Any suitable number of compressor blades 116, compressor vanes 118, and compressor stages may be used.

Each of the HP turbine 132 and the LP turbine 134 also may include a plurality of turbine stages. In each stage, a set of turbine blades 136 rotate relative to a corresponding set of static turbine vanes 138 to extract energy from combustion gases 149 passing through the stage. The turbine blades 136 may be a part of a turbine rotor (shown generally). Any suitable configuration for a turbine rotor may be used, including, for example, a disk with the plurality of turbine blades 136 extending from the disk. The corresponding static turbine vanes 138 are positioned upstream of and adjacent to the rotating turbine blades 136. The turbine vanes 138, for a stage of the turbine, can be mounted to the core casing 107 in a circumferential arrangement.

In the combustion section 120, fuel (not shown) is received from a fuel system (not shown), and is injected into a combustion chamber 124 of a combustor 122 by fuel nozzles 126. The fuel is mixed with the compressed air 147 from the compressor section 110 to form a fuel and air mixture (not shown), which is ignited and burned in the combustor 122, generating combustion products (i.e., combustion gases 149) within the combustor 122. The combustion gases 149 are discharged from the combustion chamber 124 to the turbine section 130. The combustion gases 149 may be directed into the turbine blades 136 of the HP turbine 132 and, then, into the turbine blades 136 of the LP turbine 134, such that the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The turbine engine 100 and, more specifically, the turbo-engine 104 further includes one or more drive shafts. More specifically, the turbo-engine 104 includes a high-pressure (HP) shaft 108 drivingly connecting the HP turbine 132 to the HP compressor 114, and a low-pressure (LP) shaft 109 drivingly connecting the LP turbine 134 to the LP compressor 112. The HP shaft 108 and the LP shaft 109 may also be referred to as spools. More specifically, the HP turbine rotors of the HP turbine 132 are connected to the HP shaft 108, and the HP compressor rotors of the HP compressor 114 are connected to the HP shaft 108. When the turbine blades 136 and, thus, the HP turbine rotors of the HP turbine 132 are rotated by the combustion gases 149 flowing through the core air flow path 140, the HP turbine rotors of the HP turbine 132 rotate the HP compressor rotors and, thus, the compressor blades 116 of the HP compressor 114 via the HP shaft 108. Similarly, the LP turbine rotors of the LP turbine 134 are connected to the LP shaft 109, and the LP compressor rotors of the LP compressor 112 are connected to the LP shaft 109. When the LP turbine rotors and, thus, LP the turbine blades 136 of the LP turbine 134 are rotated by the combustion gases 149 flowing through the core air flow path 140, the LP turbine rotors of the LP turbine 134 rotate the LP compressor rotors and, thus, the compressor blades 116 of the LP compressor 112 via the LP shaft 109. The HP shaft 108 and the LP shaft 109 are disposed coaxially about the longitudinal centerline axis 101. The HP shaft 108 has a greater diameter than that of the LP shaft 109, and the HP shaft 108 is located radially outward of the LP shaft 109. The HP shaft 108 and the LP shaft 109 are rotatable about the longitudinal centerline axis 101 and, as discussed above, coupled to rotatable elements such as the HP/LP compressor rotors and the HP/LP turbine rotors.

The fan section 102 shown in FIG. 1 includes a fan 150 having a plurality of fan blades 152 coupled to a disk 154. The fan blades 152 and the disk 154 are connected to a fan shaft 157, which is connected to a reduction gearbox 155 that is connected with and driven by the LP shaft 109. Thus, the fan blades 152 and the disk 154 are rotatable, together, about the longitudinal centerline axis 101 and are driven by rotation of the LP shaft 109. The disk 154 is covered by a rotatable fan hub 156 that is aerodynamically contoured to promote an airflow through the plurality of fan blades 152.

Further, a nacelle 160 circumferentially surrounds the fan 150 and/or at least a portion of the turbo-engine 104. The nacelle 160 may also be referred to as an annular fan casing or an outer nacelle. The nacelle 160 is supported relative to the turbo-engine 104 by a plurality of circumferentially spaced guide vanes (or struts) 158 (two shown in FIG. 1) that are part of a vane structure 161 that is connected to an intermediate frame structure 163. The vane structure 161 will be described in more detail below, and the vane structure 161 may be one example of a composite component 161' that may be implemented in the turbine engine 100. A downstream section 162 of the nacelle 160 extends over an outer portion of the turbo-engine 104 and, more specifically, a downstream portion of the outer casing 106 so as to define a bypass airflow passage 164 therebetween.

During operation of the turbine engine 100, a volume of air 166 enters the turbine engine 100 through an inlet 159 of the nacelle 160 and/or the fan section 102. As the volume of air 166 passes across the fan blades 152, a first portion of the air 166 is propelled by the fan blades 152 to generate a swirled fan airflow 170 that is directed or routed toward the vanes 158, where the swirled fan airflow 170 may be redirected by the vanes 158 from the swirled fan airflow 170 to be an axial airflow in the axial direction A and into the bypass airflow passage 164 as bypass air 168. A second portion of air 166 (shown schematically as core air 145) is directed or is routed into the core inlet 141 to an upstream section of the core air flow path 140. Simultaneously, with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust.

The turbine engine 100 shown in FIG. 1 and discussed herein (turbofan engine) is provided by way of example only. In other embodiments, any other suitable engine may be utilized with aspects of the present disclosure. For example, in other embodiments, the engine may be any other suitable gas turbine engine, such as a turboshaft engine, a turboprop engine, a turbojet engine, an unducted single fan engine, and the like. In such a manner, in other embodiments, the gas turbine engine may have other suitable configurations, such as other suitable numbers or arrangements of shafts, compressors, turbines, fans, etc. Further, although the turbine engine 100 is shown as a direct drive, fixed-pitch turbofan engine, in other embodiments, the turbine engine 100 may be a geared turbine engine (e.g., including a gearbox between the fan 150 and a shaft driving the fan, such as the LP shaft 109), may be a variable pitch turbine engine (i.e., including a fan 150 having a plurality of fan blades 152 rotatable about their respective pitch axes), etc. Further, still, in alternative embodiments, aspects of the present disclosure may be incorporated into, or otherwise utilized with, any other type of engine, such as reciprocating engines.

The turbine engine 100 discussed herein is suitable for use on an aircraft. Some suitable aircraft include, for example, an airplane, a helicopter, and an unmanned aerial vehicle (UAV). In other embodiments, the turbine engine may be any other turbine engine, such as an industrial turbine engine incorporated into a power generation system, or a nautical turbine engine on a ship or other vessel.

Various components of the turbine engine 100 may be formed from composite materials. These components are referred to herein as composite components. The fan blades 152, a fan casing having the vanes 158, compressor blades 116, and compressor vanes 118 may be made from PMC materials, for example. Other composites, such as CMC materials, may be used for other components, including, for example, turbine blades 136, turbine vanes 138, and components of the combustion section 120 such as combustor liners used to form the combustion chamber 124. Moreover, although the embodiments are described relative to a turbine engine 100, the composite component and methods of manufacturing may be used to form composite components used in applications beyond turbine engines.

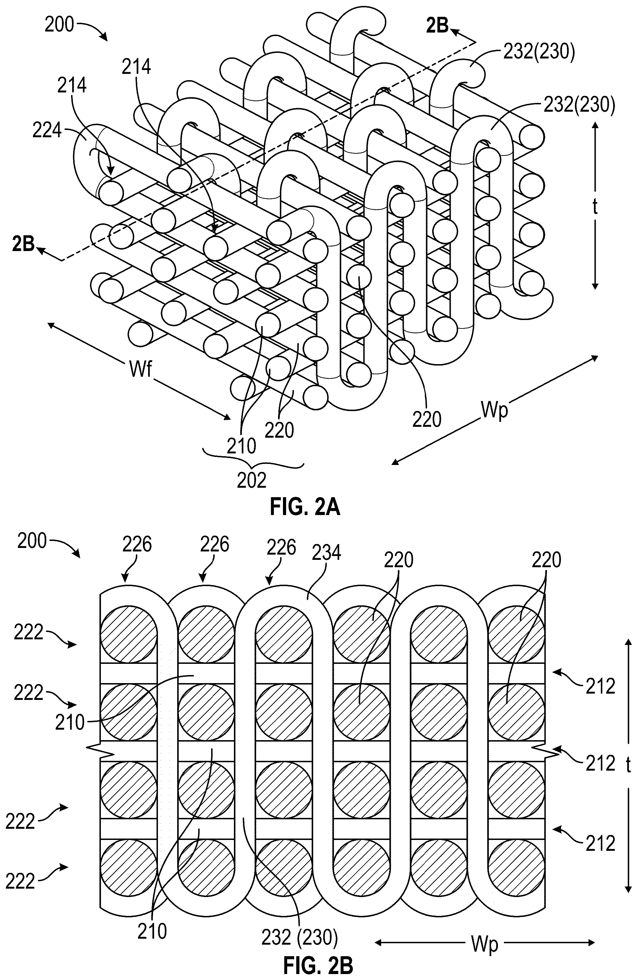

FIG. 2A is a schematic view showing an exemplary three-dimensional fiber weave pattern that may be used to form a three-dimensional woven fabric 200. FIG. 2B is a schematic, cross-sectional view taken along plane 2B-2B in FIG. 2A. In embodiments discussed herein, the composite components may be formed from a plurality of reinforcing fibers and, more specifically, a plurality of reinforcing fiber tows 202. The plurality of reinforcing fiber tows 202 are woven together in a three-dimensional pattern to form the three-dimensional woven fabric 200. The plurality of reinforcing fiber tows 202 include a plurality of first fiber tows, which, in this embodiment, is a plurality of warp fiber tows 210. The plurality of reinforcing fiber tows 202 also include a plurality of second fiber tows, which, in this embodiment, is a plurality of weft fiber tows 220. The weft fiber tows 220 are oriented transversely to the warp fiber tows 210, and, in the depicted embodiment, the warp fiber tows 210 and the weft fiber tows 220 are oriented generally orthogonally to each other. The woven fabric 200 thus includes a warp direction Wp (also referred to as a first direction) and a weft direction Wf (also referred to as a second direction). The warp fiber tows 210 extend in the warp direction Wp and the weft fiber tows 220 extend in the weft direction Wf.

In the depicted embodiment, the woven fabric 200 is a three-dimensional woven fabric and the woven fabric 200 also includes a thickness direction t. The thickness direction t may also be referred to as a z direction. The warp fiber tows 210 are arrayed in both the weft direction Wf and the thickness direction t. The warp fiber tows 210 may be parallel to each other in both the weft direction Wf and the thickness direction t, and the woven fabric 200 may include a plurality of warp fiber layers 212 in the thickness direction t and a plurality of warp fiber columns 214 in the weft direction Wf. Three warp fiber layers 212 are depicted in FIGS. 2A and 2B, but the woven fabric 200 may include any other numbers of warp fiber layers 212, including more than three warp fiber layers 212.

During a weaving process, the warp fiber tows 210 may be held in tension in the warp direction Wp, and one of the weft fiber tows 220 is passed or drawn therethrough. A shuttle (not shown) may be used to draw the one of the weft fiber tows 220 through the warp fiber tows 210. The shuttle may be passed through the warp fiber tows 210 in a first direction and then reversed to pass through the warp fiber tows 210 at a different height in a thickness direction t, thereby forming a plurality of weft fiber layers 222 in the thickness direction t. One of the weft fiber tows 220 may be continuous through at least a portion of the thickness of the woven fabric 200, and the one of the weft fiber tows 220 may include a portion extending in the thickness direction t, which may be referred to in some embodiments as a turnaround. This portion of the weft fiber tow thus may be referred to herein as a turnaround portion 224. The warp fiber tows 210 may be moved relative to each other to allow a space for the one of the weft fiber tows 220 to pass through the space. The warp fiber tows 210 may be moved relative to each other in different ways to create different patterns. In this way, weaving the woven fabric 200 includes positioning the warp fiber tows 210 (e.g., such that the warp fiber tows 210 are held stationary in tension), then laying the weft fiber tows 220 (e.g., such that the weft fiber tows 220 are drawn through and inserted over and under the corresponding warp fiber tows 210), and repeating this process until the woven fabric 200 is formed. The weft fiber tows 220 may be parallel to each other in both the warp direction Wp and the thickness direction t, and the woven fabric 200 may include the plurality of weft fiber layers 222 in the thickness direction t and a plurality of weft fiber columns 226 in the warp direction Wp.

The woven fabric 200 also includes a plurality of interlocking fiber tows 230 (also referred to as Z-weaver fiber tows or binder fiber tows). The interlocking fiber tows 230 are additional warp fiber tows that are directed through the thickness of the woven fabric 200 during weaving to stitch the reinforcing fiber tows 202 together. The interlocking fiber tows 230 are woven to extend between two or more of the weft fiber layers 222. Different fiber patterns may be used for the interlocking fiber tows 230. A first interlocking fiber pattern, shown in FIGS. 2A and 2B, is an orthogonal interlocking pattern and the interlocking fiber tows 230 are referred to herein as orthogonal interlocking fiber tows 232. In this pattern, the orthogonal interlocking fiber tows 232 extend substantially in a direction that is orthogonal to the warp direction Wp, which is the thickness direction t in the depicted embodiment. As with the weft fiber tows 220, the interlocking fiber tows 230 (e.g., the orthogonal interlocking fiber tows 232) may include a turnaround portion 234. In the depicted embodiment, the turnaround portion 234 of the orthogonal interlocking fiber tows 232 is positioned to form an alternating pattern between each warp fiber columns 214. In the depicted embodiment, the orthogonal interlocking fiber tows 232 extend through the thickness of the woven fabric 200 and may be referred to as through-thickness interlocking fiber tows, but other thicknesses may be used.

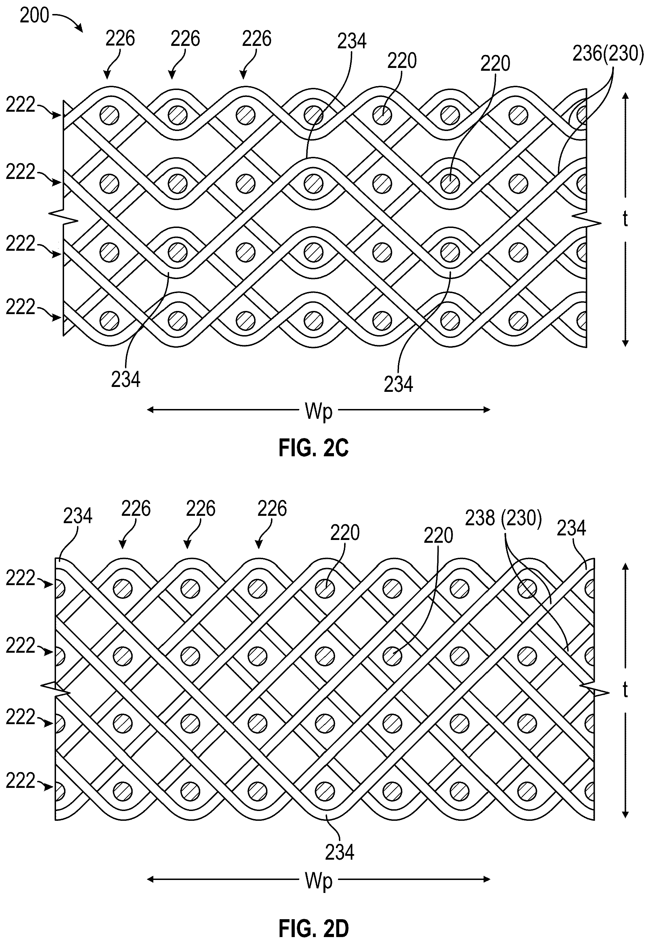

A second interlocking fiber pattern, shown in FIG. 2C, is an angle interlock pattern and, more specifically, a layer-to-layer angle interlock pattern. FIG. 2C is a cross-sectional view of a woven fabric taken from a perspective similar to FIG. 2B. The interlocking fiber tows 230 are referred to in this embodiment as angled interlocking fiber tows 236. Instead of extending orthogonally through the woven fabric 200, the angled interlocking fiber tows 236 form an oblique angle relative to the warp direction Wp. In the depicted embodiment, the angled interlocking fiber tows 236 extend through adjacent weft fiber layers 222 in an alternating or a sinusoidal pattern to interlock these adjacent layers with each other, with the oblique angle formed between adjacent turnaround portions 234 of the angled interlocking fiber tows 236. The turnaround portions 234 of the angled interlocking fiber tows 236 are located on every other weft fiber columns 226, but, in other embodiments, two or more weft fiber columns 226 may be between adjacent turnaround portions 234 of the angled interlocking fiber tows 236. In other embodiments, the angled interlocking fiber tows 236 may extend between more than two adjacent weft fiber layers 222. For example, as shown in FIG. 2D, the interlocking fiber tows 230 are through-thickness interlocking fiber tows, which are referred to herein as through-thickness angled interlocking fiber tows 238. FIG. 2D is a cross-sectional view of a woven fabric taken from a perspective similar to FIG. 2B. The weft fiber tows 220 are omitted in FIGS. 2C and 2D for clarity.

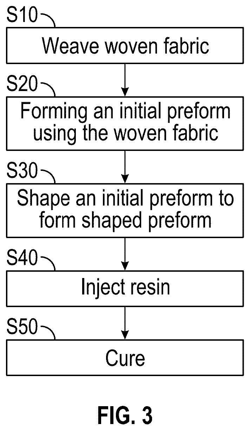

FIG. 3 is a flow chart of a general process of manufacturing a composite component that may be used in the turbine engine of FIG. 1. The method includes, in step S10 weaving the woven fabric 200, such as on a loom. In step S20, the method includes forming an initial preform using one or more pieces of woven fabric 200. This step may include, for example, laying up a plurality of woven fabrics 200 or otherwise positioning the plurality of woven fabrics 200 relative to each other to form the initial preform. In step S30, the initial preform is shaped to form a shaped preform. Shaping the initial preform may include, for example, using a mold tool to shape the initial preform. Suitable shaping processes may include vacuum forming or other forming processes to impart a shape to the initial preform. The shaped preform may form a final preform, but optionally, additional machining processes and manufacturing processes, such as adding inserts, may be carried out on the shaped preform to form the final preform.

After the preform is complete (i.e., the final preform), a matrix material may be injected into the preform in step S40 to generate an infiltrated (or an impregnated) preform. When the composite component is a polymer matrix composite, polymers and/or a resin may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes may be used in this step depending upon the matrix material. As noted above, the preform may be formed using prepreg fiber tows, and, in such an embodiment, this step (step S40) may be omitted.

The method continues with curing the infiltrated preform in step S50 to bond the composite material and, more specifically, the matrix together forming the composite component. The curing process depends upon the material and may include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material.

Further, the composite component may be finish machined as needed. Finish machining may define the final finished shape or contour of the composite component. For example, when the composite component is a fan blade 152 (FIG. 1), the edges of the fan blade 152 may be machined to define the final airfoil shape or the contour of the fan blade. Additionally, the composite component can be coated with one or more suitable coatings, such as, e.g., an environmental barrier coating (EBC) or a polyurethane surface coating.

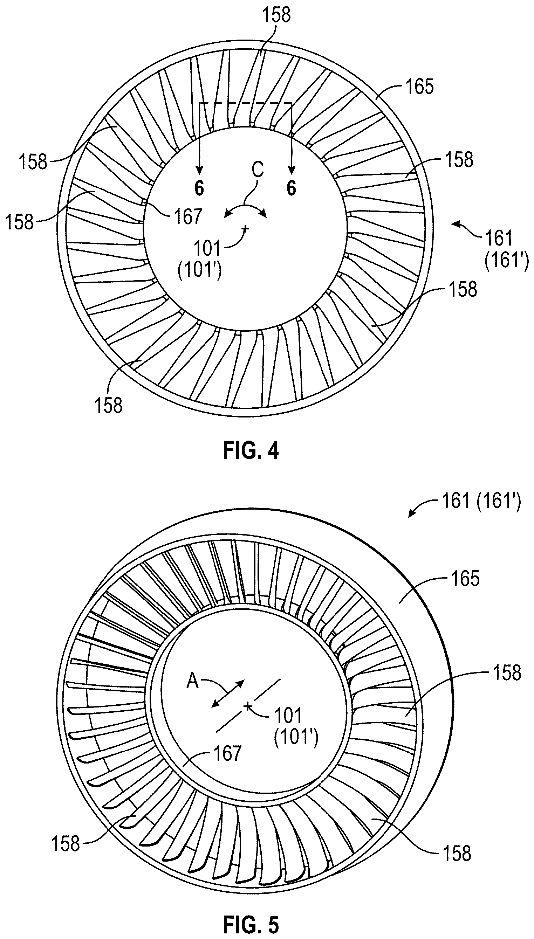

FIG. 4 is a schematic, forward aft-looking view of the vane structure 161, taken at plane 4-4 of FIG. 1, according to an aspect of the present disclosure. FIG. 5 is a schematic, elevational aft-looking perspective view of the vane structure 161 of FIG. 4, according to an aspect of the present disclosure. Referring collectively to FIG. 4 and FIG. 5, only the vane structure 161 is shown, with other elements of FIG. 1 (e.g., the nacelle 160 and the turbo-engine components within the outer casing 106) being omitted merely for clarity. In FIG. 4 and FIG. 5, the vane structure 161 may be an outlet guide vane structure arranged downstream of the fan 150 and that includes the vanes 158 of FIG. 1. However, the vane structure 161 is not limited to an outlet guide vane structure and, in other aspects, the vane structure 161 may be an inlet guide vane structure, or may be a stator vane structure that may be implemented in the compressor section 110 or in the turbine section 130 of the turbo-engine 104. As shown in FIG. 4, and as will be described in more detail below, the vane structure 161 includes an outer shell 165 that extends circumferentially about a vane structure centerline axis 101', which is congruent to the longitudinal centerline axis 101 of the turbine engine 100, and also extends in the axial direction A (FIG. 1). The vane structure 161 also includes an inner hub 167 that extends circumferentially about the vane structure centerline axis 101' and that extends in the axial direction A. The plurality of vanes 158 (also referred to as struts) extend between the outer shell 165 and the inner hub 167, and are circumferentially spaced apart from one another about the vane structure centerline axis 101' and connect the outer shell 165 and the inner hub 167 together. The vane structure 161 is an example of a composite component 161' that may be implemented in the turbine engine 100 and a description of a composite vane structure and a method of manufacturing the composite vane structure will be described in more detail below.

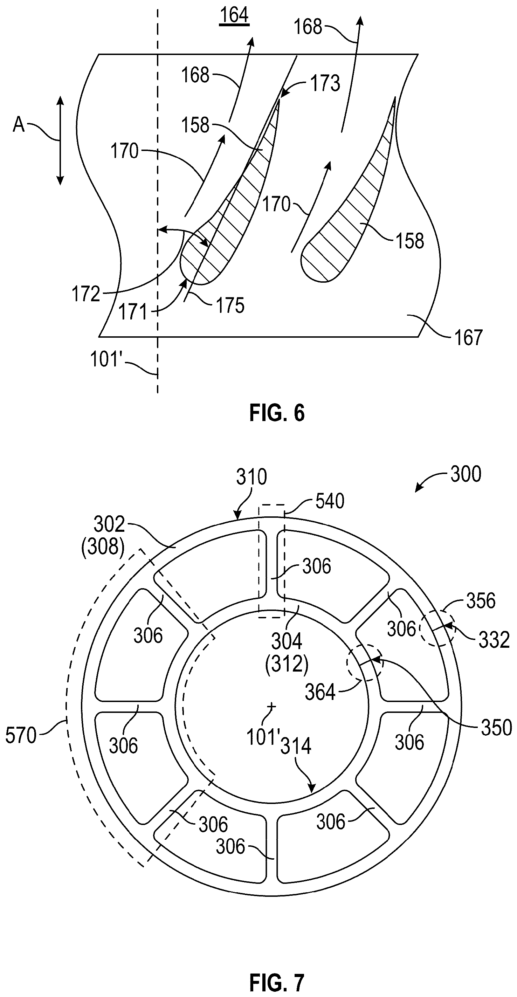

FIG. 6 is a cross-sectional view, taken at plane 6-6 of FIG. 4, through the vane structure 161 of FIG. 4, according to an aspect of the present disclosure. As shown in FIG. 6, the vanes 158 of the vane structure 161 may have an airfoil shape (e.g., a NACA (National Advisory Committee for Aeronautics) airfoil shape) and may include camber so as to be a curved vane. In this manner, the vanes 158 can receive the swirled fan airflow 170 and redirect the swirled fan airflow 170 to be an axial airflow flowing in the axial direction A into the bypass airflow passage 164 as the bypass air 168. Further, each of the vanes 158 may be arranged at an angle 172 with respect to the vane structure centerline axis 101', where the angle 172 is taken along a chord 175 of the vane 158 from a leading edge 171 to a trailing edge 173 of the vane 158.

FIG. 7 is a schematic, aft-looking layout of a preform assembly 300 used in manufacturing a composite component, according to an aspect of the present disclosure. More particularly, the preform assembly 300 of FIG. 7 is configured for manufacturing a vane assembly, such as the vane structure 161 of FIG. 4 and FIG. 5. Generally, a preform assembly consists of multiple woven fabric component parts that are joined together to form a general shape of the overall structure of the composite component. As will be described below, the overall preform assembly 300 is then installed in a mold tooling structure and a resin material is injected into the mold tooling structure and a curing process is applied to the mold tooling structure to form a general shape of the composite component. FIG. 7 depicts the preform assembly 300 as the preform assembly 300 may appear assembled within the mold tooling structure (with the mold tooling structure being omitted in FIG. 7) and when the mold tooling structure is ready for the injection of the resin material. A process to obtain the preform assembly 300 as shown in FIG. 7 will be described in more detail below. In FIG. 7, the preform assembly 300 includes an outer shell frame preform 302, an inner hub frame preform 304, and a plurality of strut preforms 306. As will be described below, the outer shell frame preform 302 may be woven as a generally linear three-dimensional outer shell frame preform 308 that includes connecting ends (described below) that are connected together to form an outer shell hoop frame preform 310 that extends circumferentially about the vane structure centerline axis 101'. Similarly, the inner hub frame preform 304 may be woven as a generally linear three-dimensional inner hub frame preform 312 that includes connecting ends (described below) that are connected together to form an inner hub hoop frame preform 314 that extends circumferentially about the vane structure centerline axis 101'. The plurality of strut preforms 306 are circumferentially spaced apart and extend between, and connect, the outer shell hoop frame preform 310 with the inner hub hoop frame preform 314. Fig. 7 depicts eight strut preforms 306 extending between the outer shell hoop frame preform 310 and the inner hub hoop frame preform 314, and each strut preform 306 corresponds to a respective vane 158 (FIG. 4) of the vane structure 161 for which the preform assembly 300 is utilized in manufacturing the vane structure 161. While FIG. 4 and FIG. 5 depict more than eight vanes 158, the depiction of eight strut preforms 306 in FIG. 7 is merely for brevity and clarity of the following description, and, in manufacturing the vane structure 161 of FIG. 4, the number of strut preforms 306 included in the preform assembly 300 would correspond to the number of vanes 158 included in the vane structure 161 of FIG. 4.

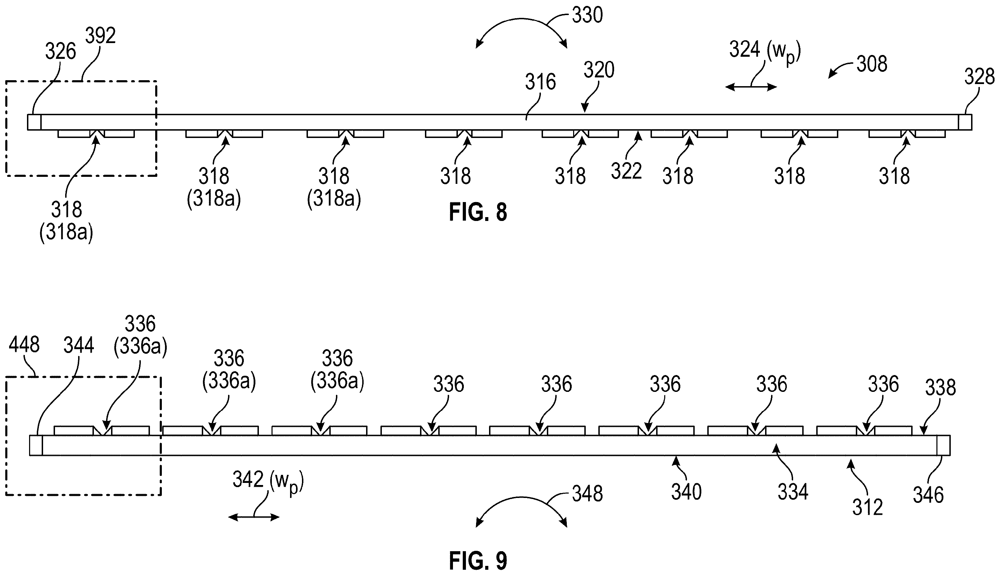

FIG. 8 is a schematic, aft looking view of an outer shell frame preform 308 that may be implemented in the preform assembly 300 of FIG. 7, according to an aspect of the present disclosure. The outer shell frame preform 308 includes an outer shell frame portion 316 and a plurality of outer shell strut preform portions 318 (eight shown in FIG. 8). The outer shell strut preform portions 318 are described in more detail below. The outer shell frame portion 316 includes an outer side 320 and an inner side 322, and the plurality of outer shell strut preform portions 318 are arranged on the inner side 322 of the outer shell frame portion 316. The outer shell frame portion 316 may be woven as a generally linear preform with any of the three-dimensional fabrics described above for FIG. 2A, FIG. 2B, FIG. 2C, or FIG. 2D. In the weaving, however, the warp fiber tows (e.g., the warp fiber tows 210 of FIG. 2A) are preferably woven in a first direction 324 (which is the warp direction Wp), while weft fiber tows (e.g., the weft fiber tows 220 of FIG. 2A) are woven orthogonal to the warp fiber tows in a direction extending into and out of the view of FIG. 8. As will be described below, each of the outer shell strut preform portions 318 is integrally woven in part connected with the outer shell frame portion 316.

The outer shell frame portion 316 is also woven to include a first outer shell frame preform connecting end 326 and a second outer shell frame preform connecting end 328. In forming the outer shell hoop frame preform 310 (FIG. 7), the outer shell frame preform 308 is bent in a hoop direction 330 and the first outer shell frame preform connecting end 326 and the second outer shell frame preform connecting end 328 are connected together at an outer shell connection 332 (FIG. 7) to form the outer shell hoop frame preform 310. The outer shell connection 332 will be described in more detail below.

FIG. 9 is a schematic, aft looking view of the inner hub frame preform 312 that may be implemented in the preform assembly 300 of FIG. 7, according to an aspect of the present disclosure. The inner hub frame preform 312 includes an inner hub frame portion 334 and a plurality of inner hub strut preform portions 336 (eight shown in FIG. 8). The inner hub strut preform portions 336 are described in more detail below. The inner hub frame portion 334 includes an outer side 338 and an inner side 340, and the plurality of inner hub strut preform portions 336 are arranged on the outer side 338 of the inner hub frame portion 334. The inner hub frame portion 334 may be woven as a generally linear preform with any of the three-dimensional fabrics described above for FIG. 2A, FIG. 2B, FIG. 2C, or FIG. 2D. In the weaving, however, the warp fiber tows (e.g., the warp fiber tows 210 of FIG. 2A) are preferably woven in a first direction 342 (which is the warp direction Wp), while weft fiber tows (e.g., the weft fiber tows 220 of FIG. 2A) are woven orthogonal to the warp fiber tows in a direction extending into and out of the view of FIG. 9. As will be described below, each of the inner hub strut preform portions 336 are integrally woven in part connected with the inner hub frame portion 334.

The inner hub frame portion 334 is also woven to include a first inner hub frame preform connecting end 344 and a second inner hub frame preform connecting end 346. In forming the inner hub hoop frame preform 314 (FIG. 7), the inner hub frame preform 312 is bent in a hoop direction 348 and the first inner hub frame preform connecting end 344 and the second inner hub frame preform connecting end 346 are connected together at an inner hub connection 350 (FIG. 7) to form the inner hub hoop frame preform 314. The inner hub connection 350 will be described in more detail below.

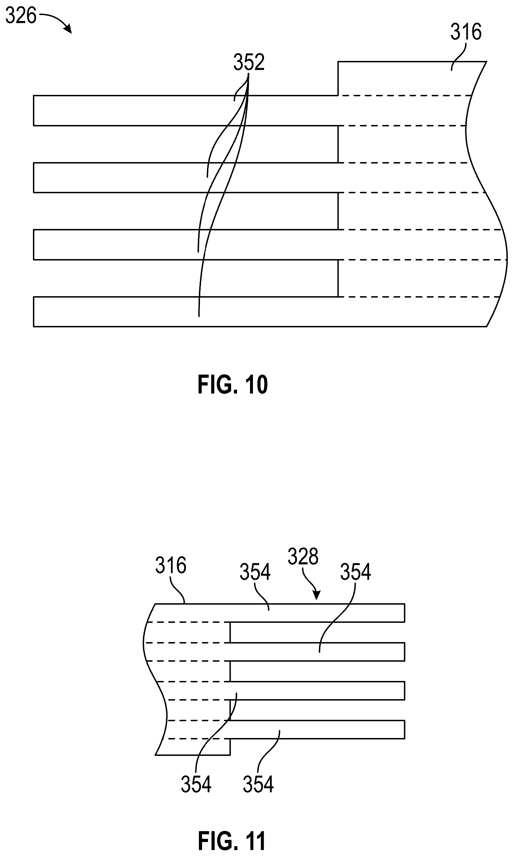

FIG. 10 is an enlarged view of the first outer shell frame preform connecting end 326, according to an aspect of the present disclosure. FIG. 11 is an enlarged view of the second outer shell frame preform connecting end 328. As shown in FIG. 10, the first outer shell frame preform connecting end 326 may include a plurality of first end bifurcated layers 352. As shown in FIG. 11, the second outer shell frame preform connecting end 328 may include a plurality of second end bifurcated layers 354.

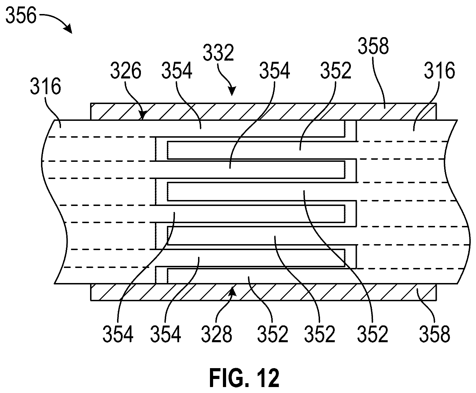

FIG. 12 is an enlarged detail view of the outer shell connection 332, taken at detail view 356 of FIG. 7, according to an aspect of the present disclosure. As shown in FIG. 12, the first outer shell frame preform connecting end 326 is connected with the second outer shell frame preform connecting end 328. More specifically, the plurality of first end bifurcated layers 352 of the first outer shell frame preform connecting end 326 overlap with the plurality of second end bifurcated layers 354 of the second outer shell frame preform connecting end 328. Thus, the outer shell connection 332 of FIG. 12 is arranged as a finger joint connection. However, the present disclosure is not limited to a finger joint connection and other types of connections may be implemented instead as will be described below.

Once the outer shell preform connection 332 has been formed, additional preform layers 358 may be added to wrap around the outer shell connection 332. The additional preform layers 358 may be either a three-dimensional fabric layer similar to that described above with regard to any of FIG. 2A, FIG. 2B, FIG. 2C, and FIG. 2D. Alternatively, the additional preform layers 358 may be two-dimensional fabric layers that are overlaid onto the outer shell connection 332.

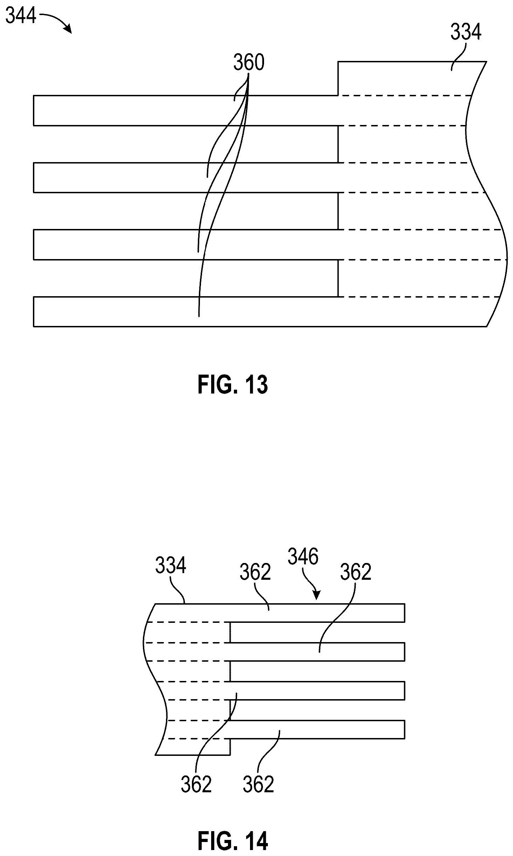

FIG. 13 is an enlarged view of the first inner hub frame preform connecting end 344, according to an aspect of the present disclosure. FIG. 14 is an enlarged view of the second inner hub frame preform connecting end 346, according to an aspect of the present disclosure. As shown in FIG. 11, the first inner hub frame preform connecting end 344 may include a plurality of first end bifurcated layers 360. As shown in FIG. 14, the second inner hub frame preform connecting end 346 may include a plurality of second end bifurcated layers 362.

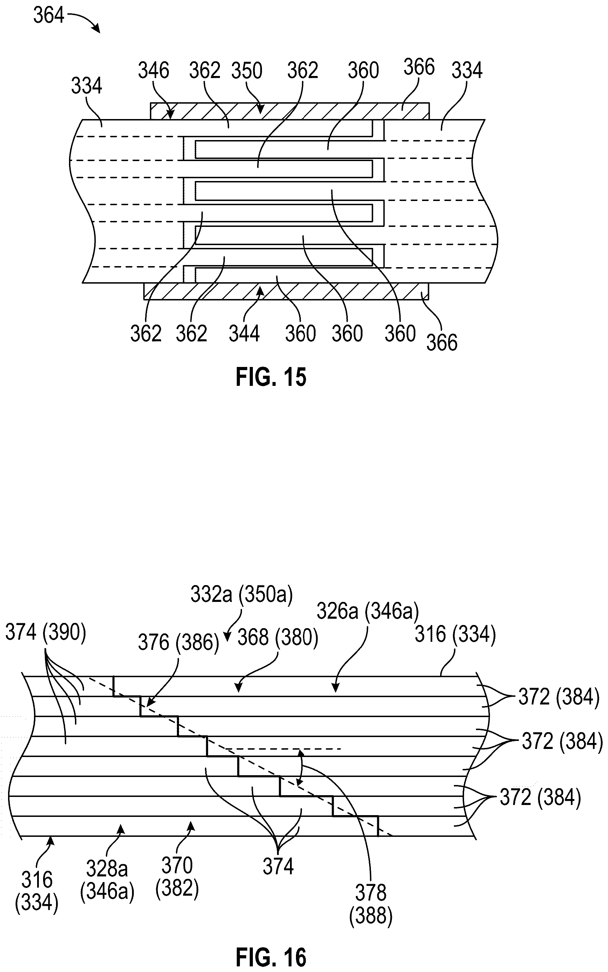

FIG. 15 is an enlarged detail view of the inner hub connection 350, taken at detail view 364 of FIG. 7, according to an aspect of the present disclosure. As shown in FIG. 15, the first inner hub frame preform connecting end 344 is connected with the second inner hub frame preform connecting end 346. More specifically, the plurality of first end bifurcated layers 360 of the first inner hub frame preform connecting end 344 overlap with the plurality of second end bifurcated layers 362 of the second inner hub frame preform connecting end 346. Thus, the inner hub connection 350 is arranged as a finger joint connection.

Once the inner hub connection 350 has been formed, additional preform layers 366 may be added to wrap around the outer shell connection 332. The additional preform layers 358 may be either a three-dimensional fabric layer similar to that described above with regard to any of FIG. 2A, FIG. 2B, FIG. 2C, and FIG. 2D. Alternatively, the additional preform layers 358 may be two-dimensional fabric layers that are overlaid onto the outer shell connection 332.

FIG. 16 depicts an alternate outer shell frame connection 332a to that shown in FIG. 12, according to an aspect of the present disclosure. In the FIG. 16 aspect, the outer shell frame portion 316 includes an alternate first outer shell frame preform connecting end 326a and an alternate second outer shell frame preform connecting end 328a. The alternate first outer shell frame preform connecting end 326a includes a first end outer shell scarf joint connecting portion 368 that includes a plurality of first bifurcated layers 372 that are arranged to extend in a staggered manner along a scarf angle line 376 (shown generally as a dashed line), which may have a scarf angle 378, such as forty-five degrees. The scarf angle 378 is not limited to forty-five degrees and other angles may be implemented instead. Similarly, the alternate second outer shell frame preform connecting end 328a includes a second end outer shell scarf joint connecting portion 370 that includes a plurality of second bifurcated layers 374, which are similarly arranged to extend in a staggered manner along the scarf angle line 376. The plurality of first bifurcated layers 372 and the plurality of second bifurcated layers 374 are joined together along the scarf angle line 376 so as to form the alternate outer shell frame connection 332a.

Continuing with FIG. 16, the configuration depicted therein is also applicable to form an alternate inner hub connection 350a. Thus, applying FIG. 16 to the inner hub frame portion 334, the inner hub frame portion 34 includes an alternate first inner hub frame preform connecting end 344a and an alternate second inner hub frame preform connecting end 346a. The alternate first inner hub frame preform connecting end 344a includes a first end inner hub scarf joint connecting portion 380 that includes a plurality of first bifurcated layers 384 that are arranged to extend in a staggered manner along a scarf angle line 386 (shown generally as a dashed line), which may have a scarf angle 388, such as forty-five degrees. The scarf angle 388 is not limited to forty-five degrees and other angles may be implemented instead. Similarly, the second inner hub frame preform connecting end 346a includes a second end outer shell scarf joint connecting portion 382 that includes a plurality of second bifurcated layers 390, which are similarly arranged to extend in a staggered manner along the scarf angle line 386. The plurality of first bifurcated layers 384 and the plurality of second bifurcated layers 390 are joined together along the scarf angle line 386 so as to form the alternate inner hub connection 350a.

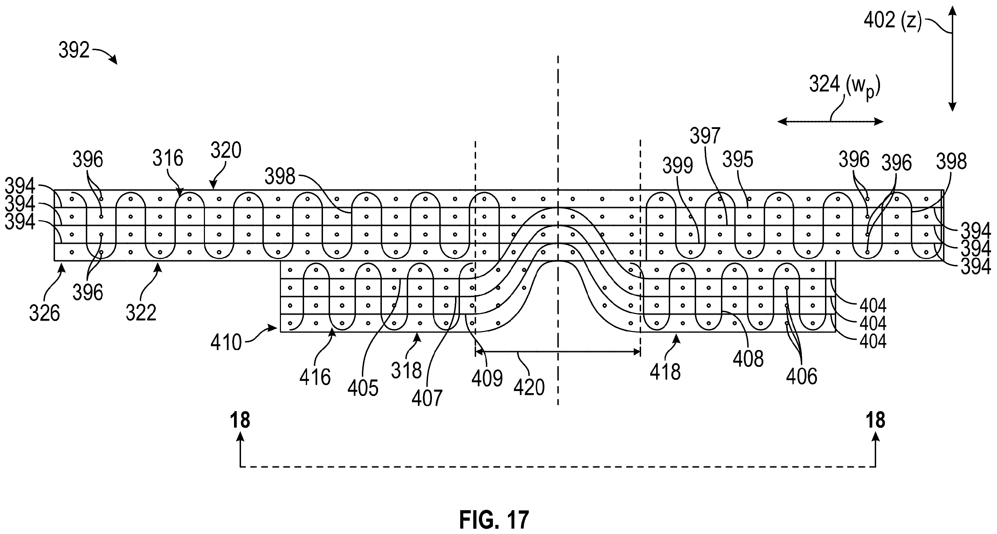

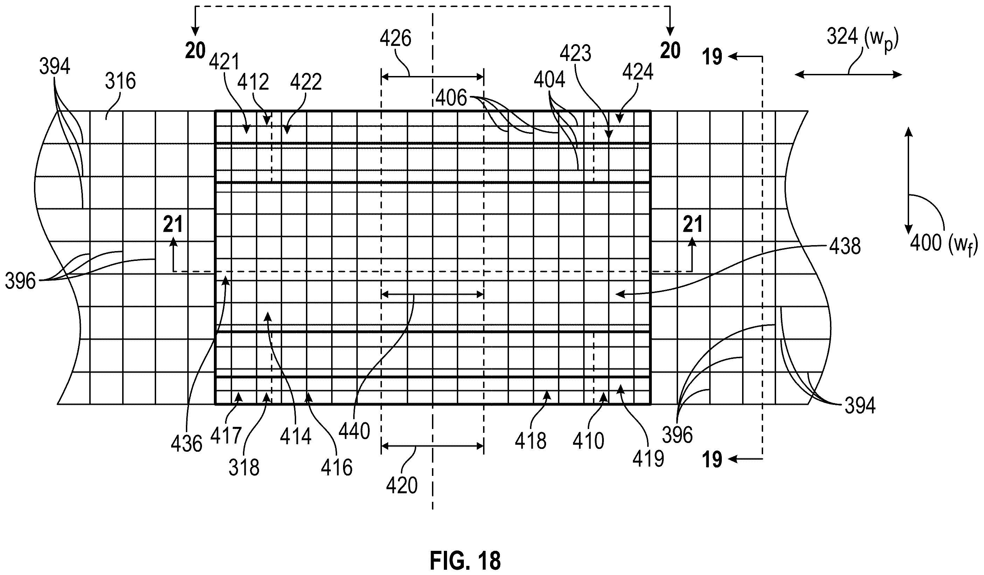

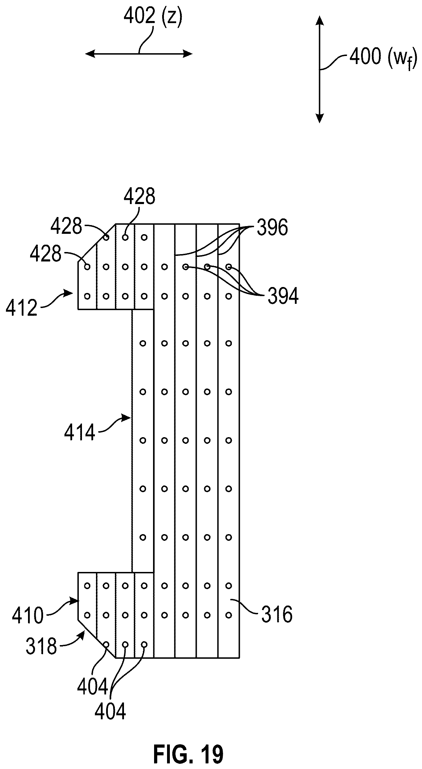

FIG. 17 is an enlarged, detail view of a connection of an outer shell strut preform portion 318 with the outer shell frame portion 316, taken at detail view 392 of FIG. 8, according to an aspect of the present disclosure. FIG. 18 is a bottom view of the connection of FIG. 17, taken at view 18-18 of FIG. 17, according to an aspect of the present disclosure. FIG. 19 is a cross-sectional view of the connection of FIG. 17, taken at plane 19-19 of FIG. 18, according to an aspect of the present disclosure. Referring collectively to FIG. 17, FIG. 18, and FIG. 19, as was described above with regard to FIG. 8, the outer shell frame portion 316 may be woven as a generally linear preform with any of the three-dimensional fabrics described above for FIG. 2A, FIG. 2B, FIG. 2C, or FIG. 2D. In FIG. 17, for the outer shell frame portion 316, the woven three-dimensional fabric of FIG. 2A is generally depicted with warp fiber tows 394 (e.g., the warp fiber tows 210 of FIG. 2A) woven in the first direction 324 (which is the warp direction Wp) and arranged in a plurality of warp fiber layers including a first warp fiber layer 395, a second warp fiber layer 397, and a third warp fiber layer 399. Each of the first warp fiber layer 395, the second warp fiber layer 397, and the third warp fiber layer 399 may be similar to the warp fiber layers 212 of FIG. 2A. In addition, the outer shell frame portion 316 includes weft fiber tows 396 (e.g., the weft fiber tows 220 of FIG. 2A) that are woven orthogonal to the warp fiber tows 394 in a second direction 400 (e.g., a weft direction Wf) extending orthogonal to the first direction 324 (e.g., into and out of the view of FIG. 17), and interlocking fiber tows 398 (e.g., the interlocking fiber tows 230 of FIG. 2A) are woven in a third direction (e.g., a Z direction ). The interlocking fiber tows 398 are shown only in FIG. 17 for clarity and are not shown in FIG. 18 or in FIG. 19.

Similarly, for the outer shell strut preform portion 318, the woven three-dimensional fabric of FIG. 2A is generally depicted with warp fiber tows 404 (e.g., the warp fiber tows 210 of FIG. 2A) woven in the first direction 324 (which is the warp direction Wp) and arranged in a plurality of warp fiber layers including a first warp fiber layer 405, a second warp fiber layer 407, and a third warp fiber layer 409. In addition, the outer shell strut preform portion 318 includes weft fiber tows 406 (e.g., the weft fiber tows 220 of FIG. 2A) that are woven orthogonal to the warp fiber tows 404 in the second direction 400 (e.g., a weft direction Wf) extending orthogonal to the first direction 324 (e.g., into and out of the view of FIG. 17), and interlocking fiber tows 408 (e.g., the interlocking fiber tows 230 of FIG. 2A) are woven in the third direction 402 (e.g., a Z direction ). The interlocking fiber tows 408 are shown only in FIG. 17 for clarity and are not shown in FIG. 18 or in FIG. 19.

Referring to FIG. 18 and to FIG. 19, the outer shell strut preform portion 318 includes an outer shell strut leading edge lug preform portion 410, an outer shell strut trailing edge lug preform portion 412, and an outer shell strut pi-leg preform portion 414 extending between the outer shell strut leading edge lug preform portion 410 and the outer shell strut trailing edge lug preform portion 412. Referring to FIG. 18, the outer shell strut leading edge lug preform portion 410 includes a first bifurcated outer shell strut leading edge lug preform portion 416 that is bifurcated from the outer shell frame portion 316, a second bifurcated outer shell strut leading edge lug preform portion 418 that is also bifurcated from the outer shell frame portion 316, and an outer shell strut leading edge connection portion 420 arranged between the first bifurcated outer shell strut leading edge lug preform portion 416 and the second bifurcated outer shell strut leading edge lug preform portion 418. The first bifurcated outer shell strut leading edge lug preform portion 416 includes a first connecting end 417 and the second bifurcated outer shell strut leading edge lug preform portion 418 includes a second connecting end 419. The first connecting end 417 and the second connecting end 419 will be described in more detail below, but, briefly, the first connecting end 417 and the second connecting end 419 are for connecting with corresponding bifurcated inner hub leading edge lug preform portions to form a leading edge of the strut preform 306.

As shown in FIG. 17, the warp fiber tows 404 of respective warp fiber layers of the outer shell strut leading edge connection portion 420 are integrally woven with the warp fiber tows 394 of respective warp fiber layers of the outer shell frame portion 316. For example, within the outer shell strut leading edge connection portion 420, the warp fiber tows 404 in the first warp fiber layer 405 are integrally woven with the warp fiber tows 394 of the first warp fiber layer 395 of the outer shell frame portion 316, the warp fiber tows 404 in the second warp fiber layer 407 are integrally woven with the warp fiber tows 394 of the second warp fiber layer 397 of the outer shell frame portion 316, and the warp fiber tows 404 of the third warp fiber layer 409 are integrally woven with the warp fiber tows 394 in the third warp fiber layer 399 of the outer shell frame portion 316. Thus, the foregoing illustrates an example of the outer shell strut leading edge lug preform portion 410 being integrally woven with the outer shell frame portion 316 to connect the outer shell strut leading edge lug preform portion 410 to the outer shell frame portion 316.

Referring again to FIG. 18, the outer shell strut trailing edge lug preform portion 412 includes a first bifurcated outer shell strut trailing edge lug preform portion 422 that is bifurcated from the outer shell frame portion 316, a second bifurcated outer shell strut trailing edge lug preform portion 424 that is also bifurcated from the outer shell frame portion 316, and an outer shell strut trailing edge connection portion 426 arranged between the first bifurcated outer shell strut trailing edge lug preform portion 422 and the second bifurcated outer shell strut trailing edge lug preform portion 424. The first bifurcated outer shell strut trailing edge lug preform portion 422 includes a third connecting end 421 and the second bifurcated outer shell strut trailing edge lug preform portion 424 includes a fourth connecting end 423. The third connecting end 421 and the fourth connecting end 423 will be described in more detail below, but, briefly, the third connecting end 421 and the fourth connecting end 423 are for connecting with corresponding bifurcated inner hub trailing edge lug preform portions to form a trailing edge of the strut preform 306.

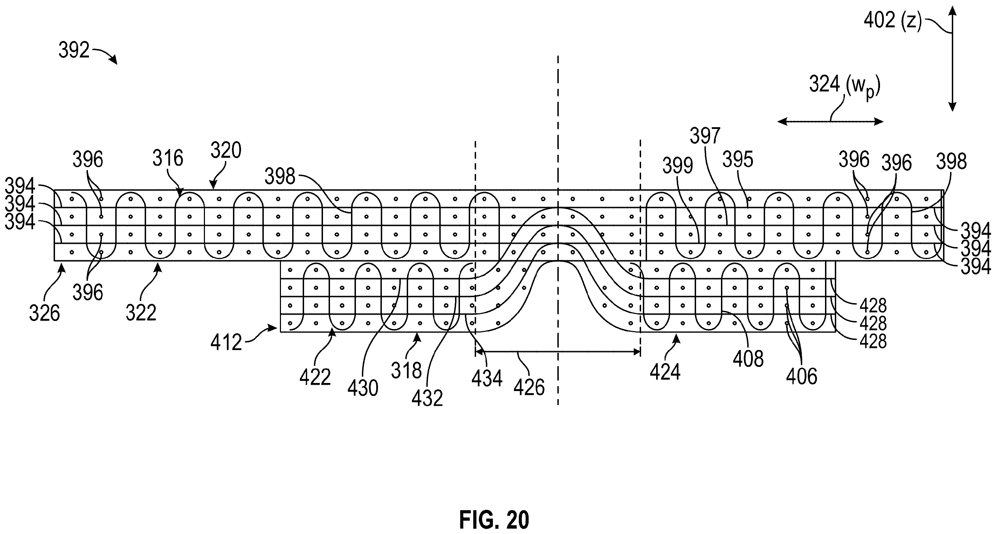

FIG. 20 is a cross-sectional view of a connection of the outer shell strut trailing edge lug preform portion 412 and the outer shell frame portion 316, taken at plane 20-20 of FIG. 18, according to an aspect of the present disclosure. The outer shell strut trailing edge lug preform portion 412 is a woven three-dimensional fabric (e.g., the FIG. 2A fabric) and is generally depicted with warp fiber tows 428 (e.g., the warp fiber tows 210 of FIG. 2A) woven in the first direction 324 (which is the warp direction Wp) and arranged in a plurality of warp fiber layers including a first warp fiber layer 430, a second warp fiber layer 432, and a third warp fiber layer 434. The warp fiber tows 428 may be the same as the warp fiber tows 404 (FIG. 17). In addition, the outer shell strut trailing edge lug preform portion 412 includes the weft fiber tows 406 (e.g., the weft fiber tows 220 of FIG. 2A) that are woven orthogonal to the warp fiber tows 428 in the second direction 400 (e.g., a weft direction Wf) extending orthogonal to the first direction 324 (e.g., into and out of the view of FIG. 17), and the interlocking fiber tows 408 (e.g., the interlocking fiber tows 230 of FIG. 2A) are woven in the third direction (e.g., a Z direction ). As shown in FIG. 20, for the outer shell strut trailing edge lug preform portion 412, the warp fiber tows 428 of respective warp fiber layers are integrally woven with the warp fiber tows 394 of respective warp fiber layers of the outer shell frame portion 316. For example, within the outer shell strut trailing edge connection portion 426, the warp fiber tows 428 in the first warp fiber layer 430 are integrally woven with the warp fiber tows 394 of the first warp fiber layer 395 of the outer shell frame portion 316, the warp fiber tows 428 in the second warp fiber layer 432 are integrally woven with the warp fiber tows 394 of the second warp fiber layer 397 of the outer shell frame portion 316, and the warp fiber tows 428 of the third warp fiber layer 434 are integrally woven with the warp fiber tows 394 in the third warp fiber layer 399 of the outer shell frame portion 316. Thus, the foregoing illustrates an example of the outer shell strut trailing edge lug preform portion 412 being integrally woven with the outer shell frame portion 316 to connect the outer shell strut trailing edge lug preform portion 412 to the outer shell frame portion 316.

Referring again to FIG. 18, the outer shell strut pi-leg preform portion 414 includes a first bifurcated outer shell strut pi-leg preform portion 436 that is bifurcated from the outer shell frame portion 316, a second bifurcated outer shell strut pi-leg preform portion 438 that is also bifurcated from the outer shell frame portion 316, and an outer shell strut pi-leg connection portion 440 arranged between the first bifurcated outer shell strut pi-leg preform portion 436 and the second bifurcated outer shell strut pi-leg preform portion 438.

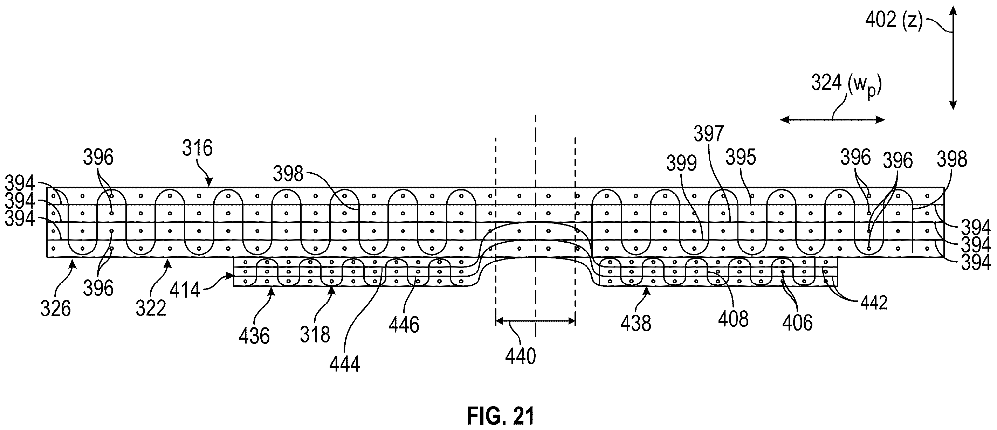

FIG. 21 is a cross-sectional view of a connection of the outer shell strut pi-leg preform portion 414 and the outer shell frame portion 316, taken at plane 21-21 of FIG. 18, according to an aspect of the present disclosure. The outer shell strut pi-leg preform portion 414 is a woven three-dimensional fabric (e.g., the FIG. 2A fabric) and is generally depicted with warp fiber tows 442 (e.g., the warp fiber tows 210 of FIG. 2A) woven in the first direction 324 (which is the warp direction Wp) and arranged in a plurality of warp fiber layers including a first warp fiber layer 444 and a second warp fiber layer 446. The warp fiber tows 442 may be the same as the warp fiber tows 404 (FIG. 17). In addition, the outer shell strut pi-leg preform portion 414 includes the weft fiber tows 406 (e.g., the weft fiber tows 220 of FIG. 2A) that are woven orthogonal to the warp fiber tows 442 in the second direction 400 (e.g., a weft direction Wf) extending orthogonal to the first direction 324 (e.g., into and out of the view of FIG. 17), and the interlocking fiber tows 408 (e.g., the interlocking fiber tows 230 of FIG. 2A) are woven in the third direction (e.g., a Z direction ). As shown in FIG. 21, for the outer shell strut pi-leg preform portion 414, the warp fiber tows 442 of respective warp fiber layers are integrally woven with the warp fiber tows 394 of respective warp fiber layers of the outer shell frame portion 316. For example, within the outer shell strut pi-leg connection portion 440, the warp fiber tows 442 in the first warp fiber layer 444 are integrally woven with the warp fiber tows 394 of the second warp fiber layer 397 of the outer shell frame portion 316, and the warp fiber tows 442 in the second warp fiber layer 446 are integrally woven with the warp fiber tows 394 of the third warp fiber layer 399 of the outer shell frame portion 316. Thus, the foregoing illustrates an example of the outer shell strut pi-leg preform portion 414 being integrally woven with the outer shell frame portion 316 to connect the outer shell strut pi-leg preform portion 414 to the outer shell frame portion 316.

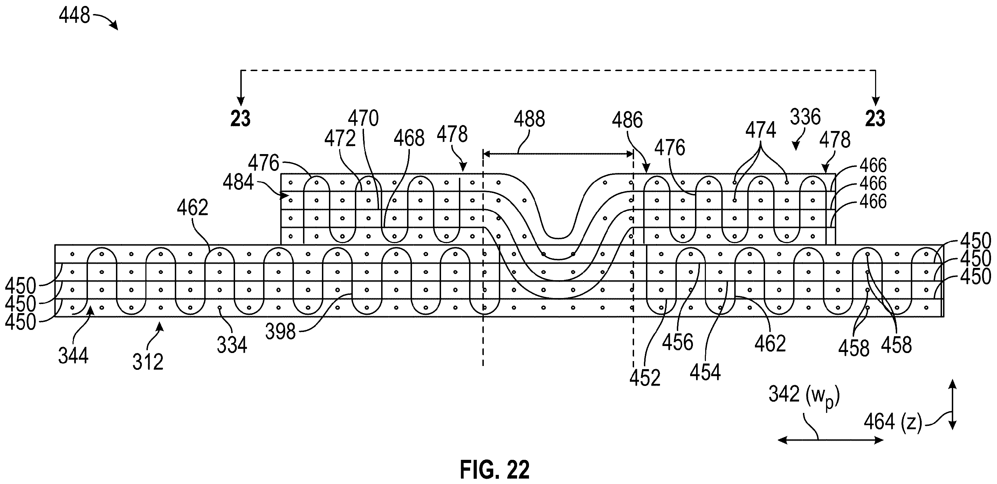

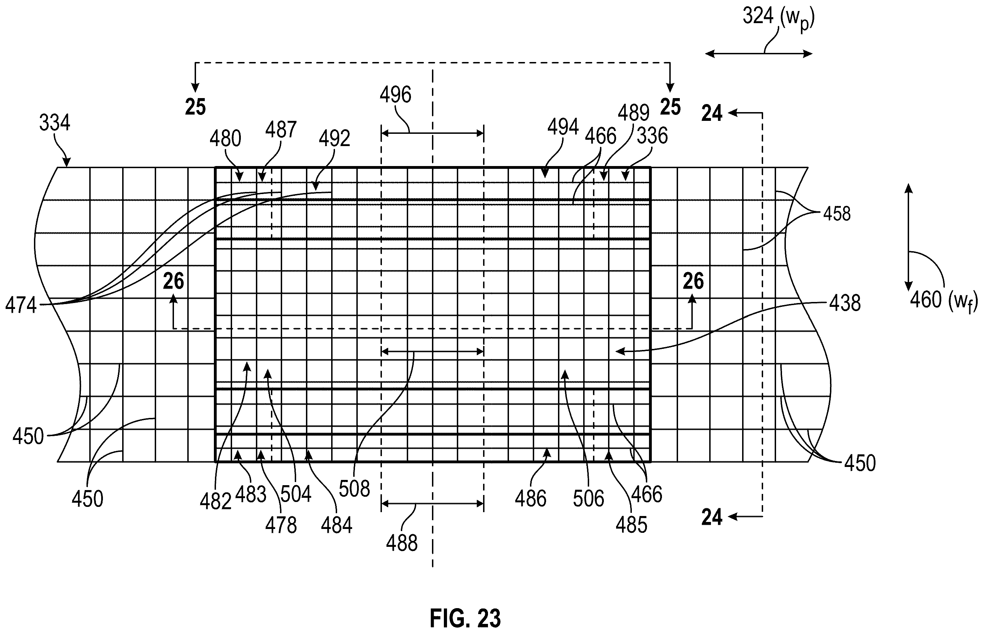

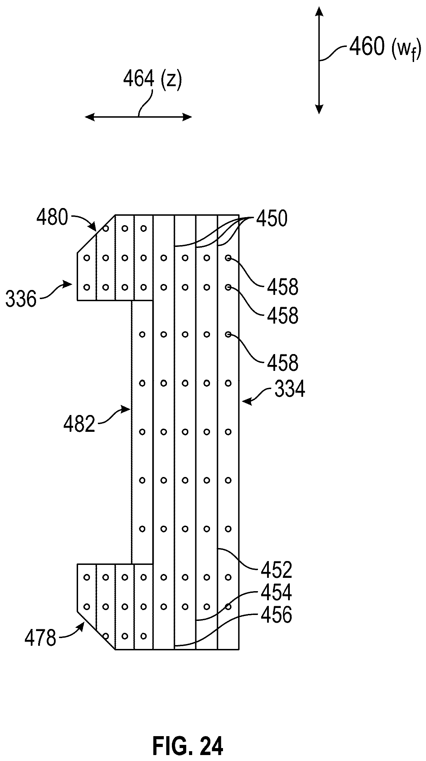

FIG. 22 is an enlarged, detail view of a connection of the inner hub strut preform portion 336 with the inner hub frame portion 334, taken at detail view 448 of FIG. 9, according to an aspect of the present disclosure. FIG. 23 is a top view of the connection of FIG. 22, taken at view 23-23 of FIG. 22, according to an aspect of the present disclosure. FIG. 24 is a cross-sectional view of the connection of FIG. 22, taken at plane 24-24 of FIG. 23, according to an aspect of the present disclosure. Referring collectively to FIG. 22, FIG. 23, and FIG. 24, as was described above with regard to FIG. 9, the inner hub frame portion 334 may be woven as a generally linear preform with any of the three-dimensional fabrics described above for FIG. 2A, FIG. 2B, FIG. 2C, or FIG. 2D. In FIG. 22, for the inner hub frame portion 334, the woven three-dimensional fabric of FIG. 2A is generally depicted with warp fiber tows 450 (e.g., the warp fiber tows 210 of FIG. 2A) woven in the first direction 342 (which is the warp direction Wp) and arranged in a plurality of warp fiber layers including a first warp fiber layer 452, a second warp fiber layer 454, and a third warp fiber layer 456. Each of the first warp fiber layer 452, the second warp fiber layer 454, and the third warp fiber layer 456 may be similar to the warp fiber layers 212 of FIG. 2A. In addition, the inner hub frame portion 334 includes weft fiber tows 458 (e.g., the weft fiber tows 220 of FIG. 2A) that are woven orthogonal to the warp fiber tows 450 in a second direction 460 (e.g., a weft direction Wf) extending orthogonal to the first direction 342 (e.g., into and out of the view of FIG. 22), and interlocking fiber tows 462 (e.g., the interlocking fiber tows 230 of FIG. 2A) are woven in a third direction 464 (e.g., a Z direction ). The interlocking fiber tows 462 are shown only in FIG. 22 for clarity and are not shown in FIG. 23 or in FIG. 24.

Similarly, for the inner hub strut preform portion 336, the woven three-dimensional fabric of FIG. 2A is generally depicted with warp fiber tows 466 (e.g., the warp fiber tows 210 of FIG. 2A) woven in the first direction 342 (which is the warp direction Wp) and arranged in a plurality of warp fiber layers including a first warp fiber layer 468, a second warp fiber layer 470, and a third warp fiber layer 472. **In** addition, the inner hub strut preform portion 336 includes weft fiber tows 474 (e.g., the weft fiber tows 220 of FIG. 2A) that are woven orthogonal to the warp fiber tows 466 in the second direction 460 (e.g., the weft direction Wf) extending orthogonal to the first direction 342 (e.g., into and out of the view of FIG. 22), and interlocking fiber tows 476 (e.g., the interlocking fiber tows 230 of FIG. 2A) are woven in the third direction 464 (e.g., the Z direction ). The interlocking fiber tows 476 are shown only in FIG. 22 for clarity and are not shown in FIG. 23 or in FIG. 24.

Referring again collectively to FIG. 22, to FIG. 23, and to FIG. 24, the inner hub strut preform portion 336 includes an inner hub strut leading edge lug preform portion 478, an inner hub strut trailing edge lug preform portion 480, and an inner hub strut pi-leg preform portion 482 extending between the inner hub strut leading edge lug preform portion 478 and the inner hub strut trailing edge lug preform portion 480. The inner hub strut leading edge lug preform portion 478 includes a first bifurcated inner hub strut leading edge lug preform portion 484 that is bifurcated from the inner hub frame portion 334, a second bifurcated inner hub strut leading edge lug preform portion 486 that is also bifurcated from the inner hub frame portion 334, and an inner hub strut leading edge connection portion 488 arranged between the first bifurcated inner hub strut leading edge lug preform portion 484 and the second bifurcated inner hub strut leading edge lug preform portion 486. The first bifurcated inner hub strut leading edge lug preform portion 484 includes a fifth connecting end 483 and the second bifurcated inner hub strut leading edge lug preform portion 486 includes a sixth connecting end 485. The fifth connecting end 483 and the sixth connecting end 485 will be described in more detail below, but, briefly, the fifth connecting end 483 and the sixth connecting end 485 are for connecting with corresponding bifurcated outer shell leading edge lug preform portions to form the leading edge of the strut preform 306.

As shown in FIG. 22, the warp fiber tows 466 of respective warp fiber layers of the inner hub strut leading edge connection portion 488 are integrally woven with the warp fiber tows 450 of respective warp fiber layers of the inner hub frame portion 334. For example, within the inner hub strut leading edge connection portion 488, the warp fiber tows 466 in the first warp fiber layer 468 are integrally woven with the warp fiber tows 450 of the first warp fiber layer 452 of the inner hub frame portion 334, the warp fiber tows 466 in the second warp fiber layer 470 are integrally woven with the warp fiber tows 450 of the second warp fiber layer 454 of the inner hub frame portion 334, and the warp fiber tows 450 of the third warp fiber layer 472 are integrally woven with the warp fiber tows 450 in the third warp fiber layer 456 of the inner hub frame portion 334. Thus, the foregoing illustrates an example of the inner hub strut leading edge lug preform portion 478 being integrally woven with the inner hub frame portion 334 to connect the inner hub strut leading edge lug preform portion 478 to the inner hub frame portion 334.

Referring again to FIG. 23, the inner hub strut trailing edge lug preform portion 480 includes a first bifurcated inner hub strut trailing edge lug preform portion 492 that is bifurcated from the inner hub frame portion 334, a second bifurcated inner hub strut trailing edge lug preform portion 494 that is also bifurcated from the inner hub frame portion 334, and an inner hub strut trailing edge connection portion 496 arranged between the first bifurcated inner hub strut trailing edge lug preform portion 492 and the second bifurcated inner hub strut trailing edge lug preform portion 494. The first bifurcated inner hub strut trailing edge lug preform portion 492 includes a seventh connecting end 487 and the second bifurcated inner hub strut trailing edge lug preform portion 494 includes an eighth connecting end 489. The seventh connecting end 487 and the eighth connecting end 489 will be described in more detail below, but, briefly, the seventh connecting end 487 and the eighth connecting end 489 are for connecting with corresponding bifurcated outer shell trailing edge lug preform portions to form the trailing edge of the strut preform 306.

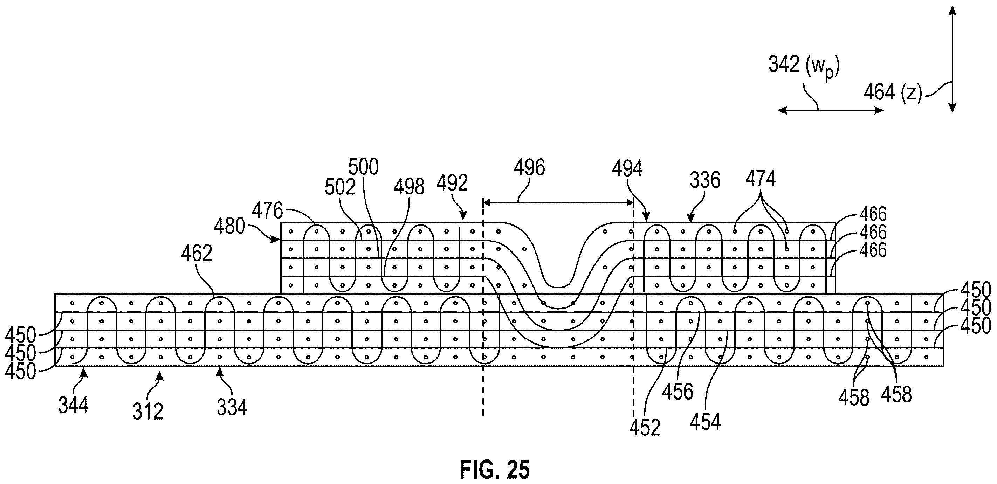

FIG. 25 is a cross-sectional view of a connection of the inner hub strut trailing edge lug preform portion 480 and the inner hub frame portion 334, taken at plane 25-25 of FIG. 23, according to an aspect of the present disclosure. The inner hub strut trailing edge lug preform portion 480 is a woven three-dimensional fabric (e.g., the FIG. 2A fabric) and is generally depicted with warp fiber tows 428 (e.g., the warp fiber tows 210 of FIG. 2A) woven in the first direction 342 (which is the warp direction Wp) and arranged in a plurality of warp fiber layers including a first warp fiber layer 498, a second warp fiber layer 500, and a third warp fiber layer 502. The warp fiber tows 466 may be the same as the warp fiber tows 466 (FIG. 22). In addition, the inner hub strut trailing edge lug preform portion 480 includes the weft fiber tows 474 (e.g., the weft fiber tows 220 of FIG. 2A) that are woven orthogonal to the warp fiber tows 466 in the second direction 460 (FIG. 23) (e.g., a weft direction Wf) extending orthogonal to the first direction 342 (e.g., into and out of the view of FIG. 25), and the interlocking fiber tows 476 (e.g., the interlocking fiber tows 230 of FIG. 2A) are woven in the third direction 464 (e.g., a Z direction ). As shown in FIG. 25, for the inner hub strut trailing edge lug preform portion 480, the warp fiber tows 466 of respective warp fiber layers are integrally woven with the warp fiber tows 450 of respective warp fiber layers of the inner hub frame portion 334. For example, within the inner hub strut trailing edge connection portion 496, the warp fiber tows 466 in the first warp fiber layer 498 are integrally woven with the warp fiber tows 450 of the first warp fiber layer 452 of the inner hub frame portion 334, the warp fiber tows 466 in the second warp fiber layer 500 are integrally woven with the warp fiber tows 450 of the second warp fiber layer 454 of the inner hub frame portion 334, and the warp fiber tows 466 of the third warp fiber layer 502 are integrally woven with the warp fiber tows 450 in the third warp fiber layer 456 of the inner hub frame portion 334. Thus, the foregoing illustrates an example of the inner hub strut trailing edge lug preform portion 480 being integrally woven with the inner hub frame portion 334 to connect the inner hub strut trailing edge lug preform portion 480 to the inner hub frame portion 334.

Referring again to FIG. 23, the inner hub strut pi-leg preform portion 482 includes a first bifurcated inner hub strut pi-leg preform portion 504 that is bifurcated from the inner hub frame portion 334, a second bifurcated inner hub strut pi-leg preform portion 506 that is also bifurcated from the inner hub frame portion 334, and an inner hub strut pi-leg connection portion 508 arranged between the first bifurcated inner hub strut pi-leg preform portion 504 and the second bifurcated inner hub strut pi-leg preform portion 506.

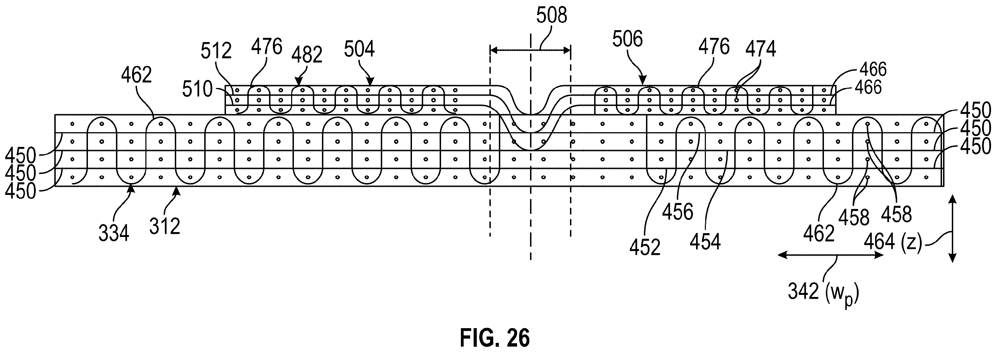

FIG. 26 is a cross-sectional view of a connection of the inner hub strut pi-leg preform portion 482 and the inner hub frame portion 334, taken at plane 26-26 of FIG. 23, according to an aspect of the present disclosure. The inner hub strut pi-leg preform portion 482 is a woven three-dimensional fabric (e.g., the FIG. 2A fabric) and is generally depicted with warp fiber tows 466 (e.g., the warp fiber tows 210 of FIG. 2A) woven in the first direction 342 (which is the warp direction Wp) and arranged in a plurality of warp fiber layers including a first warp fiber layer 510 and a second warp fiber layer 512. In addition, the inner hub strut pi-leg preform portion 482 includes the weft fiber tows 474 (e.g., the weft fiber tows 220 of FIG. 2A) that are woven orthogonal to the warp fiber tows 466 in the second direction 460 (FIG. 23)(e.g., a weft direction Wf) extending orthogonal to the first direction 342 (e.g., into and out of the view of FIG. 26), and the interlocking fiber tows 476 (e.g., the interlocking fiber tows 230 of FIG. 2A) are woven in the third direction 464 (e.g., a Z direction ). As shown in FIG. 26, for the inner hub strut pi-leg preform portion 482, the warp fiber tows 466 of respective warp fiber layers are integrally woven with the warp fiber tows 450 of respective warp fiber layers of the inner hub frame portion 334. For example, within the inner hub strut pi-leg connection portion 508, the warp fiber tows 466 in the first warp fiber layer 510 are integrally woven with the warp fiber tows 450 of the second warp fiber layer 454 of the inner hub frame portion 334, and the warp fiber tows 466 in the second warp fiber layer 512 are integrally woven with the warp fiber tows 450 of the third warp fiber layer 456 of the inner hub frame portion 334. Thus, the foregoing illustrates an example of the inner hub strut pi-leg preform portion 482 being integrally woven with the inner hub frame portion 334 to connect the inner hub strut pi-leg preform portion k482 to the inner hub frame portion 334.

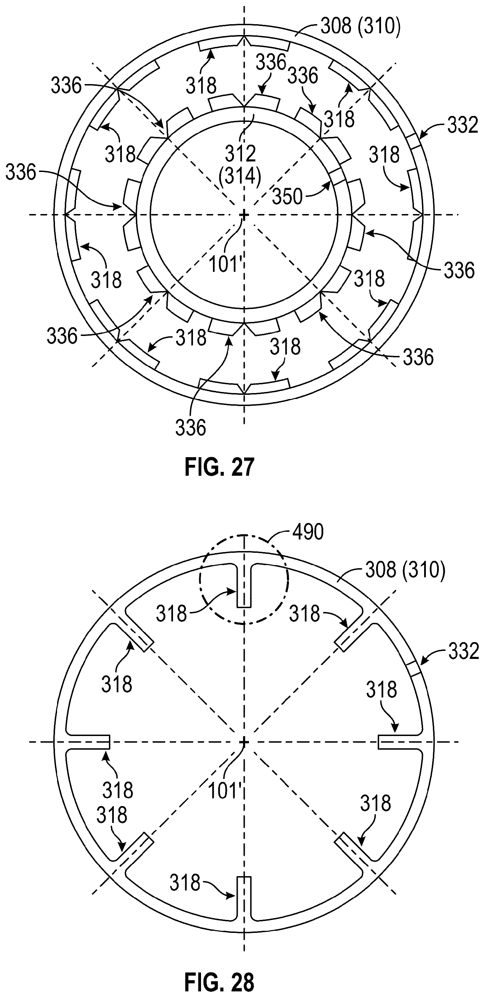

The following description provides an example of a method of forming the preform assembly 300 of FIG. 6 utilizing, for example, the three-dimensional outer shell frame preform 308 of FIG. 8 and the three-dimensional inner hub frame preform 312 of FIG. 9. FIG. 27 is a schematic, aft-looking layout of the outer shell hoop frame preform 310 and the inner hub hoop frame preform 314 before extension of the outer shell strut preform portions 318 and before extension of the inner hub strut preform portions 336. As was described above with regard to FIG. 8, the outer shell frame preform 308 is bent in the hoop direction 330 (FIG. 8) around the vane structure centerline axis 101' and the first outer shell frame preform connecting end 326 and the second outer shell frame preform connecting end 328 are connected together to form the outer shell connection 332 (FIG. 12). At this stage of the process of forming the preform assembly 300, each of the outer shell strut preform portions 318 remain as woven and as shown in FIG. 8 (i.e., remain in a non-extended state). Similarly, as described above with regard to FIG. 9, the inner hub frame preform 312 is bent in the hoop direction 348 (FIG. 9) around the vane structure centerline axis 101', and the first inner hub frame preform connecting end 344 and the second inner hub frame preform connecting end 346 are connected together to form the inner hub connection 350 (FIG. 15). At this stage of the process of forming the preform assembly 300, each of the inner hub strut preform portions 336 remains as woven and as shown in FIG. 9 (i.e., remain in a non-extended state).

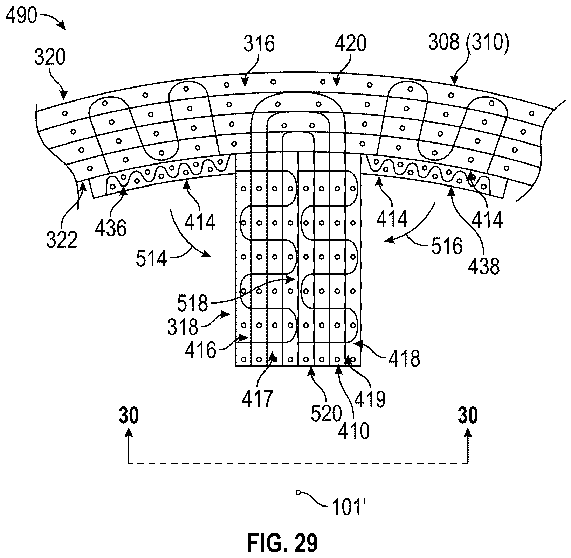

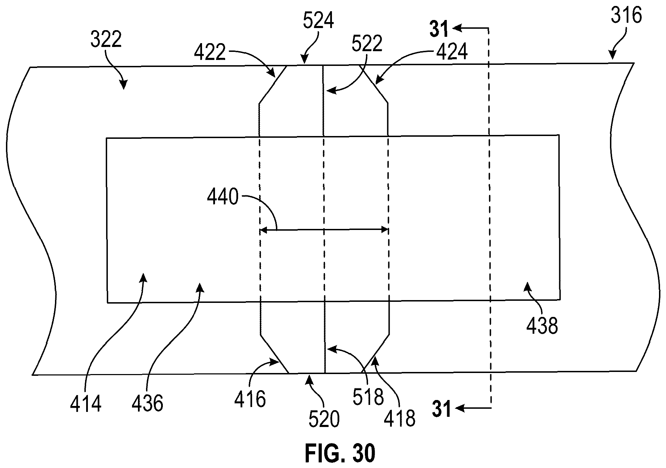

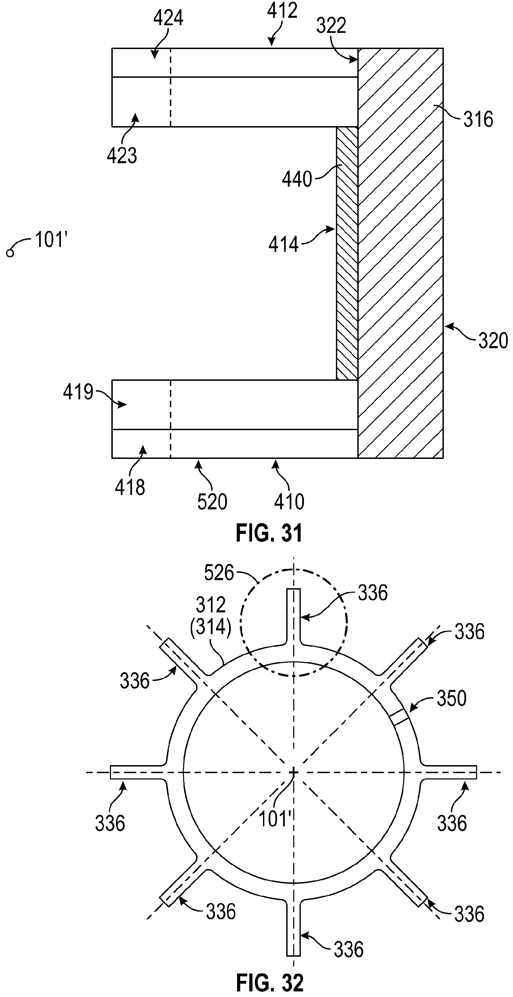

FIG. 28 is a schematic, aft-looking layout of the outer shell hoop frame preform 310 after extension of the outer shell strut preform portions 318 to extend inward from the outer shell hoop frame preform 310, according to an aspect of the present disclosure. FIG. 29 is an enlarged, detail view of a portion of the outer shell strut preform portion 318, taken at detail view 490 of FIG. 28, according to an aspect of the present disclosure. FIG. 30 is an outward-looking view of the outer shell strut preform portion 318 of FIG. 29, taken at view 30-30 of FIG. 29, according to an aspect of the present disclosure. FIG. 31 is a cross-sectional view of the outer shell strut preform portion 318 of FIG 30, taken at plane 31-31 of FIG. 30, according to an aspect of the present disclosure. Referring collectively to FIG. 28, to FIG. 29, to FIG. 30, and to FIG. 31, for the outer shell strut leading edge lug preform portion 410, the first bifurcated outer shell strut leading edge lug preform portion 416 and the second bifurcated outer shell strut leading edge lug preform portion 418 are arranged to extend inward from the inner side 322 of the outer shell frame portion 316 (e.g., to extend radially inward toward the vane structure centerline axis 101' as shown in FIG. 28). More specifically, the first bifurcated outer shell strut leading edge lug preform portion 416 is rotated in the direction of arrow 514, and the second bifurcated outer shell strut leading edge lug preform portion 418 is rotated in the direction of the arrow 516. At the present stage of the process of forming the preform assembly 300, the first bifurcated outer shell strut pi-leg preform portion 436 and the second bifurcated outer shell strut pi-leg preform portion 438 are not yet folded and remain extending along the inner side 322 of the outer shell frame portion 316. As shown in FIG. 29 and in FIG. 30, the first bifurcated outer shell strut leading edge lug preform portion 416 and the second bifurcated outer shell strut leading edge lug preform portion 418 abut against one another along an abutment line 518. Thus, the first bifurcated outer shell strut leading edge lug preform portion 416 and the second bifurcated outer shell strut leading edge lug preform portion 418 form an outer shell strut leading edge portion 520 of the strut preform 306 (FIG. 7).

Referring to FIG. 30 and to FIG. 31, similarly, for the outer shell strut trailing edge lug preform portion 412, the first bifurcated outer shell strut trailing edge lug preform portion 422 and the second bifurcated outer shell strut trailing edge lug preform portion 424 are arranged to extend inward from the inner side 322 of the outer shell frame portion 316 (e.g., to extend radially inward toward the vane structure centerline axis 101'). More specifically, the first bifurcated outer shell strut trailing edge lug preform portion 422 is rotated in the direction of arrow 5148 (FIG. 29) in the same manner as the first bifurcated outer shell strut leading edge lug preform portion 416, and the second bifurcated outer shell strut trailing edge lug preform portion 424 is rotated in the direction of the arrow 516 (FIG. 29) in the same manner as the second bifurcated outer shell strut leading edge lug preform portion 418. As shown in FIG. 30, the first bifurcated outer shell strut trailing edge lug preform portion 422 and the second bifurcated outer shell strut trailing edge lug preform portion 424 abut against one another along an abutment line 522. Thus, the first bifurcated outer shell strut trailing edge lug preform portion 422 and the second bifurcated outer shell strut trailing edge lug preform portion 424 form an outer shell strut trailing edge portion 524 of the strut preform 306 (FIG. 7).

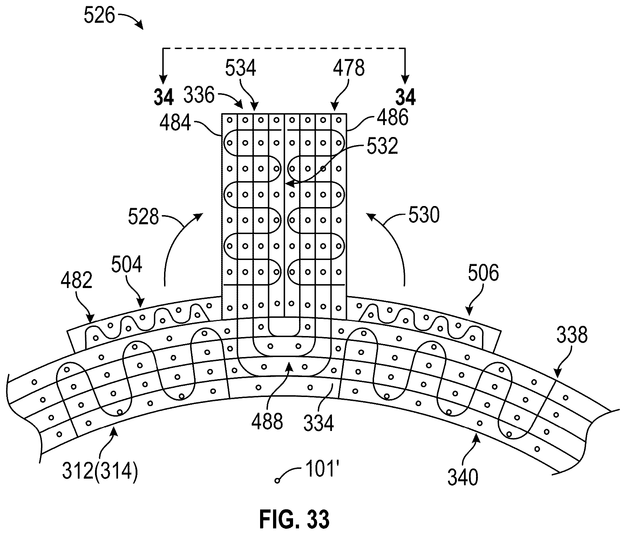

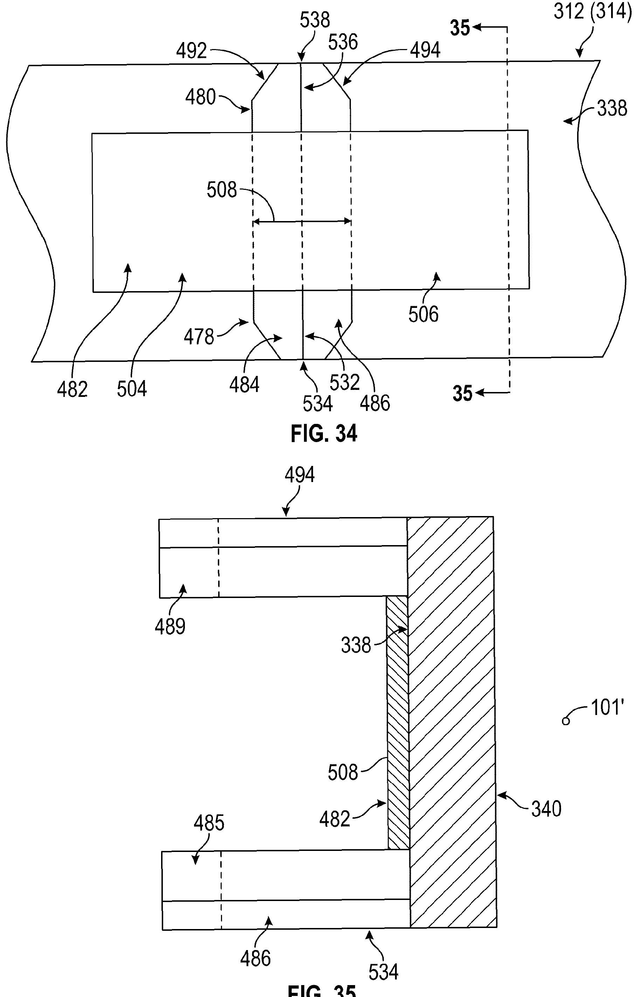

FIG. 32 is a schematic, aft-looking layout of the inner hub hoop frame preform 314 after extension of the inner hub strut preform portions 336 to extend outward from the inner hub hoop frame preform 314, according to an aspect of the present disclosure. FIG. 33 is an enlarged, detail view of a portion of the inner hub strut preform portion 336, taken at detail view 526 of FIG. 32, according to an aspect of the present disclosure. FIG. 34 is an inward-looking view of the inner hub strut preform portion 336 of FIG. 33, taken at view 34-34 of FIG. 33, according to an aspect of the present disclosure. FIG. 35 is a cross-sectional view of the inner hub strut preform portion 336 of FIG 34, taken at plane 35-35 of FIG. 34, according to an aspect of the present disclosure. Referring collectively to FIG. 32, to FIG. 33, to FIG. 34, and to FIG. 35, for the inner hub strut leading edge lug preform portion 478, the first bifurcated inner hub strut leading edge lug preform portion 484 and the second bifurcated inner hub strut leading edge lug preform portion 486 are arranged to extend outward from the outer side 322338 of the inner hub frame portion 334 (e.g., to extend radially outward away from the vane structure centerline axis 101' as shown in FIG. 32). More specifically, the first bifurcated inner hub strut leading edge lug preform portion 484 is rotated in the direction of arrow 528, and the second bifurcated inner hub strut leading edge lug preform portion 486 is rotated in the direction of the arrow 530. At the present stage of the process of forming the preform assembly 300, the first bifurcated inner hub strut pi-leg preform portion 504 and the second bifurcated inner hub strut pi-leg preform portion 506 are not yet folded and remain extending along the outer side 338 of the inner hub frame portion 334. As shown in FIG. 33 and in FIG. 34, the first bifurcated inner hub strut leading edge lug preform portion 484 and the second bifurcated inner hub strut leading edge lug preform portion 486 abut against one another along an abutment line 532. Thus, the first bifurcated inner hub strut leading edge lug preform portion 484 and the second bifurcated inner hub strut leading edge lug preform portion 486 form an inner hub strut leading edge portion 534 of the strut preform 306 (FIG. 7).

Referring to FIG. 34 and to FIG. 35, similarly, for the inner hub strut trailing edge lug preform portion 480, the first bifurcated inner hub strut trailing edge lug preform portion 492 and the second bifurcated inner hub strut trailing edge lug preform portion 494 are arranged to extend outward from the outer side 338 of the inner hub frame portion 334 (e.g., to extend radially outward away from the vane structure centerline axis 101'). More specifically, the first bifurcated inner hub strut trailing edge lug preform portion 492 is rotated in the direction of arrow 528 (FIG. 33) in the same manner as the first bifurcated inner hub strut leading edge lug preform portion 484, and the second bifurcated inner hub strut trailing edge lug preform portion 494 is rotated in the direction of the arrow 530 (FIG. 33) in the same manner as the second bifurcated inner hub strut leading edge lug preform portion 486. As shown in FIG. 34, the first bifurcated inner hub strut trailing edge lug preform portion 492 and the second bifurcated inner hub strut trailing edge lug preform portion 494 abut against one another along an abutment line 536. Thus, the first bifurcated inner hub strut trailing edge lug preform portion 492 and the second bifurcated inner hub strut trailing edge lug preform portion 494 form an inner hub strut trailing edge portion 538 of the strut preform 306 (FIG. 7).

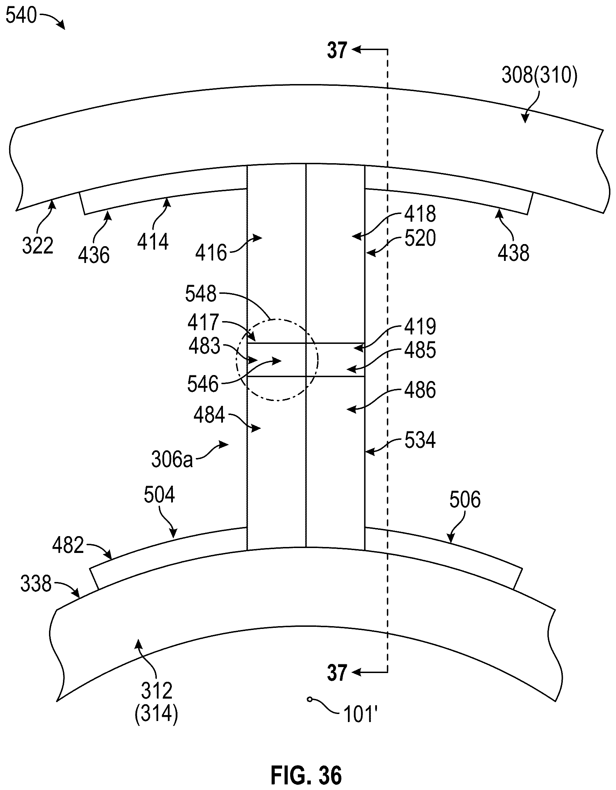

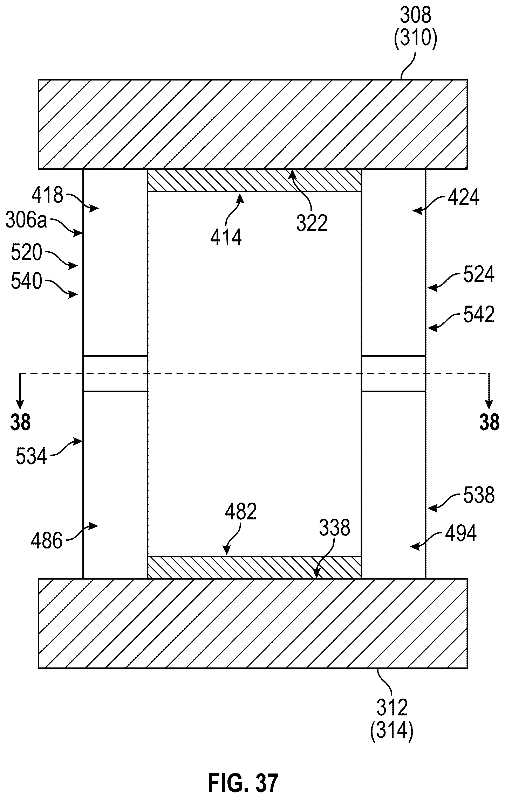

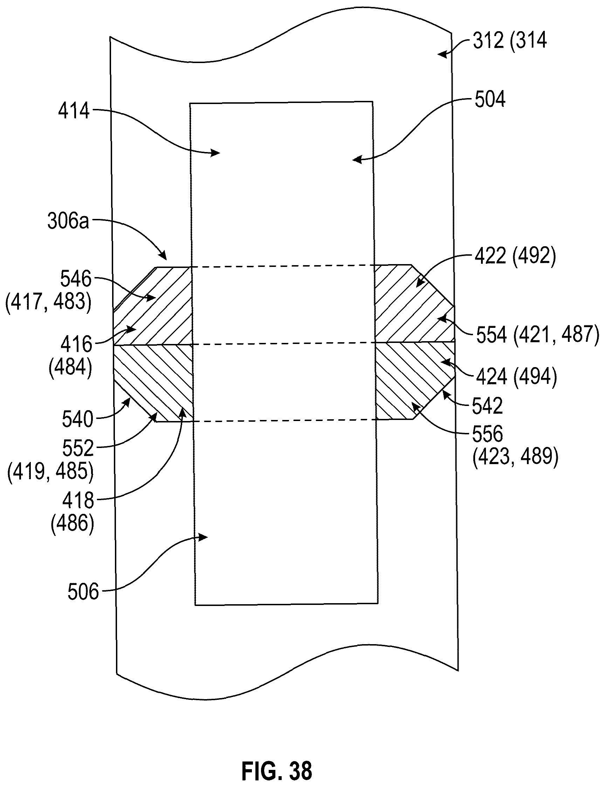

The next step in the process of forming the preform assembly 300 is to form each of the strut preforms 306 to connect the outer shell frame preform 302 and the inner hub frame preform 304 together. FIG. 36 is an enlarged, detail view of a first preliminary strut preform 306a, taken at detail view 570 of FIG. 7, according to an aspect of the present disclosure. FIG. 37 is a side view of the first preliminary strut preform 306a taken at view 37-37 of FIG. 36. FIG. 38 is a cross-sectional view through the first preliminary strut preform 306a, taken at plane 38-38 of FIG. 37, according to an aspect of the present disclosure. The first preliminary strut preform 306a refers to a state of the strut preform 306 during a first processing stage to form the strut preform 306. That is, the first preliminary strut preform 306a is a work-in-progress during the forming of the strut preform 306. Referring collectively to FIG. 36, to FIG. 37, and to FIG. 38, once the outer shell strut leading edge portion 520 and the outer shell strut trailing edge portion 524 are formed as described above with regard to FIG. 29 through FIG. 31, and once the inner hub strut leading edge portion 534 and the inner hub strut trailing edge portion 538 are formed as described above with regard to FIG. 33 to FIG. 35, the outer shell strut leading edge portion 520 and the inner hub strut leading edge portion 534 are connected together to form a strut preform leading edge 540, and the outer shell strut trailing edge portion 524 and the inner hub strut trailing edge portion 538 are connected together to form a strut preform trailing edge 542. At the present stage of forming the strut preform 306, the outer shell strut pi-leg preform portion 414 and the inner hub strut pi-leg preform portion 482 remain unfolded.

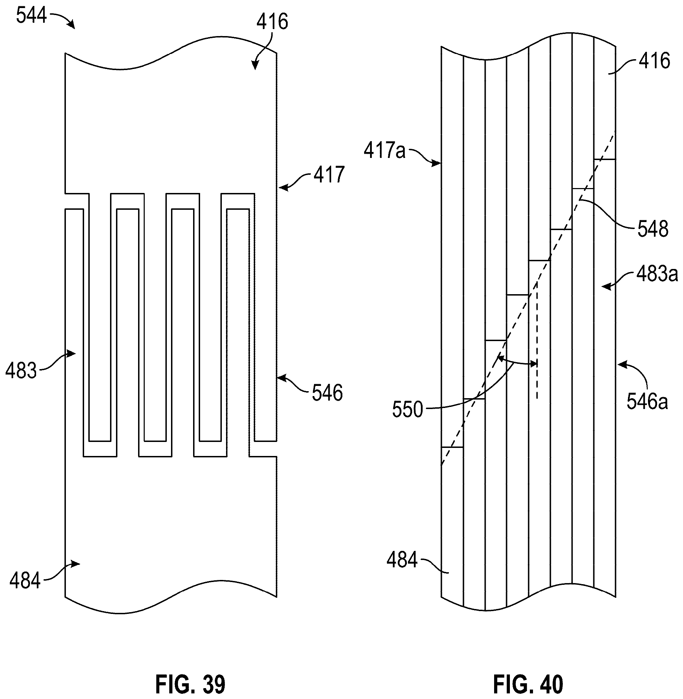

FIG. 39 is an enlarged, detail view of a first leading edge connection 546 of the first bifurcated outer shell strut leading edge lug preform portion 416 and the first bifurcated inner hub strut leading edge lug preform portion 484, taken at detail view 544 of FIG. 36, according to an aspect of the present disclosure. As will be described below, each of the first connecting end 417, the second connecting end 419, the third connecting end 421, and the fourth connecting end 423 may have a first connection end configuration, while the fifth connecting end 483, the sixth connecting end 485, the seventh connecting end 487, and the eighth connecting end 489 may have a second connection end configuration for connecting with the first connection end configuration. As shown in FIG. 39, the first connecting end 417 of the first bifurcated outer shell strut leading edge lug preform portion 416 may include a finger-joint configuration as the first connection end configuration, similar that shown in FIG. 10 for the first outer shell frame preform connecting end 326, and the fifth connecting end 483 of the first bifurcated inner hub strut leading edge lug preform portion 484 may include a finger-joint configuration as the second connection end configuration, similar to that of FIG. 11 for the second outer shell frame preform connecting end 328. The first connecting end 417 and the fifth connecting end 483 are then connected together in the same manner described with regard to FIG. 12 to form a first leading edge connection 546. In FIG. 38, the first leading edge connection 546 is shown to include the first connecting end 417 and the fifth connecting end 483 in parentheses due to the overlapping of the first connecting end 417 and the fifth connecting end 483 at plane 38-38.

FIG. 40 depicts an alternate first leading edge connection 546a to that shown in FIG. 39, according to an aspect of the present disclosure. The alternate first leading edge connection 546a may be similar to the arrangement of FIG. 16 that includes the scarf joint. Thus, for the alternate first leading edge connection 546a, an alternate first connecting end 417a for the first bifurcated outer shell strut leading edge lug preform portion 416 may be arranged to have staggered layers arranged along a scarf angle line 548. In addition, an alternate fifth connecting end 483a for the first bifurcated inner hub strut leading edge lug preform portion 484 may be arranged to have staggered layers arranged along the scarf angle line 548. The scarf angle line 548 may be arranged at a scarf angle 550, which may be forty-five degrees, or may be any other angle.

Returning to FIG. 36, FIG. 37, and FIG. 38, a second leading edge connection 552 may be formed by connecting the second connecting end 419 of the second bifurcated outer shell strut leading edge lug preform portion 418 and the sixth connecting end 485 of the second bifurcated inner hub strut leading edge lug preform portion 486. The second leading edge connection 552 may be formed in the same manner as the first leading edge connection 546. In addition, a first trailing edge connection 554 may be formed by connecting the third connecting end 421 (FIG. 18) of the first bifurcated outer shell strut trailing edge lug preform portion 422 and the seventh connecting end 487 (FIG. 23) of the first bifurcated inner hub strut trailing edge lug preform portion 492. The first trailing edge connection 554 may be formed in the same manner as the first leading edge connection 546. Further, a second trailing edge connection 556 may be formed by connecting the fourth connecting end 423 (FIG. 18) of the second bifurcated outer shell strut trailing edge lug preform portion 424 and the eighth connecting end 489 (FIG. 23) of the second bifurcated inner hub strut trailing edge lug preform portion 494. The second trailing edge connection 556 may be formed in the same manner as the first leading edge connection 546.

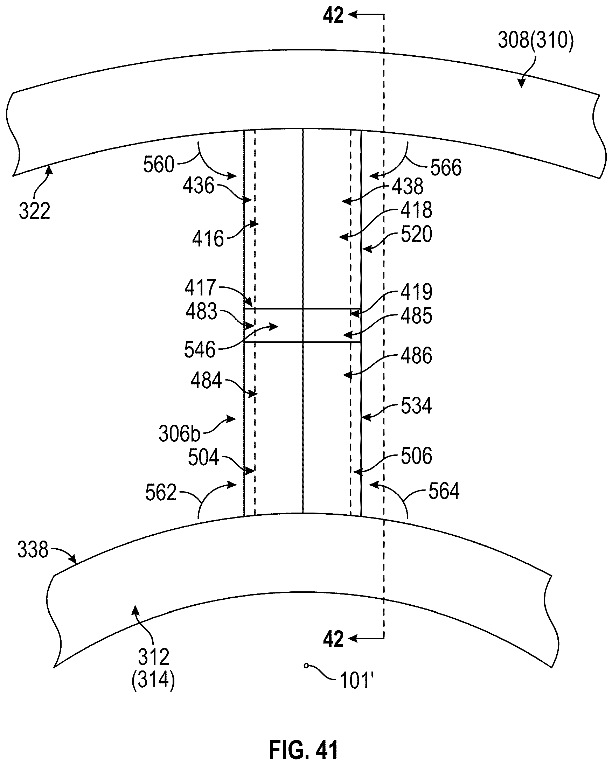

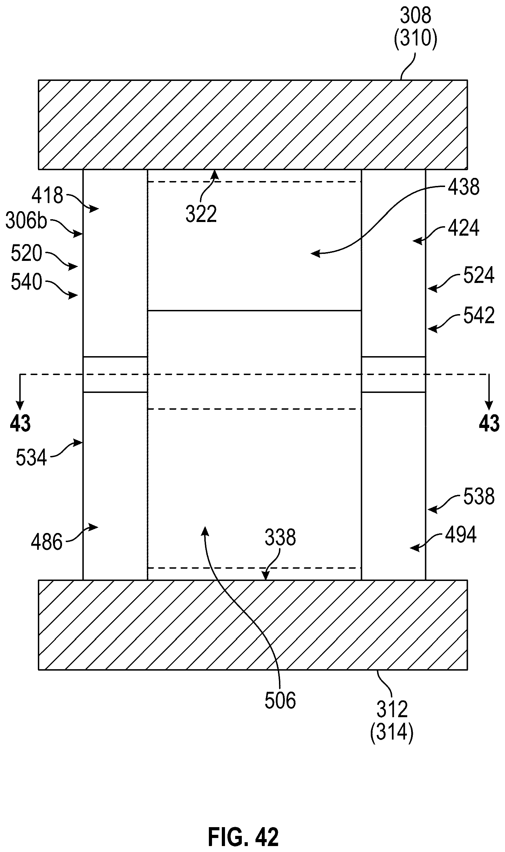

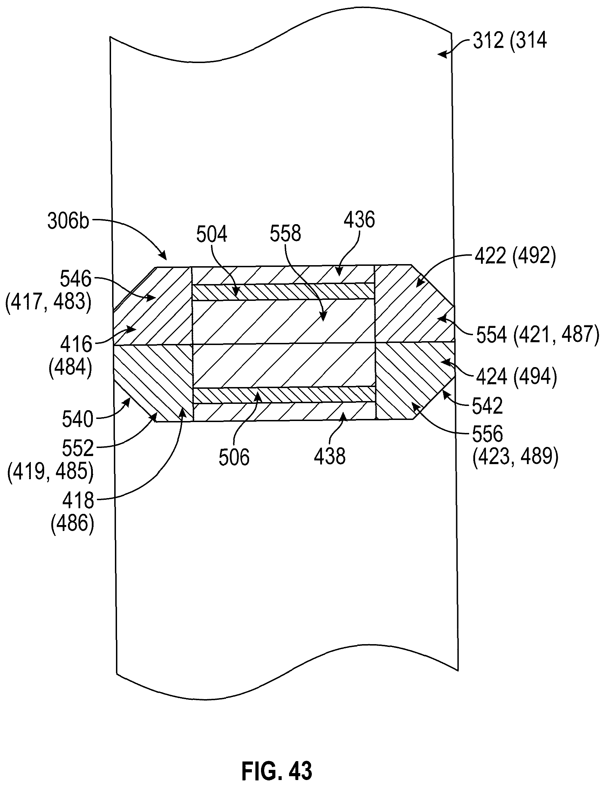

FIG. 41 is a view of a second preliminary strut preform 306b to the first preliminary strut preform 306a shown in FIG. 36, according to an aspect of the present disclosure. FIG. 42 is a side view of the second preliminary strut preform 306b taken at view 42-42 of FIG. 41. FIG. 43 is a cross-sectional view through the second preliminary strut preform 306b, taken at plane 43-43 of FIG. 42, according to an aspect of the present disclosure. The second preliminary strut preform 306b refers to a state of the strut preform 306 during a second processing stage to form the strut preform 306. That is, the second preliminary strut preform 306b is a continued work-in-progress from the first preliminary strut preform 306a during the forming of the strut preform 306. Referring collectively to FIG. 41, to FIG. 42, and to FIG. 43, once the strut preform leading edge 540 and the strut preform trailing edge 542 have been formed as described above, a strut core filler material 558 (FIG. 43) may be inserted to extend between the strut preform leading edge 540 and the strut preform trailing edge 542, and to extend between the inner side 322 of the outer shell frame preform 308 and the outer side 338 of the inner hub frame preform 312. The strut core filler material 558 may be, for example, a foam block, or any other type of filler material utilized in aircraft composite structures. Next, the first bifurcated inner hub strut pi-leg preform portion 504 is folded, from the position shown in FIG. 36, in the direction of arrow 562 to abut against the strut core filler material 558, and the first bifurcated outer shell strut pi-leg preform portion 436 is folded, from the position shown in FIG. 36, in the direction of arrow 560 to overlap the first bifurcated inner hub strut pi-leg preform portion 504. In a similar manner, the second bifurcated inner hub strut pi-leg preform portion 506 is folded, from the position shown in FIG. 36, in the direction of arrow 564 to abut against the strut core filler material 558, and the second bifurcated outer shell strut pi-leg preform portion 438 is folded, from the position shown in FIG. 36, in the direction of arrow 566 to overlap the second bifurcated inner hub strut pi-leg preform portion 506.

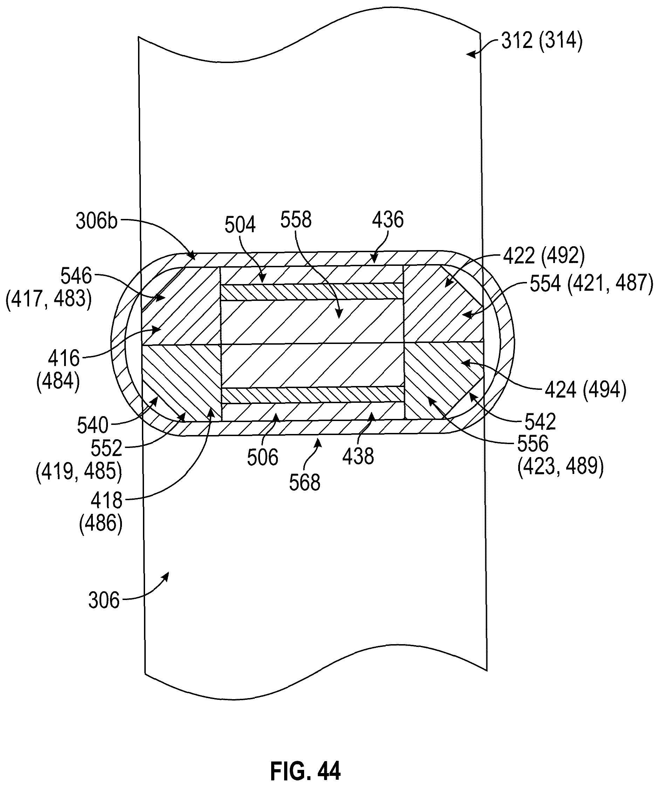

FIG. 44 is a cross-sectional view of the strut preform 306, according to an aspect of the present disclosure. In FIG. 44, once the second preliminary strut preform 306b (FIG. 43) is completed, one or more additional layers 568 may be applied to wrap around the second preliminary strut preform 306b to complete forming the strut preform 306. The one or more additional layers 568 may be, for example, two-dimensional layers and may be wrapped around the periphery of the second preliminary strut preform 306b and may also extend from the outer side 338 (FIG. 42) of the inner hub frame preform 312 to the inner side 322 (FIG. 42) of the outer shell frame preform 308.

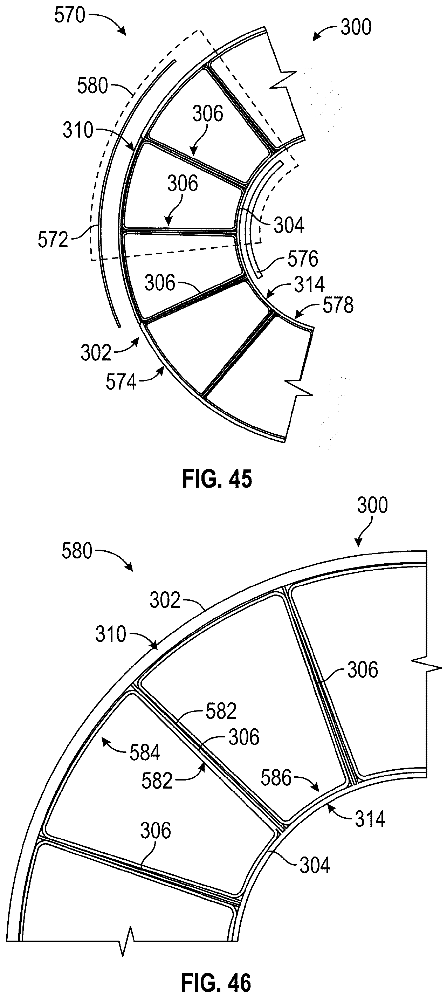

FIG. 45 is an enlarged view of a portion of the preform assembly 300 of FIG. 7, taken at detail view 570 of FIG. 7, according to an aspect of the present disclosure. In FIG. 45, one or more additional preform layers 572 may be added to an exterior side 574 of the outer shell hoop frame preform 310. The one or more additional preform layers 572 may be added to increase a thickness of the outer shell hoop frame preform 310. The additional preform layers 572 may be assembled to the preform assembly 300 either before, or after, being installed onto a mold tooling structure. The additional preform layers 572 may be either three-dimensional woven fabric preforms, or may be two-dimensional preforms or layers. Further, one or more additional preform layers 576 may be added to the inner hub hoop frame preform 314 by being layered onto an interior side 578 of the inner hub hoop frame preform 314. The one or more additional preform layers 576 may be added to increase a thickness of the inner hub hoop frame preform 314. The additional preform layers 576 may also be added to the inner hub hoop frame preform 314 either before, or after the inner hub hoop frame preform 314 is installed onto the mold tooling structure. The additional preform layers 576 may also be either three-dimensional woven fabric preforms, or two-dimensional preforms or layers.

FIG. 46 is an enlarged view of a portion of the preform assembly 300 of FIG. 45, taken at detail view 580 of FIG. 45, according to an aspect of the present disclosure. In FIG. 46, one or more additional vane preform layers 582 may be added to each of the strut preforms 306, in-between respective ones of the strut preforms 306 along an interior side 584 of the outer shell hoop frame preform 310, and along an exterior side 586 of the inner hub hoop frame preform 314. The additional vane preform layers 582 may be in the form of three-dimensional woven fabric layers, two-dimensional woven fabric layers, or a woven or a braided sock that may be added to thicken the bifurcated strut preforms 306 and also to build and to form the airfoil structure for each of the guide vanes 158 (FIG. 4).

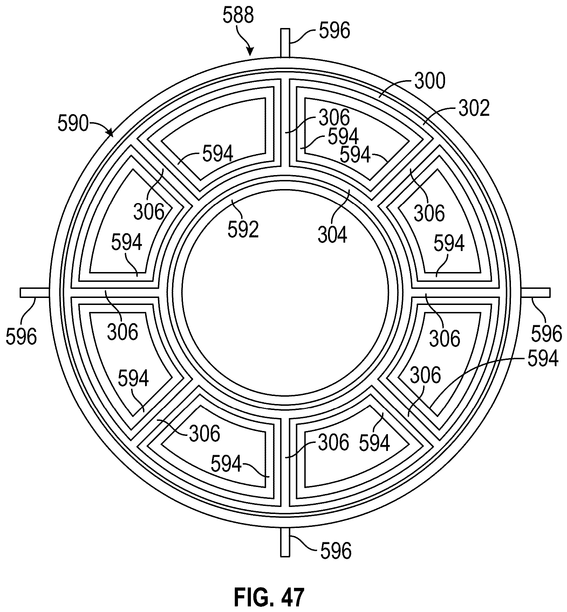

FIG. 47 is a schematic view of a mold tooling structure 588 that may be utilized in manufacturing the guide vane structure 161 of FIG. 4, according to an aspect of the present disclosure. The mold tooling structure 588 includes an outer shell mold portion 590 for forming the outer shell 165 (FIG. 4), an inner hub mold portion 592 for forming the inner hub 167 (FIG. 4), and a plurality of strut mold portions 594 for forming the guide vanes (struts) 158. The preform assembly 300 is formed and assembled as described above with regard to any of FIGS. 7 to 44, and the preform assembly 300 may be assembled utilizing the mold tooling structure 588. For example, the outer shell hoop frame preform 310 may be assembled onto the outer shell mold portion 590, and the inner hub hoop frame preform 314 may be assembled onto the inner hub mold portion 592, and then each of the strut preforms 306 may be assembled via the strut mold portions 594. The mold tooling structure 588 also includes one or more injectors 596 through which a matrix material (as described above) may then be injected into the mold tooling structure 588 to generate an impregnated preform assembly within the mold tooling structure 588. A curing process may then be applied to the impregnated preform assembly within the mold tooling structure 588 to obtain a molded composite structure. For example, the mold tooling structure 588 may include the ability to apply pressure and heat to the impregnated preform assembly to apply the curing process, or the mold tooling structure 588 may be provided to an autoclave to institute a curing process. The cured molded composite structure can then be removed from the mold tooling structure 588 for additional machining or other processing to complete the manufacturing process of the composite component.

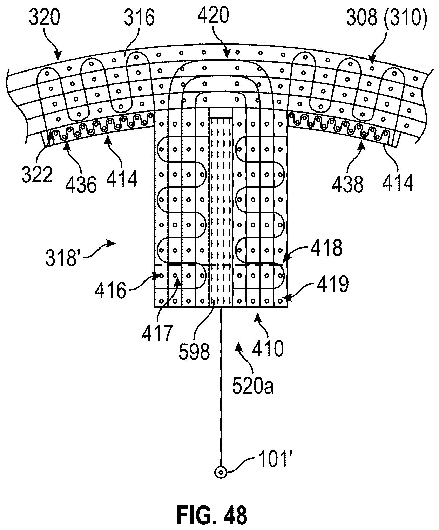

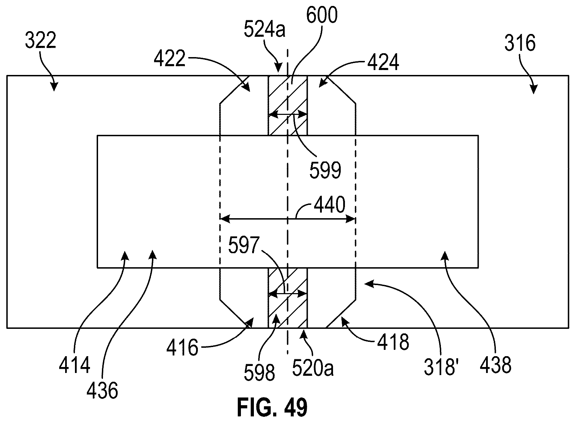

FIG. 48 is a corresponding view to that of FIG. 29, depicting an alternate portion of the outer shell strut preform portion 318', according to an aspect of the present disclosure. FIG. 49 is a corresponding view to that of FIG. 30, depicting the alternate portion of the outer shell strut preform portion 318', according to an aspect of the present disclosure. In FIG. 48 and in FIG. 49, elements that are the same as those in FIG. 29 and in FIG. 30, respectively, include the same reference numerals and the above description of those elements with regard to FIG. 29 and FIG. 30 is equally applicable for FIG. 48 and FIG. 49. Referring to FIG. 48 and to FIG. 49, one difference between the FIG. 48 and FIG. 49 aspect as compared with the FIG. 29 and FIG. 30 aspect is the inclusion of a leading edge filler material 598 and a trailing edge filler material 600. In the arrangement of FIG. 48 and FIG. 49, the first bifurcated outer shell strut leading edge lug preform portion 416 and the second bifurcated outer shell strut leading edge lug preform portion 418 are arranged to extend from the inner side 322 of the outer shell frame portion 316 with a gap 597 between each other. In the same manner, the first bifurcated outer shell strut trailing edge lug preform portion 422 and the second bifurcated outer shell strut trailing edge lug preform portion 424 are arranged to extend from the inner side 322 of the outer shell frame portion 316 with a gap 599 between each other. As shown in FIG. 48 and in FIG. 49, the leading edge filler material 598 is arranged in the gap 597 between the first bifurcated outer shell strut leading edge lug preform portion 416 and the second bifurcated outer shell strut leading edge lug preform portion 418, and the trailing edge filler material 600 is arranged in the gap 599 between the first bifurcated outer shell strut trailing edge lug preform portion 422 and the second bifurcated outer shell strut trailing edge lug preform portion 424. Thus, the inclusion of the leading edge filler material 598 provides for forming an alternate outer shell leading edge portion 520a, and the inclusion of the trailing edge filler material 600 provides for forming an alternate outer shell trailing edge portion 524a.

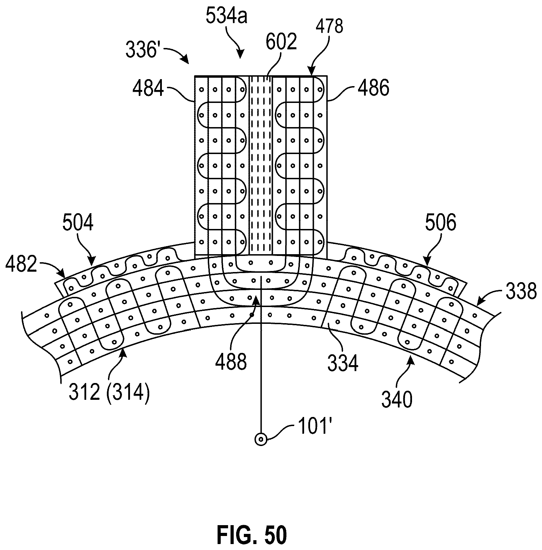

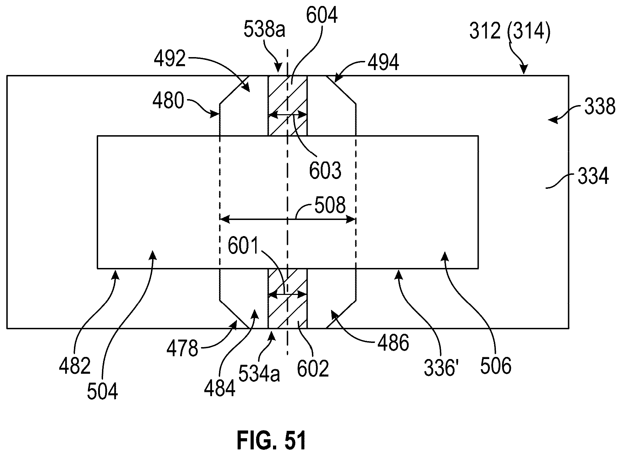

FIG. 50 is a corresponding view to that of FIG. 33, depicting an alternate portion of the inner hub strut preform portion 336', according to an aspect of the present disclosure. FIG. 51 is a corresponding view to that of FIG. 34, depicting the alternate portion of the inner hub strut preform portion 336', according to an aspect of the present disclosure. In FIG. 50 and in FIG. 51, elements that are the same as those in FIG. 33 and in FIG. 34, respectively, include the same reference numerals and the above description of those elements with regard to FIG. 33 and FIG. 34 is equally applicable for FIG. 50 and FIG. 51. Referring to FIG. 50 and to FIG. 51, one difference between the FIG. 50 and the FIG. 51 aspect as compared with the FIG. 33 and the FIG. 34 aspect is the inclusion of a leading edge filler material 602 and a trailing edge filler material 604. In the arrangement of FIG. 50 and FIG. 51, the first bifurcated inner hub strut leading edge lug preform portion 484 and the second bifurcated inner hub strut leading edge lug preform portion 486 are arranged to extend from the outer side 338 of the inner hub frame portion 334 with a gap 601 between each other. In the same manner, the first bifurcated inner hub strut trailing edge lug preform portion 492 and the second bifurcated inner hub strut trailing edge lug preform portion 494 are arranged to extend from the outer side 338 of the inner hub frame portion 334 with a gap 603 between each other. As shown in FIG. 50 and in FIG. 51, the leading edge filler material 602 is arranged in the gap 601 between the first bifurcated inner hub strut leading edge lug preform portion 484 and the second bifurcated inner hub strut leading edge lug preform portion 486, and the trailing edge filler material 604 is arranged in the gap 603 between the first bifurcated inner hub strut trailing edge lug preform portion 492 and the second bifurcated inner hub strut trailing edge lug preform portion 494. Thus, the inclusion of the leading edge filler material 602 provides for forming an alternate inner hub leading edge portion 534a, and the inclusion of the trailing edge filler material 604 provides for forming an alternate inner hub trailing edge portion 538a.

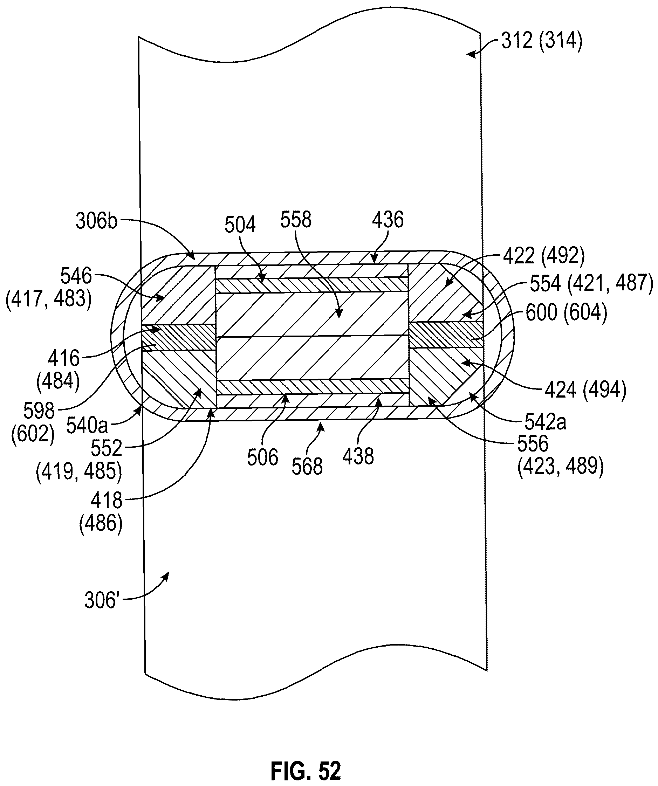

FIG. 52 is a corresponding view to that of FIG. 44 of an alternate strut preform 306' to that shown in FIG. 44, according to an aspect of the present disclosure. In FIG. 52, elements that are the same as those in FIG. 44 include the same reference numerals and the above description of those elements with regard to FIG. 44 is equally applicable for FIG. 52. One difference between the FIG. 52 aspect and the FIG. 44 aspect is the inclusion of the alternate outer shell strut preform portion 318' of FIG. 48 and FIG. 49, and the inclusion of the alternate inner hub strut preform portion 336' of FIG. 50 and FIG. 51. The alternate outer shell strut preform portion 318' and the alternate inner hub strut preform 336' are connected together in the same manner described above with regard to FIG. 36 through FIG. 43 to form an alternate strut preform leading edge 540a and an alternate strut preform trailing edge 542a. The alternate strut preform 306' is then completed in the same manner as the strut preform 306 as described above with regard to FIG. 44.

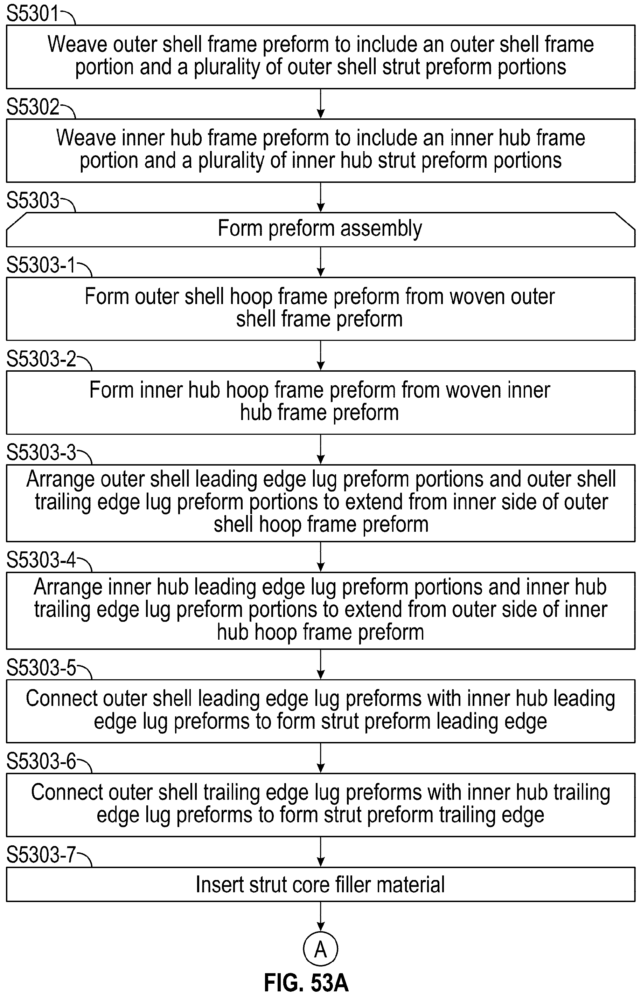

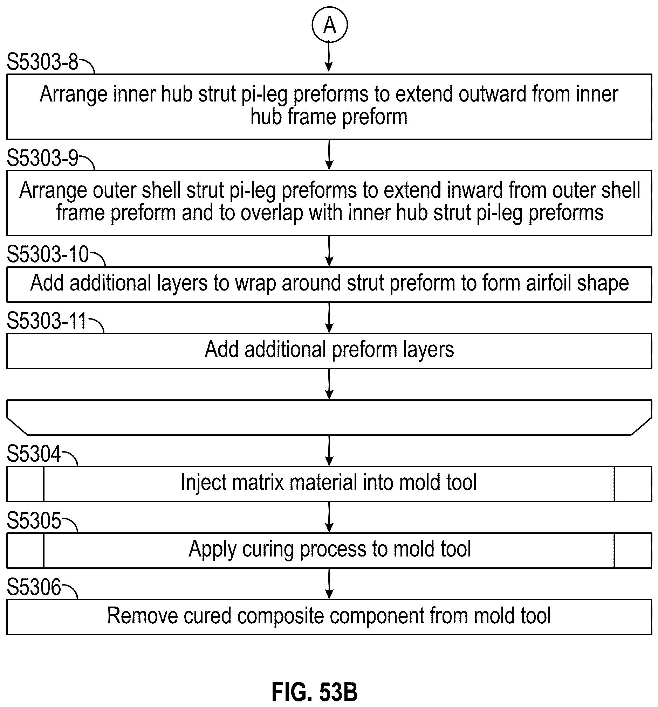

FIG. 53A and FIG. 53B, together, depict a flowchart of process steps for a method of manufacturing a composite component, according to an aspect of the present disclosure. The method described herein may be implemented to form the vane structure 161 as described above with regard to any of FIG. 1 to FIG. 52. In step S5301, the three-dimensional outer shell frame preform 308 (FIG. 8) is woven to include the outer shell frame portion 316 having the inner side 322 and the outer side 320, and the plurality of outer shell strut preform portions 318. In step S5301, as was described above with regard to FIG. 17 to FIG. 21, each of the outer shell strut preform portions 318 is integrally woven in part connected with the outer shell frame portion 316. That is, in the weaving of step S5301, each outer shell strut preform portion 318 is woven to include the outer shell strut leading edge lug preform portion 410 having the first bifurcated outer shell strut leading edge lug preform portion 416, the second bifurcated outer shell strut leading edge lug preform portion 418, and the outer shell strut leading edge connection portion 420. Each outer shell strut preform portion 318 is further woven to include the outer shell strut pi-leg preform portion 414 (FIG. 21) having the first bifurcated outer shell strut pi-leg preform portion 436, the second bifurcated outer shell strut pi-leg preform portion 438, and the outer shell strut pi-leg connection portion 440. Further, each outer shell strut preform portion 318 is woven to include the outer shell strut trailing edge lug preform portion 412 having the first bifurcated outer shell strut trailing edge lug preform portion 422, the second bifurcated outer shell strut trailing edge lug preform portion 424, and the outer shell strut trailing edge connection portion 426.

In step S5302, the three-dimensional inner hub frame preform 312 (FIG. 9) is woven to include the inner hub frame portion 334 having the inner side 340 and the outer side 338, and the plurality of inner hub strut preform portions 336. In step S5302, as was described above with regard to FIG. 22 to FIG. 26, each of the inner hub strut preform portions 336 is integrally woven in part connected with the inner hub frame portion 334. That is, in the weaving of step S5302, each inner hub strut preform portion 336 is woven to include the inner hub strut leading edge lug preform portion 478 having the first bifurcated inner hub strut leading edge lug preform portion 484, the second bifurcated inner hub strut leading edge lug preform portion 486, and the inner hub strut leading edge connection portion 488. Each inner hub strut preform portion 336 is further woven to include the inner hub strut pi-leg preform portion 482 (FIG. 23) having the first bifurcated inner hub strut pi-leg preform portion 504, the second bifurcated inner hub strut pi-leg preform portion 506, and the inner hub strut pi-leg connection portion 508. Further, each inner hub strut preform portion 336 is woven to include the inner hub strut trailing edge lug preform portion 480 (FIG. 25) having the first bifurcated inner hub strut trailing edge lug preform portion 492, the second bifurcated inner hub strut trailing edge lug preform portion, 494, and the inner hub strut trailing edge connection portion 496.

In step S5303, the preform assembly 300 (FIG. 7) is formed. In a first step S5303-1 in forming the preform assembly 300, as was described above with regard to FIG. 8 through FIG. 16 and FIG. 27, the outer shell hoop frame preform 310 (FIG. 27). is formed by connecting together the first outer shell frame preform connecting end 326 and the second outer shell frame preform connecting end 328. In step S5303-2, in a similar manner, the inner hub hoop frame preform 314 (FIG. 27) is formed by connecting together the first inner hub frame preform connecting end 344 and the second inner hub frame preform connecting end 346.

In step S5303-3, for each of the outer shell strut preform portions 318, the outer shell strut leading edge lug preform portion 410 and the outer shell strut trailing edge lug preform portion 412 are arranged to extend inward (i.e., toward the vane centerline axis 101') as shown in FIG. 28. For the outer shell strut leading edge lug preform portion 410, the foregoing constitutes, as was described above with regard to FIG. 29 to FIG. 31, arranging the first bifurcated outer shell strut leading edge lug preform portion 416 to extend inward from the outer shell frame portion 316, and arranging the second bifurcated outer shell strut leading edge lug preform portion 418 to extend inward from the outer shell frame portion 316. For the outer shell strut trailing edge lug preform portion 412, the foregoing constitutes, as was described above with regard to FIG. 29 to FIG. 31, arranging the first bifurcated outer shell strut trailing edge lug preform portion 422 to extend inward from the outer shell frame portion 316, and arranging the second bifurcated outer shell strut trailing edge lug preform portion 424 to extend inward from the outer shell frame portion 316.

Similarly, in step S5303-4, for each of the inner hub strut preform portions 336, the inner hub strut leading edge lug preform portion 478 and the inner hub strut trailing edge lug preform portion 480 are arranged to extend outward (i.e., toward the vane centerline axis 101') as shown in FIG. 32. For the inner hub strut leading edge lug preform portion 478, the foregoing constitutes, as was described above with regard to FIG. 33 to FIG. 35, arranging the first bifurcated inner hub strut leading edge lug preform portion 484 to extend outward from the inner hub frame portion 334, and arranging the second bifurcated inner hub strut leading edge lug preform portion 486 to extend outward from the inner hub frame portion 334. For the inner hub strut trailing edge lug preform portion 480, the foregoing constitutes, as was described above with regard to FIG. 33 to FIG. 35, arranging the first bifurcated inner hub strut trailing edge lug preform portion 492 to extend outward from the inner hub frame portion 334, and arranging the second bifurcated inner hub strut trailing edge lug preform portion 494 to extend outward from the inner hub frame portion 334.

In step S5303-5, the outer shell strut leading edge lug preform portion 410 is connected with the inner hub strut leading edge lug preform portion 478. As described above with regard to FIG. 36 to FIG. 40, the first connecting end 417 of the first bifurcated outer shell strut leading edge lug preform portion 416 is connected with the fifth connecting end 483 of the first bifurcated inner hub strut leading edge lug preform portion 484, and the second connecting end 419 of the second bifurcated outer shell strut leading edge lug preform portion 418 is connected with the sixth connecting end 485 of the second bifurcated inner hub strut leading edge lug preform portion 486.

Similarly, in step S5303-6, the outer shell strut trailing edge lug preform portion 412 is connected with the inner hub strut trailing edge lug preform portion 480. As described above with regard to FIG. 36 to FIG. 40, the third connecting end 421 of the first bifurcated outer shell strut trailing edge lug preform portion 422 is connected with the seventh connecting end 487 of the first bifurcated inner hub strut trailing edge lug preform portion 492, and the fourth connecting end 423 of the second bifurcated outer shell strut trailing edge lug preform portion 424 is connected with the eighth connecting end 489 of the second bifurcated inner hub strut trailing edge lug preform portion 494. As described above, at this stage of the process in forming the strut preform 306, the first preliminary strut preform 306a is formed.

In step S5303-7, as was described above with regard to FIG. 41 to FIG. 43, the strut core filler material 558 is inserted into the first preliminary strut preform 306a. As described above, the strut core filler material 558 generally extends from the strut preform leading edge 540 to the strut preform trailing edge 542 to axially fill the space between the strut preform leading edge 540 and the strut preform trailing edge 542, and extends from the inner side 322 of the outer shell frame preform 308 to the outer side 338 of the inner hub frame preform 312 to radially fill the space between the outer shell frame preform 308 and the inner hub frame preform 312.

In step S5303-8, as was described above with regard to FIG. 41 to FIG. 43, the first bifurcated inner hub strut pi-leg preform portion 504 is arranged to extend outward from the inner hub frame preform 312 and to abut against the strut core filler material 558, and the second bifurcated inner hub strut pi-leg preform portion 506 is arranged to extend outward from the inner hub frame portion 312 and to abut against the strut core filler material 558. Similarly, in step S5303-9, the first bifurcated outer shell strut pi-leg preform portion 436 is arranged to extend inward from the outer shell frame preform 308 and to abut against the strut core filler material 558 and to at least partially overlap the first bifurcated inner hub strut pi-leg preform portion 504. In addition, the second bifurcated outer shell strut pi-leg preform portion 438 is arranged to extend inward from the outer shell frame portion 308 and to abut against the strut core filler material 558 and to at least partially overlap the second bifurcated inner hub strut pi-leg preform portion 506. As was described above, at the present stage of the process of forming the strut preform 306, the second preliminary strut preform 306b is formed.

Next, in step S5303-10, the additional layers 568 (FIG. 44) are applied to the second preliminary strut preform 306. As was described above with regard to FIG. 44, the additional layers 568 may be wrapped to extend around the second preliminary strut preform 306b to form the general airfoil-shaped strut preform.

In step S5303-11, as was described above with regard to FIG. 45 and FIG. 46, the additional preform layers 572 may be added to outer shell frame portion 308, and the additional preform layers 576 may be added to the inner hub frame preform 314. In addition, the additional vane preform layers 582 (FIG. 46) may be added between the strut preforms 306, as well as to the outer shell frame preform 308 and to the inner hub frame preform 312. Thus, the forming of the preform assembly 300 for step S5303 is completed. As described above, the forming of the preform assembly 300 may be performed utilizing the mold tooling structure 588 (FIG. 47) to assemble the various preform components to obtain the preform assembly 300.

Next, in step S5304, a process to inject a matrix material into the mold tooling structure 588 via the injectors 596 is performed. The matrix material may be any of those described herein. Any one or more of various known processes of injecting matrix materials into a mold for forming a composite component can be implemented. Then, in step S5305, a curing process is applied to the mold tooling structure 588 as described with regard to FIG. 47. Finally, in step S5306, once the curing process has been completed, the cured composite component part can be removed from the mold tooling structure 588, and any additional manufacturing processes that may be needed to complete the composite component part (i.e., to complete the guide vane structure 161 of FIG. 4) can be performed.

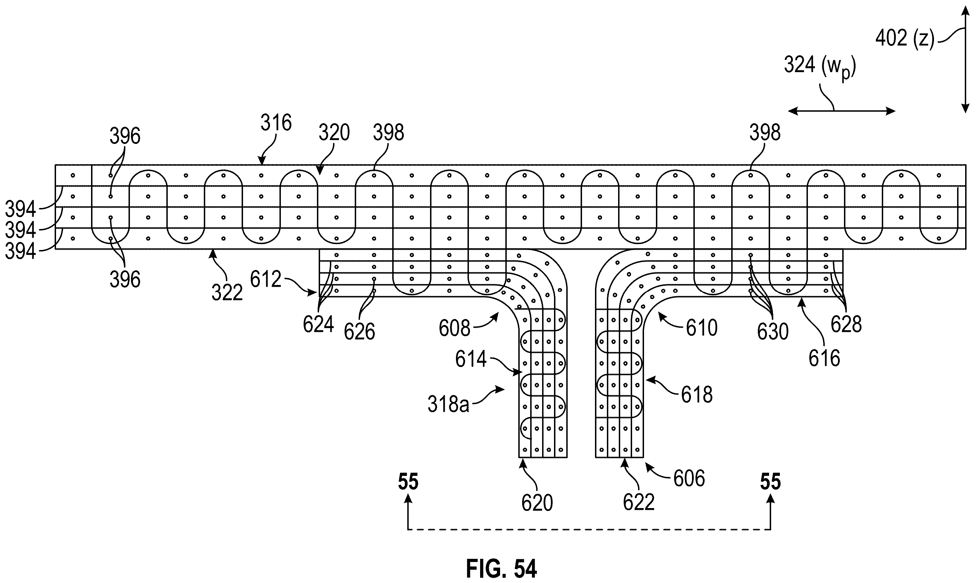

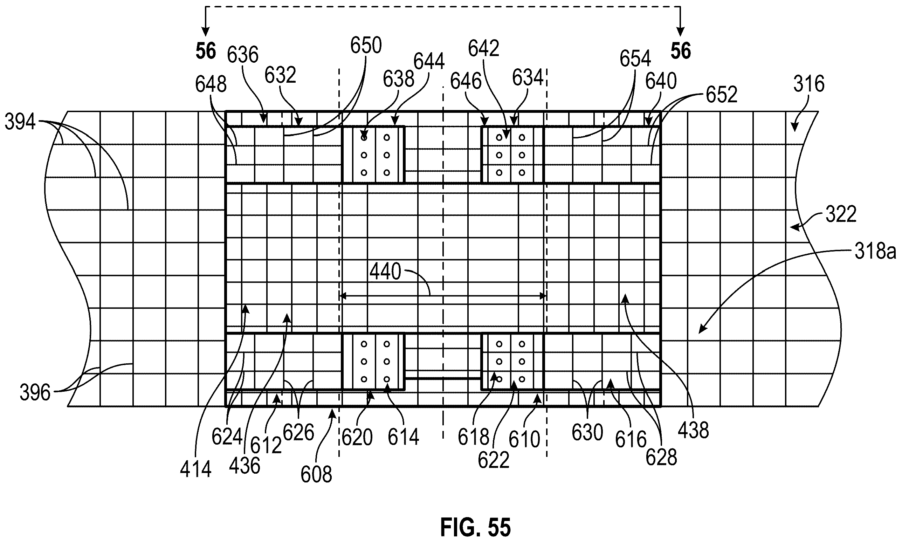

FIG. 54 is a view corresponding to FIG. 17 of a connection of an alternate outer shell strut preform portion 318a with the outer shell frame portion 316, according to an aspect of the present disclosure. FIG. 55 is an outward looking view, similar to FIG. 18, of the alternate outer shell strut preform 318a, taken at view 55-55 of FIG. 54, according to an aspect of the present disclosure. Elements in FIG. 54 and FIG. 55 that are the same as those in FIG. 17 and FIG. 18 include the same reference numerals, and the description of those elements provided above is equally applicable to FIG. 54 and to FIG. 55. Referring collectively to FIG. 54 and FIG. 55, similar to FIG. 17, FIG. 54 depicts a connection of an outer shell strut leading edge lug preform portion 606 that includes a first outer shell strut leading edge preform portion 608 and a second outer shell strut leading edge preform portion 610. The first outer shell strut leading edge preform portion 608 includes a first outer shell strut leading edge preform portion connection portion 612 and a first bifurcated outer shell strut leading edge lug preform portion 614. The second outer shell strut leading edge preform portion 610 includes a second outer shell strut leading edge preform portion connection portion 616 and a second bifurcated outer shell strut leading edge lug preform portion 618. The first bifurcated outer shell strut leading edge lug preform portion 614 includes a first connecting end 620 that may be similar to the first connecting end 417 (FIG. 18), and the second bifurcated outer shell strut leading edge lug preform portion 618 includes a second connecting end 622, that may be similar to the second connecting end 419 (FIG. 18).

As shown in FIG. 54, the first outer shell strut leading edge preform portion connection portion 612 is integrally woven with the outer shell frame portion 316 via the interlocking fiber tows 398. More specifically, the first outer shell strut leading edge preform portion 608 includes warp fiber tows 624 arranged in a plurality of warp fiber layers, and includes weft fiber tows 626 arranged in a plurality of weft fiber layers, and the interlocking fiber tows 398 of the outer shell frame portion 316 are integrally woven with the warp fiber tows 624 and the weft fiber tows 626 to connect the first outer shell strut leading edge preform portion connection portion 612 with the outer shell frame portion 316. Similarly, the second outer shell strut leading edge preform portion 610 includes warp fiber tows 628 arranged in a plurality of warp fiber layers, and includes weft fiber tows 630 arranged in a plurality of weft fiber layers, and the interlocking fiber tows 398 of the outer shell frame portion 316 are integrally woven with the warp fiber tows 628 and the weft fiber tows 630 to connect the second outer shell strut leading edge preform portion connection portion 616 with the outer shell frame portion 316.

Referring to FIG. 55, the alternate outer shell strut preform portion 318a includes the outer shell strut pi-leg preform portion 414, which may be the same as that described above with regard to FIG. 18 and FIG. 21.

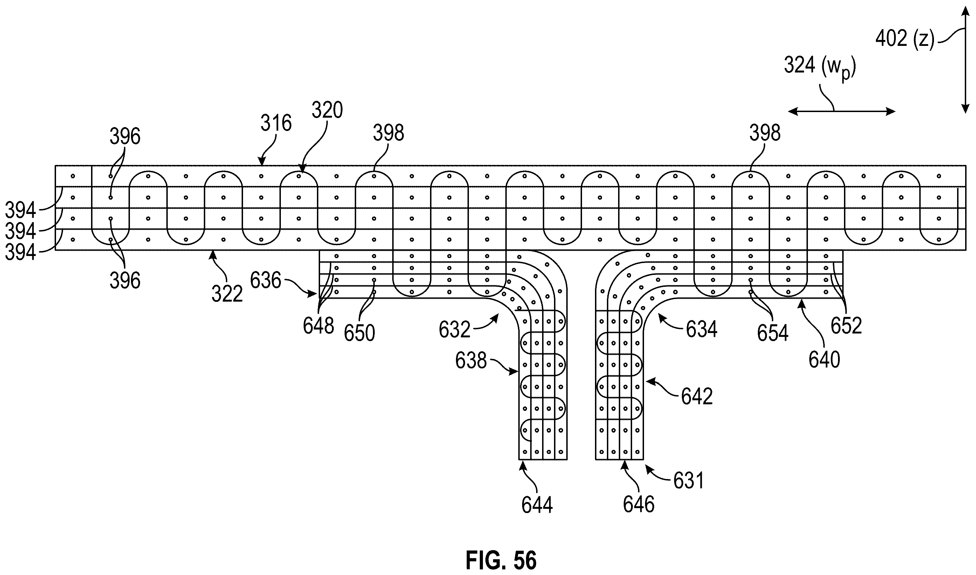

FIG. 56 is a forward-looking view of the alternate outer shell strut preform portion 318a, taken at view 56-56 of FIG. 55, according to an aspect of the present disclosure. FIG. 56 depicts a connection of an outer shell strut trailing edge lug preform portion 631 that includes a first outer shell strut trailing edge preform portion 632 and a second outer shell strut trailing edge preform portion 634. The first outer shell strut trailing edge preform portion 632 includes a first outer shell strut trailing edge preform portion connection portion 636 and a first bifurcated outer shell strut trailing edge lug preform portion 638. The second outer shell strut trailing edge preform portion 634 includes a second outer shell strut trailing edge preform portion connection portion 640 and a second bifurcated outer shell strut trailing edge lug preform portion 642. The first bifurcated outer shell strut trailing edge lug preform portion 638 includes a third connecting end 644 that may be similar to the third connecting end 421 (FIG. 18), and the second bifurcated outer shell strut trailing edge lug preform portion 642 includes a fourth connecting end 646 that may be similar to the fourth connecting end 423 (FIG. 18).

As shown in FIG. 56, the first outer shell strut trailing edge preform portion connection portion 636 is integrally woven with the outer shell frame portion 316 via the interlocking fiber tows 398. More specifically, the first outer shell strut trailing edge preform portion 632 includes warp fiber tows 648 arranged in a plurality of warp fiber layers, and includes weft fiber tows 650 arranged in a plurality of weft fiber layers, and the interlocking fiber tows 398 of the outer shell frame portion 316 are integrally woven with the warp fiber tows 648 and the weft fiber tows 650 to connect the first outer shell strut trailing edge preform portion connection portion 636 with the outer shell frame portion 316. Similarly, the second outer shell strut trailing edge preform portion 634 includes warp fiber tows 652 arranged in a plurality of warp fiber layers, and includes weft fiber tows 654 arranged in a plurality of weft fiber layers, and the interlocking fiber tows 398 of the outer shell frame portion 316 are integrally woven with the warp fiber tows 652 and the weft fiber tows 654 to connect the second outer shell strut trailing edge preform portion connection portion 640 with the outer shell frame portion 316.

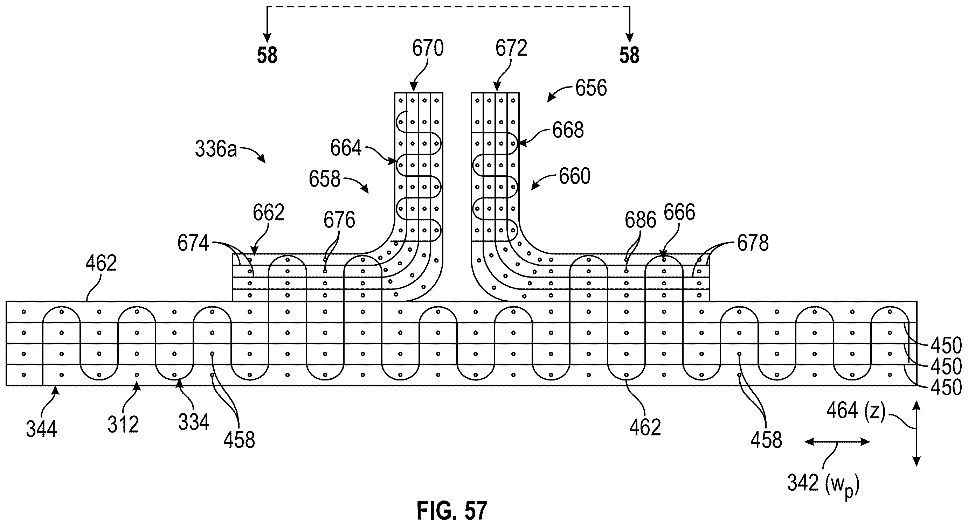

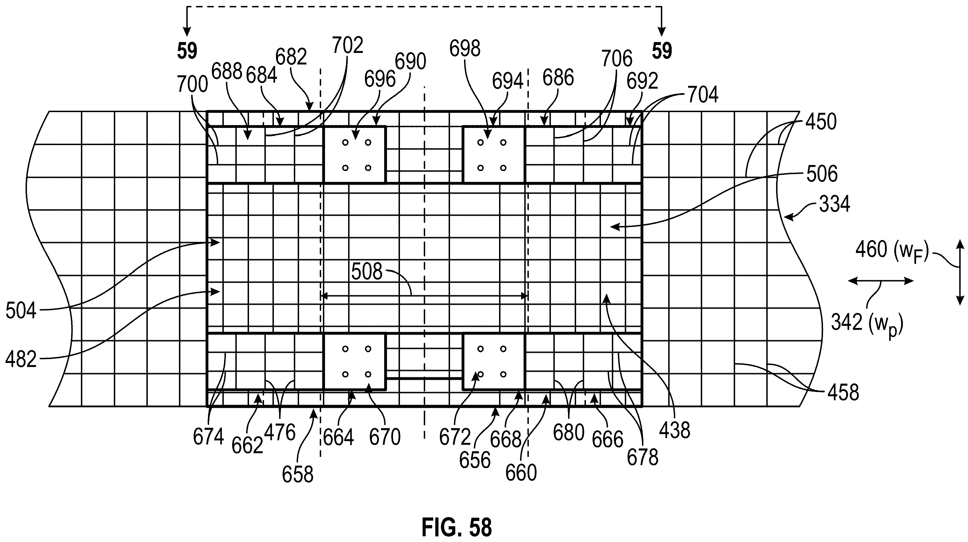

FIG. 57 is a view corresponding to FIG. 22 of a connection of an alternate inner hub strut preform portion 336a with the inner hub frame portion 334, according to an aspect of the present disclosure. FIG. 58 is an inward looking view, similar to FIG. 23, of the alternate inner hub strut preform portion 336a, taken at view 58-58 of FIG. 57, according to an aspect of the present disclosure. Elements in FIG. 57 and FIG. 58 that are the same as those in FIG. 22 and FIG. 23 include the same reference numerals, and the description of those elements provided above is equally applicable to FIG. 57 and to FIG. 58. Referring collectively to FIG. 57 and FIG. 58, similar to FIG. 22, FIG. 57 depicts a connection of an inner hub strut leading edge lug preform portion 656 that includes a first inner hub strut leading edge preform portion 658 and a second inner hub strut leading edge preform portion 660. The first inner hub strut leading edge preform portion 658 includes a first inner hub strut leading edge preform portion connection portion 662 and a first bifurcated inner hub strut leading edge lug preform portion 664. The second inner hub strut leading edge preform portion 660 includes a second inner hub strut leading edge preform portion connection portion 666 and a second bifurcated inner hub strut leading edge lug preform portion 668. The first bifurcated inner hub strut leading edge lug preform portion 664 includes a fifth connecting end 670 that may be similar to the fifth connecting end 483 (FIG. 23), and the second bifurcated inner hub strut leading edge lug preform portion 668 includes a sixth connecting end 672 that may be similar to the sixth connecting end 485 (FIG. 23).

As shown in FIG. 57, the first inner hub strut leading edge preform portion connection portion 662 is integrally woven with the inner hub frame portion 334 via the interlocking fiber tows 462. More specifically, the first inner hub strut leading edge preform portion 658 includes warp fiber tows 674 arranged in a plurality of warp fiber layers, and includes weft fiber tows 676 arranged in a plurality of weft fiber layers, and the interlocking fiber tows 462 of the inner hub frame portion 334 are integrally woven with the warp fiber tows 674 and the weft fiber tows 676 to connect the first inner hub strut leading edge preform portion connection portion 662 with the inner hub frame portion 334. Similarly, the second inner hub strut leading edge preform portion 660 includes warp fiber tows 678 arranged in a plurality of warp fiber layers, and includes weft fiber tows 680 arranged in a plurality of weft fiber layers, and the interlocking fiber tows 462 of the inner hub frame portion 334 are integrally woven with the warp fiber tows 678 and the weft fiber tows 680 to connect the second inner hub strut leading edge preform portion connection portion 666 with the inner hub frame portion 334.

Referring to FIG. 58, the alternate inner hub strut preform portion 336a includes the inner hub strut pi-leg preform portion 482, which may be the same as that described above with regard to FIG. 23 and FIG. 26.

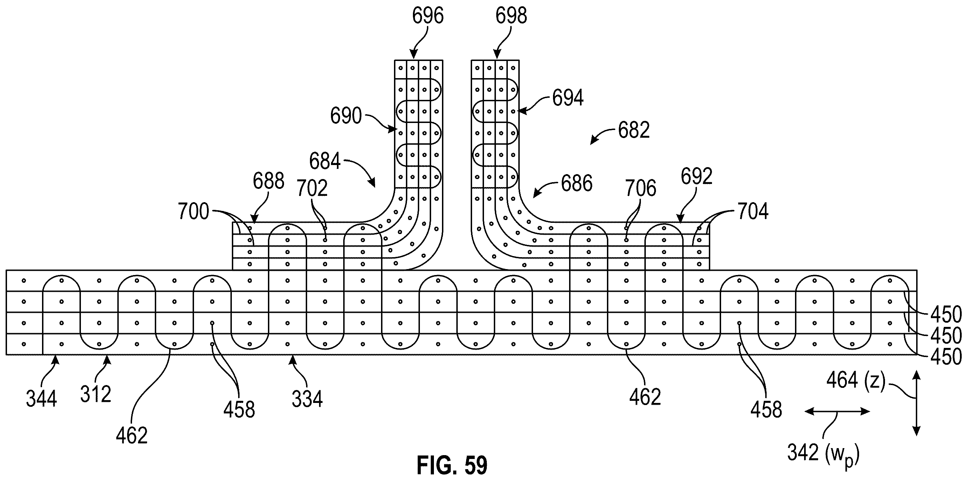

FIG. 59 is a forward-looking view of the alternate inner hub strut preform portion 336a, taken at view 59-59 of FIG. 58, according to an aspect of the present disclosure. FIG. 59 depicts a connection of an inner hub strut trailing edge lug preform portion 682 that includes a first inner hub strut trailing edge preform portion 684 and a second inner hub strut trailing edge preform portion 686. The first inner hub strut trailing edge preform portion 684 includes a first inner hub strut trailing edge preform portion connection portion 688 and a first bifurcated inner hub strut trailing edge lug preform portion 690. The second inner hub strut trailing edge preform portion 686 includes a second inner hub strut trailing edge preform portion connection portion 692 and a second bifurcated inner hub strut trailing edge lug preform portion 694. The first bifurcated inner hub strut trailing edge lug preform portion 690 includes a seventh connecting end 696 that may be similar to the seventh connecting end 487 (FIG. 23), and the second bifurcated inner hub strut trailing edge lug preform portion 694 includes an eighth connecting end 698 that may be similar to the eighth connecting end 489 (FIG. 23).

As shown in FIG. 59, the first inner hub strut trailing edge preform portion connection portion 688 is integrally woven with the inner hub frame portion 334 via the interlocking fiber tows 462. More specifically, the first inner hub strut trailing edge preform portion 684 includes warp fiber tows 700 arranged in a plurality of warp fiber layers, and includes weft fiber tows 702 arranged in a plurality of weft fiber layers, and the interlocking fiber tows 462 of the inner hub frame portion 334 are integrally woven with the warp fiber tows 700 and the weft fiber tows 702 to connect the first inner hub strut trailing edge preform portion connection portion 688 with the inner hub frame portion 334. Similarly, the second inner hub strut trailing edge preform portion 686 includes warp fiber tows 704 arranged in a plurality of warp fiber layers, and includes weft fiber tows 706 arranged in a plurality of weft fiber layers, and the interlocking fiber tows 462 of the inner hub frame portion 334 are integrally woven with the warp fiber tows 704 and the weft fiber tows 706 to connect the second inner hub strut trailing edge preform portion connection portion 692 with the inner hub frame portion 334.

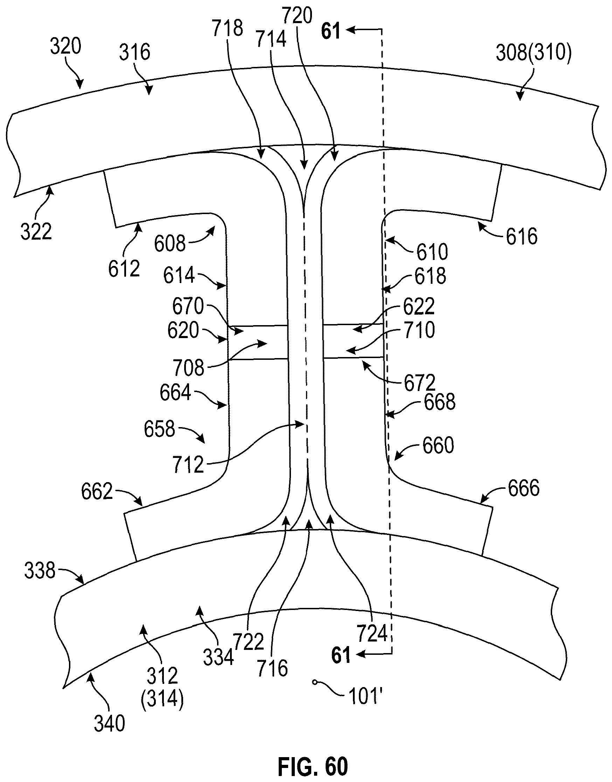

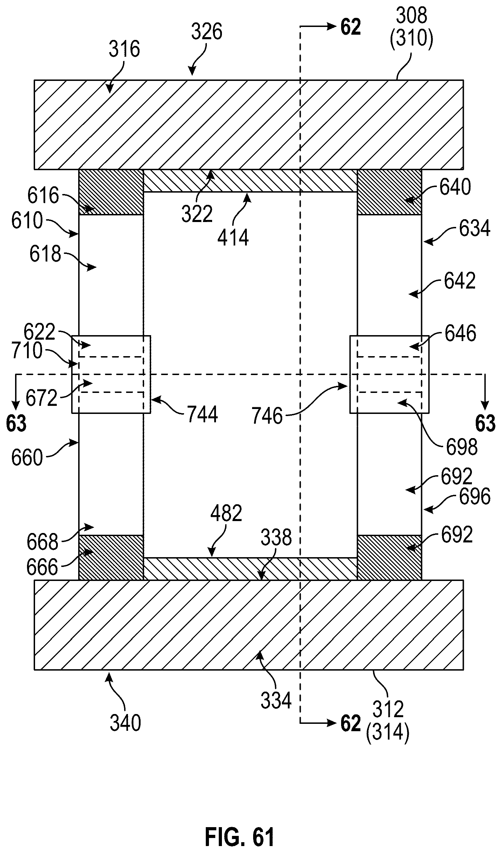

FIG. 60 is an aft-looking view similar to the detail view 570 of FIG. 36, depicting a connection to form the strut preform 306 for the alternate arrangement of FIG. 54 to FIG. 59, according to an aspect of the present disclosure. FIG. 61 is a cross-sectional view of the connection of FIG. 60, taken at plane 61-61 of FIG. 60, according to an aspect of the present disclosure. Referring collectively to FIG. 60 and to FIG. 61, similar to the arrangement of FIG. 36, the first connecting end 620 of the first outer shell strut leading edge preform portion 608 is connected with the fifth connecting end 670 of the first inner hub strut leading edge preform portion 658 to form a first leading edge connection 708, and the second connecting end 622 of the second outer shell strut leading edge preform portion 610 is connected with the sixth connecting end 672 of the second inner hub strut leading edge preform portion 660 to form a second leading edge connection 710. The first leading edge connection 708 and the second leading edge connection 710 may both be similar to first leading edge connection 546 and the second leading edge connection 552 (FIG. 38 through FIG. 40).

In the FIG. 60 aspect, a leading edge fiber insert 712 is inserted to extend between the first bifurcated outer shell strut leading edge lug preform portion 614 and the second bifurcated outer shell strut leading edge lug preform portion 618, to extend between the first bifurcated inner hub strut leading edge lug preform portion 664 and the second bifurcated inner hub strut leading edge lug preform portion 668, and between the outer shell frame portion 316 and the inner hub frame portion 334. The leading edge fiber insert 712 may be a woven fiber preform, for example, and may have bifurcated ends, including an outer bifurcated end 714 and an inner bifurcated end 716. The outer bifurcated end 714 includes a first bifurcated end portion 718 and a second bifurcated end portion 720, and the inner bifurcated end 716 includes a third bifurcated end portion 722 and a fourth bifurcated end portion 724. The first bifurcated end portion 718 is arranged to extend, at least partially, between the outer shell frame portion 316 and the first outer shell strut leading edge preform portion connection portion 612, and the second bifurcated end portion 720 is arranged to extend, at least partially, between the outer shell frame portion 316 and the second outer shell strut leading edge preform portion connection portion 616. Alternatively, the first bifurcated end portion 718 may include fiber tows (e.g., warp fiber tows) that may be integrally woven with warp fiber tows of the outer shell frame portion 316, and the second bifurcated end portion 720 may include fiber tows (e.g., warp fiber tows) that may be integrally woven with warp fiber tows of the outer shell frame portion 316.

Similarly, the third bifurcated end portion 722 is arranged to extend, at least partially, between the inner hub frame portion 334 and the first inner hub strut leading edge preform portion connection portion 662, and the fourth bifurcated end portion 724 is arranged to extend, at least partially, between the inner hub frame portion 334 and the second inner hub strut leading edge preform portion connection portion 666. Alternatively, the third bifurcated end portion 722 may include fiber tows (e.g., warp fiber tows) that may be integrally woven with warp fiber tows of the inner hub frame portion 334, and the fourth bifurcated end portion 724 may include fiber tows (e.g., warp fiber tows) that may be integrally woven with warp fiber tows of the inner hub frame portion 334.

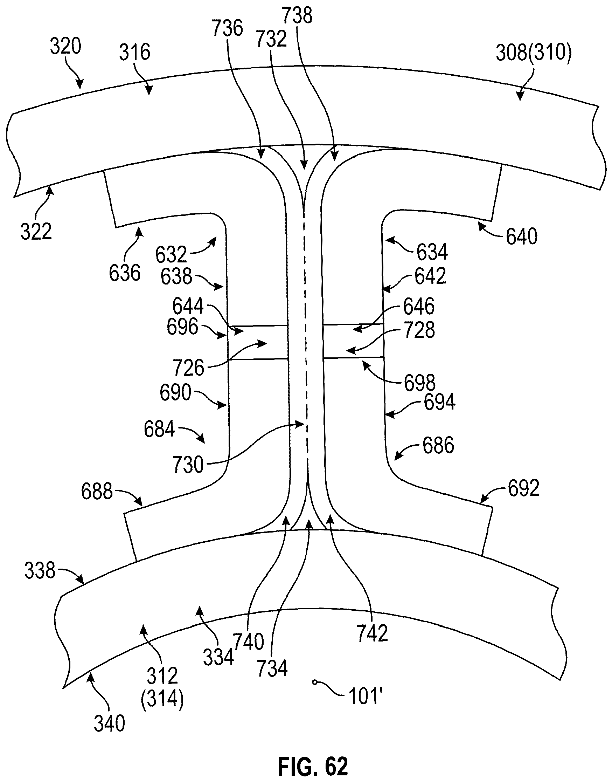

FIG. 62 is an aft-looking view of a trailing edge connection to form the strut preform 306 for the alternate arrangement of FIG. 54 to FIG. 59, according to an aspect of the present disclosure. In FIG. 62, the third connecting end 644 of the first outer shell strut trailing edge preform portion 632 is connected with the seventh connecting end 696 of the first inner hub strut trailing edge preform portion 684 to form a first trailing edge connection 726, and the fourth connecting end 646 of the second outer shell strut trailing edge preform portion 634 is connected with the eighth connecting end 698 of the second inner hub strut trailing edge preform portion 686 to form a second trailing edge connection 728. The first trailing edge connection 726 and the second trailing edge connection 728 may both be similar to first trailing edge connection 554 and the second trailing edge connection 556 (FIG. 38 through FIG. 40).

In the FIG. 62 aspect, similar to the FIG. 60 aspect, a trailing edge fiber insert 730 is inserted to extend between the first bifurcated outer shell strut trailing edge lug preform portion 638 and the second bifurcated outer shell strut trailing edge lug preform portion 642, to extend between the first bifurcated inner hub strut trailing edge lug preform portion 690 and the second bifurcated inner hub strut trailing edge lug preform portion 694, and to extend between the outer shell frame portion 316 and the inner hub frame portion 334. The trailing edge fiber insert 730 may be the same as the leading edge fiber insert 712, and may be a woven fiber preform, for example, and may have bifurcated ends, including an outer bifurcated end 732 and an inner bifurcated end 734. The outer bifurcated end 732 includes a first bifurcated end portion 736 and a second bifurcated end portion 738, and the inner bifurcated end 734 includes a third bifurcated end portion 740 and a fourth bifurcated end portion 742. The first bifurcated end portion 736 is arranged to extend, at least partially, between the outer shell frame portion 316 and the first outer shell strut trailing edge preform portion connection portion 636, and the second bifurcated end portion 738 is arranged to extend, at least partially, between the outer shell frame portion 316 and the second outer shell strut trailing edge preform portion connection portion 640. Alternatively, the first bifurcated end portion 736 may include fiber tows (e.g., warp fiber tows) that may be integrally woven with warp fiber tows of the outer shell frame portion 316, and the second bifurcated end portion 738 may include fiber tows (e.g., warp fiber tows) that may be integrally woven with warp fiber tows of the outer shell frame portion 316.

Similarly, the third bifurcated end portion 740 is arranged to extend, at least partially, between the inner hub frame portion 334 and the first inner hub strut trailing edge preform portion connection portion 688, and the fourth bifurcated end portion 742 is arranged to extend, at least partially, between the inner hub frame portion 334 and the second inner hub strut trailing edge preform portion connection portion 692. Alternatively, the third bifurcated end portion 740 may include fiber tows (e.g., warp fiber tows) that may be integrally woven with warp fiber tows of the inner hub frame portion 334, and the fourth bifurcated end portion 742 may include fiber tows (e.g., warp fiber tows) that may be integrally woven with warp fiber tows of the inner hub frame portion 334.

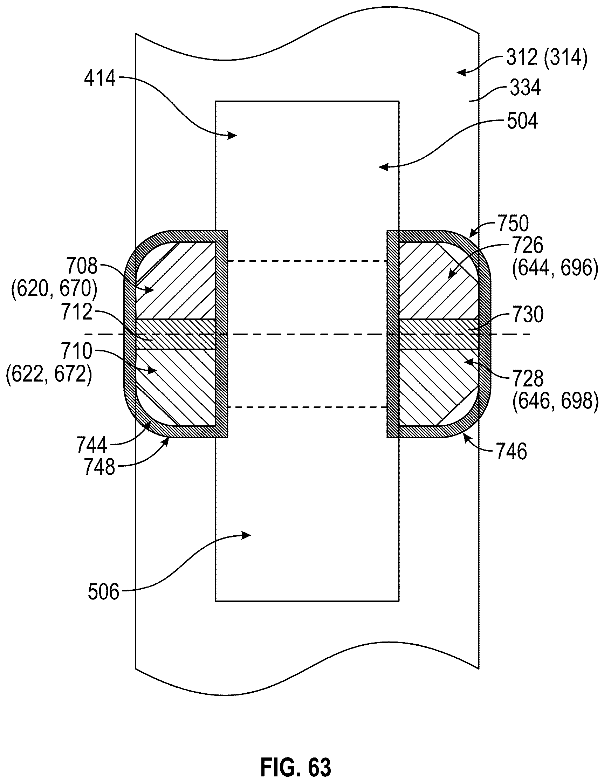

FIG. 63 is a cross-sectional view of the strut preform taken at plane 63-63 of FIG. 61, according to an aspect of the present disclosure. Referring to FIG. 63 and to FIG. 61, once the first leading edge connection 708 and the second leading edge connection 710 have been formed, and the leading edge fiber insert 712 is inserted, a leading edge connection wrap layer 744 is provided to form a leading edge preform 748. Similarly, once the first trailing edge connection 726 and the second trailing edge connection 728 have been formed, and the trailing edge fiber insert 730 is inserted, a trailing edge connection wrap layer 746 is provided to form a trailing edge preform 750.

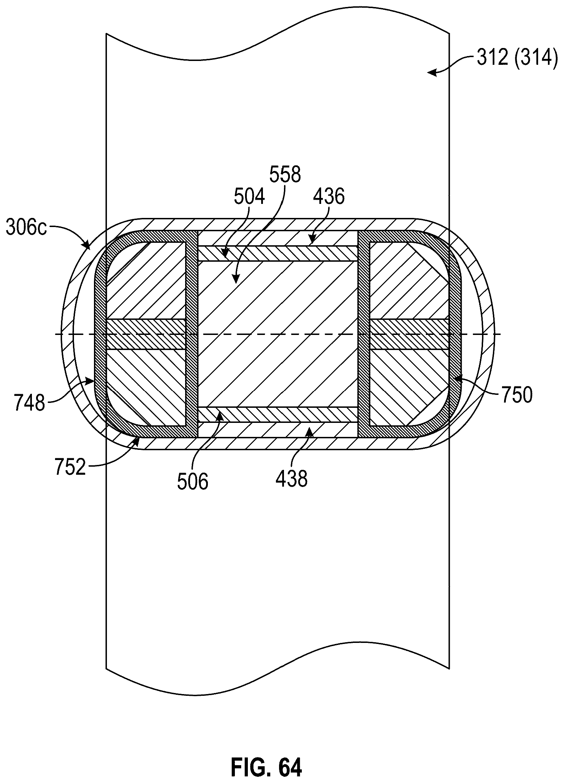

FIG. 64 is a cross-sectional view of a completed alternate strut preform 306c to that shown in FIG. 44, according to an aspect of the present disclosure. In completing the alternate strut preform 306c from that shown in FIG. 63, in the same manner as was described above for FIG. 44, the strut core filler material 558 is inserted to extend between the leading edge preform 748 and the trailing edge preform 750, and between the outer shell frame portion 316 and the inner hub frame portion 334 (FIG. 61). Next, the first bifurcated inner hub strut pi-leg preform portion 504 is folded, from the position shown in FIG. 36, in the direction of arrow 562 to abut against the strut core filler material 558, and the first bifurcated outer shell strut pi-leg preform portion 436 is folded, from the position shown in FIG. 36, in the direction of arrow 560 to overlap the first bifurcated inner hub strut pi-leg preform portion 504. In a similar manner, the second bifurcated inner hub strut pi-leg preform portion 506 is folded, from the position shown in FIG. 36, in the direction of arrow 564 to abut against the strut core filler material 558, and the second bifurcated outer shell strut pi-leg preform portion 438 is folded, from the position shown in FIG. 36, in the direction of arrow 566 to overlap the second bifurcated inner hub strut pi-leg preform portion 506. Then, one or more additional layers 752 may be applied to complete forming the alternate strut preform 306c. The one or more additional layers 752 may be, for example, two-dimensional layers and may be wrapped around the collective periphery of the leading edge preform 748 and the trailing edge preform 750, and may also extend from the outer side 338 (FIG. 42) of the inner hub frame preform 312 to the inner side 322 (FIG. 42) of the outer shell frame preform 308.

The foregoing aspects provide a technique for manufacturing, for example, a vane structure as a composite component for use in a gas turbine engine. The process of weaving the outer shell frame preform to include a part of the strut preform, and weaving the inner hub frame preform to include another part of the strut preform, simplifies the connection of the strut to the outer shell frame and to the inner hub frame.

A method of manufacturing a composite component for a gas turbine engine, the composite component including an outer shell, an inner hub, and a plurality of struts connecting the outer shell and the inner hub comprises weaving a three-dimensional outer shell frame preform to include, an outer shell frame portion having an inner side and an outer side, and a plurality of outer shell strut preform portions integrally woven in part connected with the outer shell frame portion, wherein each outer shell strut preform portion includes an outer shell strut leading edge lug preform portion having first and second bifurcated outer shell strut leading edge lug preform portions, an outer shell strut pi-leg preform portion having first and second bifurcated outer shell strut pi-leg preform portions, and an outer shell strut trailing edge lug preform portion having first and second bifurcated outer shell strut trailing edge lug preform portions, weaving a three-dimensional inner hub frame preform to include: an inner hub frame portion having an inner side and an outer side, and a plurality of inner hub strut preform portions integrally woven in part connected with the inner hub frame portion, wherein each inner hub strut preform portion includes an inner hub strut leading edge lug preform portion having first and second bifurcated inner hub strut leading edge lug preform portions, an inner hub strut pi-leg preform portion having first and second bifurcated inner hub strut pi-leg preform portions, and an inner hub strut trailing edge lug preform portion having first and second bifurcated inner hub strut trailing edge lug preform portions, forming a preform assembly including the outer shell frame preform, the inner hub frame preform, and a plurality of strut preforms connecting the outer shell frame preform and the inner hub frame preform, the plurality of strut preforms being formed from the plurality of outer shell strut preform portions and the plurality of inner hub strut preform portions by connecting each of the outer shell strut leading edge lug preform portions with a respective one of the inner hub strut leading edge lug preform portions, and by connecting each of the outer shell trailing edge lug preform portions with a respective one of the inner hub trailing edge lug preform portions, installing the preform assembly onto a mold tooling structure, injecting a matrix material into the mold tooling structure, and applying a curing process to the mold tooling structure to obtain a cured molded composite structure.

The method according to the preceding clause, wherein each strut preform of the plurality of strut preforms further including at least one additional layer extending to wrap around a periphery of the strut preform.

The method according to any preceding clause, wherein the composite component being one of an outlet guide vane structure, an inlet guide vane structure, or a stator vane structure.

The method according to any preceding clause, further comprising, in the forming of the preform assembly, connecting together a first outer shell frame preform connecting end and a second outer shell frame preform connecting end to form an outer shell hoop frame preform, and connecting together a first inner hub frame preform connecting end and a second inner hub frame preform connecting end to form an inner hub hoop frame preform.

The method according to any preceding clause, wherein the cured molded composite structure is further processed via machining to obtain the composite component.

The method according to any preceding clause, wherein: the outer shell strut leading edge lug preform portion further includes an outer shell strut leading edge connection portion arranged between the first and the second bifurcated outer shell strut leading edge lug preform portions and integrally woven with the outer shell frame preform, the outer shell strut pi-leg preform portion further includes an outer shell strut pi-leg connection portion arranged between the first and the second bifurcated outer shell strut pi-leg preform portions and integrally woven with the outer shell frame preform, and the outer shell strut trailing edge lug preform portion further includes an outer shell strut trailing edge connection portion arranged between the first and the second bifurcated outer shell strut trailing edge lug preform portions and integrally woven with the outer shell frame preform.

The method according to any preceding clause, wherein: the outer shell frame preform includes a plurality of outer shell frame warp fiber layers each having a plurality of outer shell frame warp fiber tows extending in a first direction, the outer shell strut preform portion includes a plurality of outer shell strut fiber layers each having a plurality of outer shell strut warp fiber tows extending in the first direction, the outer shell strut warp fiber tows in respective layers of the outer shell strut leading edge connection portion are interwoven with the outer shell frame warp fiber tows in respective layers of the outer shell frame preform, the outer shell strut warp fiber tows in respective layers of the outer shell strut trailing edge connection portion are interwoven with the outer shell frame warp fiber tows in respective layers of the outer shell frame preform, and the outer shell strut warp fiber tows in respective layers of the outer shell strut pi-leg connection portion are interwoven with the outer shell frame warp fiber tows in respective layers of the outer shell frame preform.

The method according to any preceding clause, wherein: the inner hub strut leading edge lug preform portion further includes an inner hub strut leading edge connection portion arranged between the first and the second bifurcated inner hub strut leading edge lug preform portions and integrally woven with the inner hub frame preform, the inner hub strut pi-leg preform portion further includes an inner hub strut pi-leg connection portion arranged between the first and the second bifurcated inner hub strut pi-leg preform portions and integrally woven with the inner hub frame preform, and the inner hub strut trailing edge lug preform portion further includes an inner hub strut trailing edge connection portion arranged between the first and the second bifurcated inner hub strut trailing edge lug preform portions and integrally woven with the inner hub frame preform.

The method according to any preceding clause, wherein: the inner hub frame preform includes a plurality of inner hub frame warp fiber layers each having a plurality of inner hub frame warp fiber tows extending in a first direction, the inner hub strut preform portion includes a plurality of inner hub strut fiber layers each having a plurality of inner hub strut warp fiber tows extending in the first direction, the inner hub strut warp fiber tows in respective layers of the inner hub strut leading edge connection portion are interwoven with the inner hub frame warp fiber tows in respective layers of the inner hub frame preform, the inner hub strut warp fiber tows in respective layers of the inner hub strut trailing edge connection portion are interwoven with the inner hub frame warp fiber tows in respective layers of the inner hub frame preform, and the inner hub strut warp fiber tows in respective layers of the inner hub strut pi-leg connection portion are interwoven with the inner hub frame warp fiber tows in respective layers of the inner hub frame preform.

The method according to any preceding clause, wherein the outer shell strut leading edge lug preform portion further includes a first outer shell strut leading edge preform portion connection portion woven integrally with the first bifurcated outer shell strut leading edge lug preform portion, and a second outer shell leading edge preform portion connection portion woven integrally with the second bifurcated outer shell strut leading edge lug preform portion, and the outer shell strut trailing edge lug preform portion includes a first outer shell strut trailing edge preform portion connection portion woven integrally with the first bifurcated outer shell strut trailing edge lug preform portion, and a second outer shell trailing edge preform portion connection portion woven integrally with the second bifurcated outer shell strut trailing edge lug preform portion.

The method according to any preceding clause, wherein the inner hub strut leading edge lug preform portion further includes a first inner hub strut leading edge preform portion connection portion woven integrally with the first bifurcated inner hub strut leading edge lug preform portion, and a second inner hub leading edge preform portion connection portion woven integrally with the second bifurcated inner hub strut leading edge lug preform portion, and the inner hub strut trailing edge lug preform portion includes a first inner hub strut trailing edge preform portion connection portion woven integrally with the first bifurcated inner hub strut trailing edge lug preform portion, and a second inner hub trailing edge preform portion connection portion woven integrally with the second bifurcated inner hub strut trailing edge lug preform portion.

The method according to any preceding clause, wherein, in the forming of the strut preform, a leading edge fiber insert is inserted to extend between the first and the second bifurcated outer shell strut leading edge lug preform portions, to extend between the first and the second bifurcated inner hub strut leading edge lug preform portions, and to extend between the outer shell frame portion and the inner hub frame portion, and a trailing edge fiber insert is inserted to extend between the first and the second bifurcated outer shell strut trailing edge lug preform portions, to extend between the first and the second bifurcated inner hub strut trailing edge lug preform portions, and to extend between the outer shell frame portion and the inner hub frame portion.

The method according to any preceding clause, wherein the connecting the outer shell strut leading edge lug preform portion and the inner hub strut leading edge lug preform portion together with each other includes: arranging the first and the second bifurcated outer shell strut leading edge lug preform portions to extend inward from the inner side of the outer shell frame preform, arranging the first and the second bifurcated inner hub strut leading edge lug preform portions to extend outward from the outer side of the inner hub frame preform, connecting the first bifurcated outer shell strut leading edge lug preform portion and the first bifurcated inner hub strut leading edge lug preform portion together, and connecting the second bifurcated outer shell strut leading edge lug preform portion and the second bifurcated inner hub strut leading edge lug preform portion together, and the connecting the outer shell strut trailing edge lug preform portion and the inner hub strut trailing edge lug preform portion together with each other includes: arranging the first and the second bifurcated outer shell strut trailing edge lug preform portions to extend inward from the inner side of the outer shell frame preform, arranging the first and the second bifurcated inner hub strut trailing edge lug preform portions to extend outward from the outer side of the inner hub frame preform, connecting the first bifurcated outer shell strut trailing edge lug preform portion and the first bifurcated inner hub strut trailing edge lug preform portion together, and connecting the second bifurcated outer shell strut trailing edge lug preform portion and the second bifurcated inner hub strut trailing edge lug preform portion together.

The method according to any preceding clause, wherein, in the arranging: the first and the second bifurcated outer shell strut leading edge lug preform portions are arranged to extend abutting against one another, the first and the second bifurcated inner hub strut leading edge lug preform portions are arranged to extend abutting against one another, the first and the second bifurcated outer shell strut trailing edge lug preform portions are arranged to extend abutting against one another, and the first and the second bifurcated inner hub strut trailing edge lug preform portions are arranged to extend abutting against one another.

The method according to any preceding clause, wherein, in the arranging: the first and the second bifurcated outer shell strut leading edge lug preform portions are arranged to extend with a first gap between each other and a filler material is inserted in the first gap, the first and the second bifurcated inner hub strut leading edge lug preform portions are arranged to extend with a second gap between each other and a filler material is inserted into the second gap, the first and the second bifurcated outer shell strut trailing edge lug preform portions are arranged to extend with a third gap between each other and a filler material is inserted into the third gap, and, the first and the second bifurcated inner hub strut trailing edge lug preform portions are arranged to extend with a fourth gap between each other and a filler material is inserted into the fourth gap.

The method according to any preceding clause, wherein: the first bifurcated outer shell strut leading edge lug preform portion includes a first connecting end, the second bifurcated outer shell strut leading edge lug preform portion includes a second connecting end, the first bifurcated outer shell strut trailing edge lug preform portion includes a third connecting end, the second bifurcated outer shell strut trailing edge lug preform portion includes a fourth connecting end, the first bifurcated inner hub strut leading edge lug preform portion includes a fifth connecting end, the second bifurcated inner hub strut leading edge lug preform portion includes a sixth connecting end, the first bifurcated inner hub strut trailing edge lug preform portion includes a seventh connecting end, the second bifurcated inner hub strut trailing edge lug preform portion includes an eighth connecting end, and the first connecting end is connected with the fifth connecting end, the second connecting end is connected with the sixth connecting end, the third connecting end is connected with the seventh connecting end, and the fourth connecting end is connected with the eighth connecting end.

The method according to any preceding clause, wherein each of the first connecting end, the second connecting end, the third connecting end, and the fourth connecting end include a first connection end configuration, and each of the fifth connecting end, the sixth connecting end, the seventh connecting end, and the eighth connecting end include a second connection end configuration arranged to connect with the first connection end configuration.

The method according to any preceding clause, wherein each strut preform of the plurality of strut preforms is further formed by: arranging the first and the second bifurcated outer shell strut pi-leg preform portions to extend inward from the inner side of the outer shell frame preform, and arranging the first and the second bifurcated inner hub strut pi-leg preform portions to extend outward from the outer side of the inner hub frame preform.

The method according to any preceding clause, wherein each strut preform of the plurality of strut preforms is further formed by inserting a filler material between the first and the second bifurcated outer shell strut pi-leg preform portions, and inserting a filler material between the first and the second bifurcated inner hub strut pi-leg preform portions.

The method according to any preceding clause, wherein each strut preform of the plurality of strut preforms is further formed by adding additional preform layers to form an airfoil-shaped strut preform.

A method of manufacturing a composite component for a gas turbine engine, the composite component including an outer shell, an inner hub, and a plurality of struts connecting the outer shell and the inner hub, the method comprising: weaving a three-dimensional outer shell frame preform to include (i) an outer shell frame portion having an inner side and an outer side, and (ii) a plurality of outer shell strut preform portions integrally woven in part connected with the outer shell frame portion, each outer shell strut preform portion including (a) an outer shell strut leading edge lug preform portion having a first bifurcated outer shell strut leading edge lug preform portion and a second bifurcated outer shell strut leading edge lug preform portion, (b) an outer shell strut pi-leg preform portion having a first bifurcated outer shell strut pi-leg preform portion and a second bifurcated outer shell strut pi-leg preform portion, and (c) an outer shell strut trailing edge lug preform portion having a first bifurcated outer shell strut trailing edge lug preform portion and a second bifurcated outer shell strut trailing edge lug preform portion; weaving a three-dimensional inner hub frame preform to include (iii) an inner hub frame portion having an inner side and an outer side, and (iv) a plurality of inner hub strut preform portions integrally woven in part connected with the inner hub frame portion, each inner hub strut preform portion including (d) an inner hub strut leading edge lug preform portion having a first bifurcated inner hub strut leading edge lug preform portion and a second bifurcated inner hub strut leading edge lug preform portion, (e) an inner hub strut pi-leg preform portion having a first bifurcated inner hub strut pi-leg preform portion and a second bifurcated inner hub strut pi-leg preform portion, and (f) an inner hub strut trailing edge lug preform portion having a first bifurcated inner hub strut trailing edge lug preform portion and a second bifurcated inner hub strut trailing edge lug preform portion; forming a preform assembly including the outer shell frame preform, the inner hub frame preform, and a plurality of strut preforms connecting the outer shell frame preform and the inner hub frame preform together, each strut preform of the plurality of strut preforms being formed by connecting the outer shell strut leading edge lug preform portion and the inner hub strut leading edge lug preform portion together with each other, and connecting the outer shell trailing edge lug preform portion and the inner hub trailing edge lug preform portion together with each other; installing the preform assembly onto a mold tooling structure; injecting a matrix material into the mold tooling structure; and applying a curing process to the mold tooling structure to obtain a molded composite component.

The method according to any preceding clause, wherein each strut preform of the plurality of strut preforms further includes at least one additional wrap layer extending around a periphery of the strut preform.

The method according to any preceding clause, wherein the composite component is one of an outlet guide vane structure, an inlet guide vane structure, or a stator vane structure.

The method according to any preceding clause, wherein, in the forming of the preform assembly, the outer shell frame preform is arranged to form an outer shell hoop frame preform, and the inner hub frame preform is arranged to form an inner hub hoop frame preform.

The method according to any preceding clause, wherein the outer shell frame preform includes a first outer shell frame preform connecting end and a second outer shell frame preform connecting end that are connected together to form the outer shell hoop frame preform, and the inner hub frame preform includes a first inner hub frame preform connecting end and a second inner hub frame preform connecting end that are connected together to form the inner hub hoop frame preform.

The method according to any preceding clause, wherein (g) the outer shell strut leading edge lug preform portion further includes an outer shell strut leading edge connection portion arranged between the first bifurcated outer shell strut leading edge lug preform portion and the second bifurcated outer shell strut leading edge lug preform portion and integrally woven with the outer shell frame preform, (h) the outer shell strut pi-leg preform portion further includes an outer shell strut pi-leg connection portion arranged between the first bifurcated outer shell strut pi-leg preform portion and the second bifurcated outer shell strut pi-leg preform portion and integrally woven with the outer shell frame preform, and (j) the outer shell strut trailing edge lug preform portion further includes an outer shell strut trailing edge connection portion arranged between the first bifurcated outer shell strut trailing edge lug preform portion and the second bifurcated outer shell strut trailing edge lug preform portion and integrally woven with the outer shell frame preform.

The method according to any preceding clause, wherein (k) the outer shell frame preform includes a plurality of outer shell frame warp fiber layers each having a plurality of outer shell frame warp fiber tows extending in a first direction, (l) the outer shell strut preform portion includes a plurality of outer shell strut fiber layers each having a plurality of outer shell strut warp fiber tows extending in the first direction, (m) the outer shell strut warp fiber tows in respective layers of the outer shell strut leading edge connection portion are interwoven with the outer shell frame warp fiber tows in respective layers of the outer shell frame preform, (n) the outer shell strut warp fiber tows in respective layers of the outer shell strut trailing edge connection portion are interwoven with the outer shell frame warp fiber tows in respective layers of the outer shell frame preform, and (o) the outer shell strut warp fiber tows in respective layers of the outer shell strut pi-leg connection portion are interwoven with the outer shell frame warp fiber tows in respective layers of the outer shell frame preform.

The method according to any preceding clause, wherein (g) the inner hub strut leading edge lug preform portion further includes an inner hub strut leading edge connection portion arranged between the first bifurcated inner hub strut leading edge lug preform portion and the second bifurcated inner hub strut leading edge lug preform portion and integrally woven with the inner hub frame preform, (h) the inner hub strut pi-leg preform portion further includes an inner hub strut pi-leg connection portion arranged between the first bifurcated inner hub strut pi-leg preform portion and the second bifurcated inner hub strut pi-leg preform portion and integrally woven with the inner hub frame preform, and (j) the inner hub strut trailing edge lug preform portion further includes an inner hub strut trailing edge connection portion arranged between the first bifurcated inner hub strut trailing edge lug preform portion and the second bifurcated inner hub strut trailing edge lug preform portion and integrally woven with the inner hub frame preform.

The method according to any preceding clause, wherein (k) the inner hub frame preform includes a plurality of inner hub frame warp fiber layers each having a plurality of inner hub frame warp fiber tows extending in a first direction, (l) the inner hub strut preform portion includes a plurality of inner hub strut fiber layers each having a plurality of inner hub strut warp fiber tows extending in the first direction, (m) the inner hub strut warp fiber tows in respective layers of the inner hub strut leading edge connection portion are interwoven with the inner hub frame warp fiber tows in respective layers of the inner hub frame preform, (n) the inner hub strut warp fiber tows in respective layers of the inner hub strut trailing edge connection portion are interwoven with the inner hub frame warp fiber tows in respective layers of the inner hub frame preform, and (o) the inner hub strut warp fiber tows in respective layers of the inner hub strut pi-leg connection portion are interwoven with the inner hub frame warp fiber tows in respective layers of the inner hub frame preform.

The method according to any preceding clause, wherein the outer shell strut leading edge preform portion further includes a first outer shell strut leading edge preform portion connection portion woven integrally with the first bifurcated outer shell strut leading edge lug preform portion, and a second outer shell leading edge preform portion connection portion woven integrally with the second bifurcated outer shell strut leading edge lug preform portion, and the outer shell strut trailing edge lug preform portion includes a first outer shell strut trailing edge preform portion connection portion woven integrally with the first bifurcated outer shell strut trailing edge lug preform portion, and a second outer shell trailing edge preform portion connection portion woven integrally with the second bifurcated outer shell strut trailing edge lug preform portion.

The method according to any preceding clause, wherein the inner hub strut leading edge preform portion further includes a first inner hub strut leading edge preform portion connection portion woven integrally with the first bifurcated inner hub strut leading edge lug preform portion, and a second inner hub leading edge preform portion connection portion woven integrally with the second bifurcated inner hub strut leading edge lug preform portion, and the inner hub strut trailing edge lug preform portion includes a first inner hub strut trailing edge preform portion connection portion woven integrally with the first bifurcated inner hub strut trailing edge lug preform portion, and a second inner hub trailing edge preform portion connection portion woven integrally with the second bifurcated inner hub strut trailing edge lug preform portion.

The method according to any preceding clause, wherein, in the forming of the strut preform, a leading edge fiber insert is inserted to extend between the first bifurcated outer shell strut leading edge lug preform portion and the second bifurcated outer shell strut leading edge lug preform portion, to extend between the first bifurcated inner hub strut leading edge lug preform portion and the second bifurcated inner hub strut leading edge lug preform portion, and to extend between the outer shell frame portion and the inner hub frame portion, and a trailing edge fiber insert is inserted to extend between the first bifurcated outer shell strut trailing edge lug preform portion and the second bifurcated outer shell strut trailing edge lug preform portion, to extend between the first bifurcated inner hub strut trailing edge lug preform portion and the second bifurcated inner hub strut trailing edge lug preform portion, and to extend between the outer shell frame portion and the inner hub frame portion.

The method according to any preceding clause, wherein the connecting the outer shell strut leading edge lug preform portion and the inner hub strut leading edge lug preform portion together with each other includes (1) arranging (A) the first bifurcated outer shell strut leading edge lug preform portion, and (B) the second bifurcated outer shell strut leading edge lug preform portion, to extend inward from the inner side of the outer shell frame preform, (2) arranging (C) the first bifurcated inner hub strut leading edge lug preform portion, and (D) the second bifurcated inner hub strut leading edge lug preform portion, to extend outward from the outer side of the inner hub frame preform, (3) connecting the first bifurcated outer shell strut leading edge lug preform portion and the first bifurcated inner hub strut leading edge lug preform portion together, and (4) connecting the second bifurcated outer shell strut leading edge lug preform portion and the second bifurcated inner hub strut leading edge lug preform portion together, and the connecting the outer shell trailing edge preform portion and the inner hub trailing edge preform portion together with each other includes (5) arranging (E) the first bifurcated outer shell strut trailing edge lug preform portion, (F) the second bifurcated outer shell strut trailing edge lug preform portion, to extend inward from the inner side of the outer shell frame preform, (6) arranging (G) the first bifurcated inner hub strut trailing edge lug preform portion, and (H) the second bifurcated inner hub strut trailing edge lug preform portion, to extend outward from the outer side of the inner hub frame preform, (7) connecting the first bifurcated outer shell strut leading edge lug preform portion and the first bifurcated inner hub strut trailing edge lug preform portion together, and (8) connecting the second bifurcated outer shell strut trailing edge lug preform portion and the second bifurcated inner hub strut trailing edge lug preform portion together.

The method according to any preceding clause, wherein, in the (1) arranging, the first bifurcated outer shell strut leading edge lug preform portion and the second bifurcated outer shell strut leading edge lug preform portion are arranged to extend abutting against one another, in the (2) arranging, the first bifurcated inner hub strut leading edge lug preform portion and the second bifurcated inner hub strut leading edge lug preform portion are arranged to extend abutting against one another, in the (5) arranging, the first bifurcated outer shell strut trailing edge lug preform portion and the second bifurcated outer shell strut trailing edge lug preform portion are arranged to extend abutting against one another, and, in the (6) arranging, the first bifurcated inner hub strut trailing edge lug preform portion and the second bifurcated inner hub strut trailing edge lug preform portion are arranged to extend abutting against one another.

The method according to any preceding clause, wherein, in the (1) arranging, the first bifurcated outer shell strut leading edge lug preform portion and the second bifurcated outer shell strut leading edge lug preform portion are arranged to extend with a first gap between each other and a filler material is inserted in the first gap, in the (2) arranging, the first bifurcated inner hub strut leading edge lug preform portion and the second bifurcated inner hub strut leading edge lug preform portion are arranged to extend with a second gap between each other and a filler material is inserted into the second gap, in the (5) arranging, the first bifurcated outer shell strut trailing edge lug preform portion and the second bifurcated outer shell strut trailing edge lug preform portion are arranged to extend with a third gap between each other and a filler material is inserted into the third gap, and, in the (6) arranging, the first bifurcated inner hub strut trailing edge lug preform portion and the second bifurcated inner hub strut trailing edge lug preform portion are arranged to extend with a fourth gap between each other and a filler material is inserted into the fourth gap.

The method according to any preceding clause, wherein (I) the first bifurcated outer shell strut leading edge lug preform portion includes a first connection end, (II) the second bifurcated outer shell strut leading edge lug preform portion includes a second connection end, (III) the first bifurcated outer shell strut trailing edge lug preform portion includes a third connection end, (IV) the second bifurcated outer shell strut trailing edge lug preform portion includes a fourth connection end, (V) the first bifurcated inner hub strut leading edge lug preform portion includes a fifth connection end, (VI) the second bifurcated inner hub strut leading edge lug preform portion includes a sixth connection end, (VII) the first bifurcated inner hub strut trailing edge lug preform portion includes a seventh connection end, (VIII) the second bifurcated inner hub strut trailing edge lug preform portion includes an eighth connection end, and (IX) the first connection end is connected with the fifth connection end, the second connection end is connected with the sixth connection end, the third connection end is connected with the seventh connection end, and the fourth connection end is connected with the eighth connection end.

The method according to any preceding clause, wherein each of the first connection end, the second connection end, the third connection end, and the fourth connection end include a first connection end configuration, and each of the fifth connection end, the sixth connection end, the seventh connection end, and the eighth connection end include a second connection end configuration arranged to connect with the first connection end configuration.

The method according to any preceding clause, wherein each strut preform of the plurality of strut preforms is further formed by (9) arranging (I) the first bifurcated outer shell strut pi-leg preform portion, and (J) the second bifurcated outer shell strut pi-leg preform portion, to extend inward from the inner side of the outer shell frame preform, and (10) arranging (K) the first bifurcated inner hub strut pi-leg preform portion, and (L) the second bifurcated inner hub strut pi-leg preform portion, to extend outward from the outer side of the inner hub frame preform.

The method according to any preceding clause, wherein each strut preform of the plurality of strut preforms is further formed by inserting a filler material between the first bifurcated outer shell strut pi-leg preform portion and the second bifurcated outer shell strut pi-leg preform portion, and inserting a filler material between the first bifurcated inner hub strut pi-leg preform portion and the second bifurcated inner hub strut pi-leg preform portion.

The method according to any preceding clause, wherein each strut preform of the plurality of strut preforms is further formed by adding additional preform layers to form an airfoil-shaped strut preform.

Although the foregoing description is directed to the preferred embodiments, other variations and modifications will be apparent to those skilled in the art, and may be made without departing from the present disclosure. Moreover, features described in connection with one embodiment may be used in conjunction with other embodiments, even if not explicitly stated above.

## Claims

1. A method of manufacturing a composite component (161') for a gas turbine engine, the composite component (161') including an outer shell (165), an inner hub (167), and a plurality of struts (158) connecting the outer shell (165) and the inner hub (167), the method comprising:
weaving (S5301) a three-dimensional outer shell frame preform (302, 308) to include:
an outer shell frame portion (316) having an inner side (322) and an outer side (320), and
a plurality of outer shell strut preform portions (318) integrally woven in part connected with the outer shell frame portion (316),
wherein each outer shell strut preform portion (318) includes an outer shell strut leading edge lug preform portion (410) having first (416) and second (418) bifurcated outer shell strut leading edge lug preform portions, an outer shell strut pi-leg preform portion (414) having first (436) and second (438) bifurcated outer shell strut pi-leg preform portions, and an outer shell strut trailing edge lug preform portion (412) having first (422) and second (424) bifurcated outer shell strut trailing edge lug preform portions;
weaving (S5302) a three-dimensional inner hub frame preform (304, 312) to include:
an inner hub frame portion (334) having an inner side (340) and an outer side (338), and
a plurality of inner hub strut preform portions (336) integrally woven in part connected with the inner hub frame portion (334),
wherein each inner hub strut preform portion (336) includes an inner hub strut leading edge lug preform portion (478) having first (484) and second (486) bifurcated inner hub strut leading edge lug preform portions, an inner hub strut pi-leg preform portion (482) having first (504) and second (506) bifurcated inner hub strut pi-leg preform portions, and an inner hub strut trailing edge lug preform portion (480) having first (492) and second (494) bifurcated inner hub strut trailing edge lug preform portions;
forming (S5303) a preform assembly (300) including the outer shell frame preform (302, 308), the inner hub frame preform (304, 312), and a plurality of strut preforms (306) connecting the outer shell frame preform (302, 308) and the inner hub frame preform (304, 312), the plurality of strut preforms (306) being formed from the plurality of outer shell strut preform portions (318) and the plurality of inner hub strut preform portions (336) by connecting (S5303-5) each of the outer shell strut leading edge lug preform portions (410) with a respective one of the inner hub strut leading edge lug preform portions (478), and by connecting (S5303-6) each of the outer shell strut trailing edge lug preform portion (412) with a respective one of the inner hub strut trailing edge lug preform portion (480);
injecting a matrix material into a mold tooling structure (588) upon which the preform assembly (300) is formed; and
applying a curing process to the mold tooling structure (588) to obtain a cured molded composite structure (161').

2. The method according to claim 1, wherein each strut preform (306) of the plurality of strut preforms (306) further includes at least one additional layer (568) extending to wrap around a periphery of the strut preform (306).

3. The method according to any preceding claim, wherein the composite component (161') is one of an outlet guide vane structure (161), an inlet guide vane structure, or a stator vane structure.

4. The method according to any preceding claim, further comprising, in the forming (S5303) of the preform assembly (300), connecting together a first outer shell frame preform connecting end (326) and a second outer shell frame preform connecting end (328) to form an outer shell hoop frame preform (310), and connecting together a first inner hub frame preform connecting end (344) and a second inner hub frame preform connecting end (346) to form an inner hub hoop frame preform (314).

5. The method according to any one of claims 1 to 4, wherein:
the outer shell strut leading edge lug preform portion (410) further includes an outer shell strut leading edge connection portion (420) arranged between the first (416) and the second (418) bifurcated outer shell strut leading edge lug preform portions and integrally woven with the outer shell frame preform (302, 308),
the outer shell strut pi-leg preform portion (414) further includes an outer shell strut pi-leg connection portion (440) arranged between the first (436) and the second (438) bifurcated outer shell strut pi-leg preform portions and integrally woven with the outer shell frame preform (302, 308), and
the outer shell strut trailing edge lug preform portion (412) further includes an outer shell strut trailing edge connection portion (426) arranged between the first (422) and the second (424) bifurcated outer shell strut trailing edge lug preform portion and integrally woven with the outer shell frame preform (302, 312), and alternatively, wherein:
the outer shell frame preform (302, 308) includes a plurality of outer shell frame warp fiber layers (395, 397, 399) each having a plurality of outer shell frame warp fiber tows (394) extending in a first direction (324),
the outer shell strut preform portion (318) includes a plurality of outer shell strut fiber layers (405, 407, 409, 430, 432, 434, 444, 446) each having a plurality of outer shell strut warp fiber tows (404, 428, 442) extending in the first direction (324),
the outer shell strut warp fiber tows (404) in respective layers (405, 407, 409) of the outer shell strut leading edge connection portion (420) are interwoven with the outer shell frame warp fiber tows (394) in respective layers (395, 397, 399) of the outer shell frame preform (302, 308),
the outer shell strut warp fiber tows (428) in respective layers (430, 432, 434) of the outer shell strut trailing edge connection portion (426) are interwoven with the outer shell frame warp fiber tows (394) in respective layers (395, 397, 399) of the outer shell frame preform (302, 308), and
the outer shell strut warp fiber tows (442) in respective layers (444, 446) of the outer shell strut pi-leg connection portion (440) are interwoven with the outer shell frame warp fiber tows (394) in respective layers (395, 397, 399) of the outer shell frame preform (302, 308).

6. The method according to any one of claims 1 to 4, wherein:
the inner hub strut leading edge lug preform portion (478) further includes an inner hub strut leading edge connection portion (488) arranged between the first (484) and the second (486) bifurcated inner hub strut leading edge lug preform portions and integrally woven with the inner hub frame preform (304, 312),
the inner hub strut pi-leg preform portion (482) further includes an inner hub strut pi-leg connection portion (508) arranged between the first (504) and the second (506) bifurcated inner hub strut pi-leg preform portions and integrally woven with the inner hub frame preform (304, 312), and
the inner hub strut trailing edge lug preform portion (480) further includes an inner hub strut trailing edge connection portion (496) arranged between the first (492) and the second (494) bifurcated inner hub strut trailing edge lug preform portions and integrally woven with the inner hub frame preform (304), and alternatively, wherein:
the inner hub frame preform (304, 312) includes a plurality of inner hub frame warp fiber layers (452, 454, 456) each having a plurality of inner hub frame warp fiber tows (450) extending in a first direction (342),
the inner hub strut preform portion (336) includes a plurality of inner hub strut fiber layers (468, 470, 472, 498, 500, 502, 510, 512) each having a plurality of inner hub strut warp fiber tows (466) extending in the first direction (342),
the inner hub strut warp fiber tows (466) in respective layers (468, 470, 472) of the inner hub strut leading edge connection portion (488) are interwoven with the inner hub frame warp fiber tows (450) in respective layers (452, 454, 456) of the inner hub frame preform (304, 312),
the inner hub strut warp fiber tows (466) in respective layers (498, 500, 502) of the inner hub strut trailing edge connection portion (496) are interwoven with the inner hub frame warp fiber tows(450) in respective layers (452, 454, 456) of the inner hub frame preform (304, 312), and
the inner hub strut warp fiber tows (466) in respective layers (510, 512) of the inner hub strut pi-leg connection portion (508) are interwoven with the inner hub frame warp fiber tows (450) in respective layers (454, 456) of the inner hub frame preform (304, 312).

7. The method according to any one of claims 1 to 4, wherein the outer shell strut leading edge lug preform portion (606) further includes a first outer shell strut leading edge preform portion connection portion (612) woven integrally with the first bifurcated outer shell strut leading edge lug preform portion (614), and a second outer shell leading edge preform portion connection portion (616) woven integrally with the second bifurcated outer shell strut leading edge lug preform portion (618), and the outer shell strut trailing edge lug preform portion (631) includes a first outer shell strut trailing edge preform portion connection portion (636) woven integrally with the first bifurcated outer shell strut trailing edge lug preform portion (638), and a second outer shell trailing edge preform portion connection portion (640) woven integrally with the second bifurcated outer shell strut trailing edge lug preform portion (642), and alternatively,
wherein the inner hub strut leading edge lug preform portion (656) further includes a first inner hub strut leading edge preform portion connection portion (662) woven integrally with the first bifurcated inner hub strut leading edge lug preform portion (664), and a second inner hub leading edge preform portion connection portion (666) woven integrally with the second bifurcated inner hub strut leading edge lug preform portion (668), and the inner hub strut trailing edge lug preform portion (682) includes a first inner hub strut trailing edge preform portion connection portion (688) woven integrally with the first bifurcated inner hub strut trailing edge lug preform portion (690), and a second inner hub trailing edge preform portion connection portion (692) woven integrally with the second bifurcated inner hub strut trailing edge lug preform portion (694), and alternatively,
wherein, in the forming of the strut preform (306), a leading edge fiber insert (712) is inserted to extend between the first bifurcated outer shell strut leading edge lug preform portion (614) and the second bifurcated outer shell strut leading edge lug preform portion (618), to extend between the first bifurcated inner hub strut leading edge lug preform portion (664) and the second bifurcated inner hub strut leading edge lug preform portion (668), and to extend between the outer shell frame portion (316) and the inner hub frame portion (334), and a trailing edge fiber insert (730) is inserted to extend between the first bifurcated outer shell strut trailing edge lug preform portion (638) and the second bifurcated outer shell strut trailing edge lug preform portion (642), to extend between the first bifurcated inner hub strut trailing edge lug preform portion (690) and the second bifurcated inner hub strut trailing edge lug preform portion (694), and to extend between the outer shell frame portion (316) and the inner hub frame portion (334).

8. The method according to any preceding claim, wherein the connecting the outer shell strut leading edge lug preform portion (410) and the inner hub strut leading edge lug preform portion (478) together with each other includes:
arranging the first (416) and the second (418) bifurcated outer shell strut leading edge lug preform portions to extend inward from the inner side (322) of the outer shell frame preform (302, 308),
arranging the first (484) and the second (486) bifurcated inner hub strut leading edge lug preform portions to extend outward from the outer side (338) of the inner hub frame preform (304, 312),
connecting the first bifurcated outer shell strut leading edge lug preform portion (416) and the first bifurcated inner hub strut leading edge lug preform portion (484) together, and
connecting the second bifurcated outer shell strut leading edge lug preform portion (418) and the second bifurcated inner hub strut leading edge lug preform portion (486) together, and
the connecting the outer shell strut trailing edge lug preform portion (412) and the inner hub strut trailing edge lug preform portion (480) together with each other includes:
arranging the first (422) and the second (424) bifurcated outer shell strut trailing edge lug preform portions to extend inward from the inner side (322) of the outer shell frame preform (302, 308),
arranging the first (492) and the second (494) bifurcated inner hub strut trailing edge lug preform portions to extend outward from the outer side (338) of the inner hub frame preform (304, 312),
connecting the first bifurcated outer shell strut trailing edge lug preform portion (422) and the first bifurcated inner hub strut trailing edge lug preform portion (492) together, and
connecting the second bifurcated outer shell strut trailing edge lug preform portion (424) and the second bifurcated inner hub strut trailing edge lug preform portion (494) together.

9. The method according to claim 8, wherein, in the arranging,
the first (416) and the second (418) bifurcated outer shell strut leading edge lug preform portions are arranged to extend abutting against one another,
the first (484) and the second (486) bifurcated inner hub strut leading edge lug preform portions are arranged to extend abutting against one another,
the first (422) and the second (424) bifurcated outer shell strut trailing edge lug preform portions are arranged to extend abutting against one another, and,
the first (492) and the second (494) bifurcated inner hub strut trailing edge lug preform portions are arranged to extend abutting against one another.

10. The method according to claim 8, wherein, in the arranging,
the first (416) and the second (418) bifurcated outer shell strut leading edge lug preform portions are arranged to extend with a first gap (597) between each other and a filler material (598) is inserted in the first gap (597),
the first (484) and the second (484) bifurcated inner hub strut leading edge lug preform portions are arranged to extend with a second gap (601) between each other and a filler material (602) is inserted into the second gap (601),
the first (422) and the second (424) bifurcated outer shell strut trailing edge lug preform portions are arranged to extend with a third gap (599) between each other and a filler material (600) is inserted into the third gap (599), and,
the first (492) and the second (494) bifurcated inner hub strut trailing edge lug preform portions are arranged to extend with a fourth gap (603) between each other and a filler material (604) is inserted into the fourth gap (603).

11. The method according to claim 8, wherein:
the first bifurcated outer shell strut leading edge lug preform portion (416) includes a first connecting end (417),
the second bifurcated outer shell strut leading edge lug preform portion (418) includes a second connecting end (419),
the first bifurcated outer shell strut trailing edge lug preform portion (422) includes a third connecting end (421),
the second bifurcated outer shell strut trailing edge lug preform portion (424) includes a fourth connecting end (423),
the first bifurcated inner hub strut leading edge lug preform portion includes a fifth connecting end (483),
the second bifurcated inner hub strut leading edge lug preform portion includes a sixth connecting end (485),
the first bifurcated inner hub strut trailing edge lug preform portion (492) includes a seventh connecting end (487),
the second bifurcated inner hub strut trailing edge lug preform portion (494) includes an eighth connecting end (489), and
the first connecting end (417) is connected with the fifth connecting end (483), the second connecting end (419) is connected with the sixth connecting end (485), the third connecting end (421) is connected with the seventh connecting end (487), and the fourth connecting end (423) is connected with the eighth connecting end (489).

12. The method according to claim 11, wherein each of the first connecting end (417), the second connecting end (419), the third connecting end (421), and the fourth connecting end (423) include a first connection end configuration, and each of the fifth connection end (483), the sixth connection end (485), the seventh connection end (487), and the eighth connection end (489) include a second connection end configuration arranged to connect with the first connection end configuration.

13. The method according to claim 8, wherein each strut preform (306) of the plurality of strut preforms (306) is further formed by:
arranging the first (436) and the second (438) bifurcated outer shell strut pi-leg preform portions to extend inward from the inner side (322) of the outer shell frame preform (308), and
arranging the first (504) and the second (506) bifurcated inner hub strut pi-leg preform portions to extend outward from the outer side (338) of the inner hub frame preform (312).

14. The method according to claim 13, wherein each strut preform (306) of the plurality of strut preforms (306) is further formed by inserting a filler material (558) between the first bifurcated outer shell strut pi-leg preform portion (436) and the second bifurcated outer shell strut pi-leg preform portion (438), and inserting a filler material (558) between the first bifurcated inner hub strut pi-leg preform portion (504) and the second bifurcated inner hub strut pi-leg preform portion (506).

15. The method according to claim 14, wherein each strut preform (306) of the plurality of strut preforms (306) is further formed by adding additional preform layers (752) to form an airfoil-shaped strut preform.
